# EUROPEAN PATENT APPLICATION

(11) **EP 2 610 857 A1**
(43) Date of publication of application: **03.07.2013**
(21) Application number: 12199662.3
(22) Date of filing: 28.12.2012
(51) Int. Cl.: G09G 5/00

(54) **Display apparatus, upgrading apparatus, display system and control method thereof**

(30) Priority: 30.12.2011 KR 20110147203; 30.12.2011 KR 20110147213; 30.12.2011 KR 20110147270; 27.01.2012 KR 20120008276; 31.01.2012 KR 20120009412; 31.01.2012 KR 20120010062; 31.01.2012 KR 20120010066; 31.01.2012 KR 20120010071; 03.08.2012 KR 20120085210
(71) Applicant: Samsung Electronics Co., Ltd., Gyeonggi-do 443-742 (KR)
(72) Inventor: Kim, Dong-chang, Daegu (KR); Choi, Jun-sik, Suwon-si (KR); Ko, Chang-seog, Hwaseong-gun (KR); Kim, Jung-geun, Suwon-si (KR); Kim, Jung-hoon, Hwaseong-si (KR); Park, Il-Woo, Yongin-si (KR); Choi, Ju-hyun, Suwon-si (KR)
(74) Representative: Bray, Richard Anthony

(57) **Abstract**

A display apparatus, an upgrading apparatus, a display system, and a control method thereof. The display apparatus (100) includes: an image processor (120) which processes an image signal; a display (130) which displays an image based on the processed image signal; a connector (140) to which an upgrading apparatus (200) for processing the image signal is connected; a controller (170) which controls the connector to receive upgrade information about a function to be upgraded from the upgrading apparatus if the upgrading apparatus is connected to the display apparatus through the connector, and controls the display to display the received upgrade information..

## Description

### BACKGROUND

### Field

Apparatuses and methods consistent with the exemplary embodiments relate to a display apparatus, an upgrading apparatus, a display system and a control method thereof, and more particularly, to a display apparatus, an upgrading apparatus, a display system, and a control method thereof, in which the upgrading apparatus is connected to the display apparatus.

### Description of the Related Art

A display apparatus such as a television (TV) processes an image signal/image data received from external various image sources or stored in the display apparatus, and displays it as an image on a display panel. As an example of the display apparatus, there are a TV, a monitor or the like. For instance, a TV provided as the display apparatus processes a broadcasting signal received from the exterior to experience various imaging processes such as decoding, scaling, etc. and gives an image of a desired broadcasting channel to a user.

The display apparatus internally includes an image processing board configured with a circuit having various chipsets, a memory, etc. to perform such an imaging process.

With recent technological developments, capabilities required for the display apparatus have become more sophisticated and extended due to various factors such as a user's demand, improvement in convenience, etc. To improve, i.e., upgrade a function of the display apparatus, hardware and software aspects of the display apparatus may be taken into account.

Upgrading the display apparatus from the hardware aspect is achieved by physically replacing the whole or at least a part of the image processing board internally provided in the display apparatus, which is not easy from both aspects: a manufacturing aspect and a use aspect. Even upgrading the display apparatus from the software aspect, may also require new hardware designed to drive the more developed software, and thus general users are burdened with making a new purchase of an upgraded display apparatus.

An upgrading apparatus is provided separately from the display apparatus, and thus there is a need of reducing costs with the minimum configuration of the upgrading apparatus.

Like the display apparatus, the upgrading apparatus operates by executing a software program (hereinafter, referred to as a 'program'), and the program of the upgrading apparatus also has to be updated.

Accordingly, the program of the upgrading apparatus has to be updated without disrupting operations of the upgrading apparatus while minimizing the configuration of the upgrading apparatus.

Also, since the display apparatuses different in specifications have the software dependent on the hardware, it is difficult and inconvenient to update the software for adding new functions to the display apparatuses different in the specifications when the upgrading apparatus updates the software.

Meanwhile, if the upgrading apparatus for upgrading hardware or software is newly mounted to the display apparatus, a user may not know what functions are being added or enhanced by the upgrading apparatus and thus be confused.

### SUMMARY

According to the present invention there is provided an apparatus and method as set forth in the appended claims. Other features of the invention will be apparent from the dependent claims, and the description which follows.

One or more exemplary embodiments may provide a display unit apparatus including: an image processor which processes an image signal; a display unit which display units an image based on the processed image signal; a connector to which an upgrading apparatus for processing the image signal is connected; a controller which controls the connector to receive upgrade information about a function to be upgraded from the upgrading apparatus if the upgrading apparatus is connected through the connector, and controls the display unit to display unit the received upgrade information.

Thus, a user can easily recognize the functions improved or added by the upgrade as compared with that before the upgrade, and a user may become more comfortable and confident about the upgrade

The controller may control the display unit to display unit results of a comparison of a function before and after the upgrade.

The upgrade information may include an advancement in the function from before the upgrade

The display unit may display unit comparison of the upgrade information before and after upgrade as at least one among a table, an icon, a picture and a moving picture.

The display unit apparatus may further include a storage unit which stores function information of the display unit apparatus, and the controller may compare the received upgrade information with the stored function information of the display unit apparatus, and may control the display unit to display unit results of the comparison.

The upgrade information may include at least one of the function information improved by the upgrading apparatus and added function information.

The display unit apparatus may further include a user input unit which receives input of a user, and the controller may control the display unit to display unit detailed information about selected function if receiving the user input for selecting at least one function in the display united upgrade information

The display unit apparatus may further include a sound output unit unit, and the controller may control the sound output unit to output the upgrade information as sound.

The controller may control the display unit to display unit the upgrade information if the upgrade is completed by connection of the upgrading apparatus.

The display unit apparatus may further include a user input unit which receives input of a user, and the controller may add an item corresponding to the upgrade information to a setting menu of the display unit apparatus if the upgrade is completed, and may control the display unit to display unit the upgrade information if receiving a user input for selecting the added item.

The display unit apparatus may further include a communication unit which communicates with an exterior, and the controller may control the communication unit to receive the upgrade information from an exterior if the upgrading apparatus is connected through the connector.

The controller may transmit the upgrade information to an exterior apparatus through the communication unit.

The functions to be upgraded in the upgrading apparatus may include at least one of a hardware function and a software function.

The controller may determine programs enabled by upgrade of a function using the upgrading apparatus, and may control the display unit to display unit program information about the enabled program.

The controller may control the program information to be display united by categorizing the enabled programs.

The controller may control the program information to distinguishably show the enabled programs among the plurality of programs that belong to the category.

The display unit apparatus may further include a communication unit which communicates with an information providing apparatus, and the controller may receive the program information from the information providing apparatus.

The controller may inform that the enabled program is not usable any more if the upgrading apparatus is disconnected.

The display unit may further display unit a user interface unit including a plurality of menu items for selecting a functions of the display unit apparatus, and the controller may control the display unit to distinguishably display unit a menu item corresponding to an upgraded function among the plurality of menu items.

The controller may control the display unit to distinguishably display unit a menu item corresponding to a deleted function among the plurality of menu items as the upgrading apparatus is connected.

The controller may control the display unit to distinguishably display unit a menu item corresponding to a changed function among the plurality of menu items as the upgrading apparatus is connected.

The controller may control the display unit to display unit distinguishably from each other a menu item corresponding to each of the upgraded function, the deleted function and the changed function.

The controller may determine a type of distinguishable display unit for the menu item in accordance with input of a user.

The controller may control the display unit to display unit the menu item together with detailed information for explaining the upgraded function.

The controller may control the display unit to release the distinguishable display unit of the menu item after a predetermined time period or after a predetermined display unit time.

The controller may respectively test performance of the display unit apparatus before and after the upgrading apparatus is connected, and may control the display unit to display unit the test result information.

The display unit apparatus may further include a switching unit which selectively activates and deactivates the upgrading apparatus while the upgrading apparatus is being connected, and the controller may control the switching unit to deactivate the upgrading apparatus to test the performance of the display unit apparatus of before the upgrading apparatus is connected.

The switching unit may selectively prevent at least one among a control signal from the controller, an image signal received from an external image source, an image signal processed by the image processor, and driving power for driving the upgrading apparatus from being transmitted to the upgrading apparatus.

The display unit apparatus may further include a first power supply for supplying the driving power to the upgrading apparatus, and the switching unit may include a first switch to selectively cut off the driving power supplied from the first power supply to the upgrading apparatus; and a second switch to selectively transmit an image signal processed by the image processor to the display unit.

The switching unit may include a third switch to selectively prevent at least one between an image signal received from the external image source and an image signal processed by the image processor from being supplied to the upgrading apparatus.

The switching unit may include a fourth switch to prevent electric power from being supplied from a second power supply of the upgrading apparatus to at least one between the controller and the image processor of the upgrading apparatus, and the controller may control the fourth switch.

The switching unit may be provided in the connector.

The test result information may include information about at least one of processing speeds of the image processor of the display unit apparatus and the image processor of the upgrading apparatus, processing speeds of the controller of the display unit apparatus and the controller of the upgrading apparatus, executing speed of an application, an executable application, and a newly added function.

The controller may compare a plurality of functions provided by the display unit apparatus with a plurality of upgraded functions provided by the upgrading apparatus, and may implement one selected between the function of the display unit apparatus and the function of the upgrading apparatus in accordance with the comparison results.

The display unit apparatus may further include a storage unit which stores information about a plurality of functions of the display unit apparatus in the form of a predetermined data structure, and the controller may compare version information about the plurality of functions, stored in the storage unit, with version information about a plurality of functions of at least one upgrading apparatus connected through the connector, and may select and control the function having a higher version to be implemented.

The storage unit may further store a preset rule for selecting some of a plurality of functions provided by the upgrading apparatus, and the controller may select and control some of the plurality of functions provided by the upgrading apparatus to be implemented in accordance with the preset rule.

The controller may combine at least one among a plurality of functions provided by the display unit apparatus and at least one among a plurality of functions provided by the upgrading apparatus, store the combined functions as one function in the storage unit, and control the combined one function to be implemented.

One or more exemplary embodiments may provide a display unit apparatus including: an image processor which processes an image signal; a display unit which display units an image based on the processed image signal; a connector to which the upgrading apparatus processing the image signal is connected; a controller which compares a plurality of functions provided by the display unit apparatus with a plurality of upgraded functions provided by an upgrading apparatus if the upgrading apparatus is connected through the connector, and implements one selected between the function of the display unit apparatus and the function of the upgrading apparatus in accordance with the compared results.

One or more exemplary embodiments may provide a display unit apparatus including: an image processor which processes an image signal; a display unit which display units an image based on the image signal; a connector which connects with an upgrading apparatus for updating at least one function of the display unit apparatus; a storage unit which stores a program for allowing the upgrading apparatus to implement operation corresponding to upgrade of the function; a communication unit which communicates with a program providing apparatus for updating the program; and a controller which updates the program, stored in the storage unit, based on an update file received from the program providing apparatus, and controls the upgrading apparatus to access at least a part of the updated program to execute the program.

The controller may control the upgrading apparatus to recognize data of the program, stored in the storage unit as a file system, and to access at least a part of the updated program.

The controller may control the upgrading apparatus to access at least a part of the updated program when the upgrading apparatus is turned off and restarts.

The storage unit may include a first storage unit area and a second storage unit area, and the controller may store the updated program in the second storage unit area while the upgrading apparatus is accessing at least a part of the program stored in the first storage unit area.

The storage unit may include a plurality of storage unit areas to respectively store data corresponding to a plurality of upgrading apparatuses, and the controller may control the upgrading apparatus connected to the connector among the plurality of upgrading apparatuses to access data stored in a corresponding storage unit area among the plurality of storage unit areas.

The controller may check authority of the upgrading apparatus to access the data in the storage unit area, and control the upgrading apparatus to access the corresponding data.

The controller may control the connector to transmit an update file received from the program providing apparatus to the upgrading apparatus in order to update software of the upgrading apparatus.

The update file received from the program providing apparatus may include a universal software update file for the upgrading apparatus.

The controller may control the connector so that at least a part of the updated program stored in the upgrading apparatus is accessible as the software of the upgrading apparatus is updated.

One or more exemplary embodiments may provide an upgrading apparatus of a display unit apparatus, including: a connector which is connected to the display unit apparatus display uniting an image; an image processor which processes an image signal corresponding to the image display united by the display unit apparatus; a controller which controls the connector to transmit upgrade information about a function to be upgraded by the upgrading apparatus if connecting with the display unit apparatus through the connector.

The upgrade information may include at least one of function information improved by the upgrading apparatus and added function information.

The controller may control the connector to transmit the upgrade information if the upgrade is completed by connection of the upgrading apparatus.

The upgraded function may include at least one of a hardware function and a software function.

The upgrade information may include program information about a program enabled by upgrade of a function using the upgrading apparatus.

The controller may test performance of the display unit apparatus of before and after connecting the upgrading apparatus, and control the image processor to display unit test result information on the display unit of the display unit apparatus.

The upgrading apparatus may further include a switching unit to selectively prevent at least one of an image signal output from the display unit apparatus, a control signal and electric power from being input to the image processor and the controller, and the controller may control the switching unit to deactivate the upgrading apparatus in order to test performance of the display unit apparatus of before the upgrading apparatus is connected.

The upgrading apparatus may further include a second power supply to supply driving power to the controller and the image processor; and a switching unit to selectively cut off the driving power being supplied from the second power supply to at least one of the controller and the image processor.

The controller may control the switching unit to prevent the driving power from being supplied to at least one of the controller and the image processor if requested for deactivation.

The switching unit may supply the driving power to the controller and the image processor in response to an activation command of the controller.

The switching unit may be provided in the connector.

The test result information may include information about at least one of processing speeds of the image processor of the display unit apparatus and the image processor of the upgrading apparatus, processing speeds of the controller of the display unit apparatus and the controller of the upgrading apparatus, executing speed of an application, an executable application, and a newly added function.

The controller may compare a plurality of functions provided by the display unit apparatus with a plurality of upgraded functions provided by the upgrading apparatus, and implement one selected between the function of the display unit apparatus and the function of the upgrading apparatus in accordance with the comparison results.

One or more exemplary embodiments may provide a method of controlling a display unit apparatus, the method including: connecting the display unit apparatus with an upgrading apparatus processing an image signal received from at least one image source; receiving upgrade information about a function to be upgraded by the upgrading apparatus; and display uniting the received upgrade information.

The display uniting the upgrade information may include comparing the upgrade information with the information of before the upgrade.

The upgrade information may include an advancement in the function from before the upgrade.

The display uniting the received upgrade information may include display uniting at least one among a table, an icon, a picture and a moving picture for comparison between the upgrade information and the information of before the upgrade.

The method may further include storing function information of the display unit apparatus, comparing the received upgrade information with the stored function information of the display unit apparatus.

The upgrade information may include at least one of the function information improved by the upgrading apparatus and added function information.

The method may further include receiving input of a user for selecting at least one function in the display united upgrade information; display uniting detailed information about the selected function.

The method may further include outputting the upgrade information as sound.

The method may further include determining whether the upgrade is completed by connection of the upgrading apparatus, and the display uniting the upgrade information may include display unit the upgrade information if the upgrade is completed.

The method may further include adding an item corresponding to the upgrade information to a setting menu of the display unit apparatus if the upgrade is completed; and display uniting the upgrade information if receiving a user input for selecting the added item.

The method may further include receiving the upgrade information through a network if the upgrading apparatus is connected.

The method may further include transmits the upgrade information to an exterior apparatus.

The functions to be upgraded in the upgrading apparatus may include at least one of a hardware function and a software function.

The method may further include determines programs enabled by upgrade of a function using the upgrading apparatus; and display uniting program information about the enabled program.

The display uniting the program information may include categorizing the enabled programs to display unit the program information.

The display uniting the program information may include distinguishably showing the enabled programs among the plurality of programs that belong to the category.

The method may further include receiving the program information from the information providing apparatus.

The method may further include informing that the enabled program is not usable any more if the upgrading apparatus is disconnected.

The method may further include distinguishably display uniting a menu item corresponding to an upgraded function among the plurality of menu items on a user interface unit for selecting a functions of the display unit apparatus

The method may further include distinguishably display uniting a menu item corresponding to a deleted function among the plurality of menu items as the upgrading apparatus is connected.

The method may further include distinguishably display uniting a menu item corresponding to a changed function among the plurality of menu items as the upgrading apparatus is connected.

The method may further include making distinguishable display unit for a menu item corresponding to each of the upgraded function, the deleted function and the changed function to be different from one another.

The distinguishably display uniting the menu item may include determining a type of distinguishable display unit for the menu item in accordance with input of a user.

The method may further include display uniting the menu item together with relevant information for explaining the upgraded function.

The method may further include releasing the distinguishable display unit for the menu item after a predetermined period of time or after a predetermined period of display unit time.

The method may further include respectively testing performance of the display unit apparatus before and after the upgrading apparatus is connected; and display uniting the test result information.

The testing the performance may include deactivating the upgrading apparatus.

The test result information may include information about at least one of processing speeds of the image processor of the display unit apparatus and the image processor of the upgrading apparatus, processing speeds of the controller of the display unit apparatus and the controller of the upgrading apparatus, executing speed of an application, an executable application, and a newly added function.

The method may further include comparing a plurality of functions provided by the display unit apparatus with a plurality of upgraded functions provided by the upgrading apparatus; and implementing one selected between the function of the display unit apparatus and the function of the upgrading apparatus in accordance with the comparison results.

The method may further include storing information about a plurality of functions of the display unit apparatus in the form of a predetermined data structure; comparing version information about the plurality of functions, stored in the storage unit, with version information about a plurality of functions of at least one upgrading apparatus connected through the connector; and implementing the function having a higher version, selected based on the comparison results

The method may further including storing a preset rule for selecting some of a plurality of functions provided by the upgrading apparatus; and implementing some of the plurality of functions provided by the upgrading apparatus, selected in accordance with the preset rule.

The method may further including combining at least one among a plurality of functions provided by the display unit apparatus and at least one among a plurality of functions provided by the upgrading apparatus, and storing the combined functions as one function in the storage unit; and implementing the combined one function.

One or more exemplary embodiments may provide a method of controlling a display unit apparatus display uniting an image based on an image signal, the method including: connecting with an upgrading apparatus for upgrading at least one function of the display unit apparatus; updating a program stored in the storage unit of the display unit apparatus, based on data received from the program providing apparatus, to make the upgrading apparatus perform an operation corresponding to upgrade of the function; and controlling the upgrading apparatus to access at least a part of the updated program to perform the program.

The controlling may include controlling the upgrading apparatus to recognize data of the program, stored in the storage unit as a file system and to access at least a part of the updated program.

The controlling may include controlling the upgrading apparatus to access at least a part of the updated program when the upgrading apparatus is turned off and restarts.

The storage unit may include a first storage unit area and a second storage unit area, and the updating may include storing the updated program in the second storage unit area while the upgrading apparatus is accessing at least a part of the program stored in the first storage unit area.

The storage unit may include a plurality of storage unit areas to respectively store data corresponding to a plurality of upgrading apparatuses, and the controlling may include controlling the upgrading apparatus connected to the connector among the plurality of upgrading apparatuses to access data stored in a corresponding storage unit area among the plurality of storage unit areas.

The controlling may include checking up authority to access the data of the storage unit area, and controlling the upgrading apparatus to access the corresponding data.

The method may further include controlling the connector to transmit an update file received from the program providing apparatus to the upgrading apparatus in order to update software of the upgrading apparatus.

The update file received from the program providing apparatus may include a universal software update file for the upgrading apparatus.

The method may further include controlling at least a part of the updated program stored in the upgrading apparatus to be accessible as the software of the upgrading apparatus is updated.

One or more exemplary embodiments may provide a method of controlling an upgrading apparatus of a display unit apparatus, the method including: connecting the upgrading apparatus to the display unit apparatus display uniting an image; transmitting upgrade information about a function to be upgraded by the upgrading apparatus to the display unit apparatus; and processing an image signal corresponding to the image display united by the display unit apparatus.

The upgrade information may include at least one of function information improved by the upgrading apparatus and added function information.

The method further may include determining whether the upgrade is completed by connection of the upgrading apparatus, and the transmitting the upgrade information includes transmitting the upgrade information if the upgrade is completed.

The upgraded function may include at least one of a hardware function and a software function.

The upgrade information may include program information about a program enabled by upgrade of a function using the upgrading apparatus.

The method may further include testing performance of the display unit apparatus of before and after connecting the upgrading apparatus; and controlling test result information to be display united on the display unit of the display unit apparatus.

The method may further include deactivating the upgrading apparatus in order to test performance of the display unit apparatus of before the upgrading apparatus is connected.

The test result information may include information about at least one of processing speeds of the image processor of the display unit apparatus and the image processor of the upgrading apparatus, processing speeds of the controller of the display unit apparatus and the controller of the upgrading apparatus, executing speed of an application, an executable application, and a newly added function.

The method may further include comparing a plurality of functions provided by the display unit apparatus with a plurality of upgraded functions provided by the upgrading apparatus, and implementing one selected between the function of the display unit apparatus and the function of the upgrading apparatus in accordance with the comparison results.

One or more exemplary embodiments may provide a display unit system including: an display unit apparatus which includes a first image processor to process an image signal, and a display unit to display unit an image based on an image signal; and an upgrading apparatus which is connected to the display unit apparatus and includes a second image processor to process the image signal, and if the upgrading apparatus is connected to the display unit apparatus, the upgrading apparatus may transmit the function information to be upgraded by the upgrading apparatus to the display unit apparatus, the display unit apparatus may receive the function information to be upgraded from the upgrading apparatus, and the received function information may be display united on the display unit.

At least one of the display unit apparatus and the upgrading apparatus may test performance of the display unit apparatus of before and after the upgrading apparatus is connected, and at least one of the first image processor and the second image processor may be controlled to display unit the test result information on the display unit.

At least one of the display unit apparatus and the upgrading apparatus may compare a plurality of functions provided by the display unit apparatus with a plurality of upgraded functions provided by an upgrading apparatus if the upgrading apparatus is connected through the connector, and implement one selected between the function of the display unit apparatus and the function of the upgrading apparatus in accordance with the compared results.

The display unit apparatus may update the program, stored in the storage unit, based on an update file received from an update server, and the upgrading apparatus may access at least a part of the updated program.

The display unit apparatus may transmit an update file received from an update server to the upgrading apparatus, the upgrading apparatus may update the program stored in the upgrading apparatus, based on an update file received from the display unit apparatus, and the update file received from the update server may include a universal software update file of the upgrading.

The update server may include a session manager for performing management of the display unit apparatus and authentication management.

The update server may include an update manager having a transaction management function to handle an exceptional situation while updating software of the upgrading apparatus.

If transmission of the update file to the upgrading apparatus or update of software in the upgrading apparatus is failed, the update manager may record the failure.

If the software of the upgrading apparatus is successfully updated, the update manager may delete the failure of the file transmission or the update failure.

The update manager may generate a message for checking up the connection between the display unit apparatus and the upgrading apparatus if the transmission of the update file is failed.

The update server may check a version of software of the upgrading apparatus before transmitting the update file software.

One or more exemplary embodiments may provide a method of controlling a display unit system including a display unit apparatus provided with a first image processor, and an upgrading apparatus connectable to the display unit apparatus, the method including deactivating the upgrading apparatus if a test of performance compared to performance before and after the upgrading apparatus is connected to the display unit apparatus is requested; testing the performance of the display unit apparatus in a state that the upgrading apparatus is being deactivated; activating the upgrading apparatus; testing the performance of the display unit apparatus in the state that the upgrading apparatus is being activated; and display uniting results of testing the performance.

The display uniting the results of testing the performance may include display uniting on one screen a first image corresponding to a first output signal processed by the first image processor and a second image corresponding to a second output signal processed by the second image processor.

One or more exemplary embodiments may provide a method of controlling a display unit system including a display unit apparatus, and an upgrading apparatus including software for upgrading the display unit apparatus, the method including: determining whether the upgrading apparatus connected to the display unit apparatus is authenticated; by an update server, transmitting an update file for software to the display unit apparatus if the upgrading apparatus is authenticated; by the display unit apparatus, transmitting the update file for the software to the upgrading apparatus; and updating the software of the upgrading apparatus based on the received update file for the software, and the update file for the software may include a universal software update file of the upgrading apparatus.

The method may further include, by the update server, checking up whether update is needed for the software of the upgrading apparatus.

The checking whether the update is needed may include checking a version of the software of the upgrading apparatus before transmitting the update file.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram showing a configuration of a display system according to an exemplary embodiment;
FIG. 2 is a block diagram showing a configuration of a display apparatus and an upgrading apparatus according to a first exemplary embodiment;
FIGs. 3 and 4 are views illustrating methods of upgrading an imaging processing of the display apparatus using the upgrading apparatus according to the first exemplary embodiment;
FIGs. 5 and 6 are views illustrating screens displayed on a display according to the first exemplary embodiment;
FIG. 7 is a flowchart showing a control method of the display system according to the first exemplary embodiment;
FIG. 8 is a block diagram showing a configuration of a display system according to a second exemplary embodiment;
FIG. 9 is a block diagram showing a configuration of a display apparatus according to a second exemplary embodiment;
FIG. 10 is a flowchart showing a control method of the display apparatus according to the second exemplary embodiment;
FIG. 11 is a view illustrating an example of a user interface (UI) showing upgrade information according to the second exemplary embodiment;
FIG. 12 is a view illustrating an example of a user interface (UI) showing the upgrade information in more detailed according to the second exemplary embodiment;
FIG. 13 is a flowchart showing another example of a control method of the display apparatus according to the second exemplary embodiment;
FIG. 14 is a view showing an example of a UI for transmitting the upgrade information according to the second exemplary embodiment;
FIG. 15 is a block diagram showing a display system according to a third exemplary embodiment;
FIG. 16 is a block diagram showing a configuration of the display apparatus according to the third exemplary embodiment;
FIG. 17 is a flowchart showing a control method of the display apparatus according to the third exemplary embodiment;
FIG. 18 is a view showing an example of a UI for displaying the program information according to the third exemplary embodiment;
FIG. 19 is a view showing an example of a UI for displaying the program information in more detail according to the third exemplary embodiment;
FIG. 20 is a flowchart showing another example of a control method of the display apparatus according to the third exemplary embodiment;
FIG. 21 is a flowchart showing another example of the control method of the display apparatus according to the third exemplary embodiment;
FIG. 22 is a view showing an example of a UI for displaying unusable program information according to the third exemplary embodiment;
FIG. 23 is a block diagram showing a display system according to a fourth exemplary embodiment;
FIG. 24 is a flowchart showing a control method of the display apparatus according to the fourth exemplary embodiment;
FIG. 25 is a view illustrating an example of a UI showing menu items corresponding functions to be upgraded according to the fourth exemplary embodiment;
FIG. 26 is a flowchart showing another example of a control method of the display apparatus according to the fourth exemplary embodiment;
FIG. 27 is a view illustrating an example of a UI showing menu items corresponding functions to be deleted according to the fourth exemplary embodiment;
FIG. 28 is a view illustrating an example of a UI showing information explaining functions to be upgraded according to the fourth exemplary embodiment;
FIG. 29 is a flowchart showing another example of a control method of the display apparatus according to the fourth exemplary embodiment;
FIG. 30 is a block diagram showing a display system according to a fifth exemplary embodiment;
FIGs. 31 and 32 are views illustrating performance test results displayed on a display according to the fifth exemplary embodiment;
FIG. 33 is a flowchart showing a method of providing performance evaluation in the display system according to the fifth exemplary embodiment;
FIG. 34 is a view illustrating a display system including a display apparatus and a plurality of upgrading apparatuses according to a sixth exemplary embodiment;
FIG. 35 is a view illustrating list information of functions stored in the display apparatus according to the sixth exemplary embodiment;
FIG. 36 is a flowchart showing a control method of the display apparatus according to the sixth exemplary embodiment;
FIG. 37 is a block diagram showing a display system according to a seventh exemplary embodiment;
FIG. 38 is a block diagram showing a configuration of a display apparatus according to the seventh exemplary embodiment;
FIG. 39 is a flowchart showing a control method of the display apparatus according to the seventh exemplary embodiment;
FIG. 40 is a block diagram showing a configuration of a first storage of the display apparatus according to the seventh exemplary embodiment;
FIG. 41 is a flowchart showing another example of the control method of the display apparatus according to the seventh exemplary embodiment;
FIG. 42 is a flowchart showing another example of the control method of the display apparatus according to the seventh exemplary embodiment;
FIG. 43 illustrates a display system including a display apparatus and a plurality of upgrading apparatuses according to an eighth exemplary embodiment;
FIG. 44 is a schematic view of a display system according to an exemplary embodiment;
FIG. 45 is a block diagram of a configuration of the display apparatus and the upgrading apparatus, which constitute the display system according to an exemplary embodiment;
FIG. 46 is a block diagram schematically showing a configuration of the display system according to yet another exemplary embodiment;
FIG. 47 is a block diagram showing a configuration of an update server according to the eighth exemplary embodiment; and
FIG. 48 is a flowchart showing a procedure of processing an exceptional situation when the update is made according to the eighth exemplary embodiment.

### DETAILED DESCRIPTION OF EXEMPLARY EMBODIMENTS

Below, exemplary embodiments will be described in detail with reference to accompanying drawings.

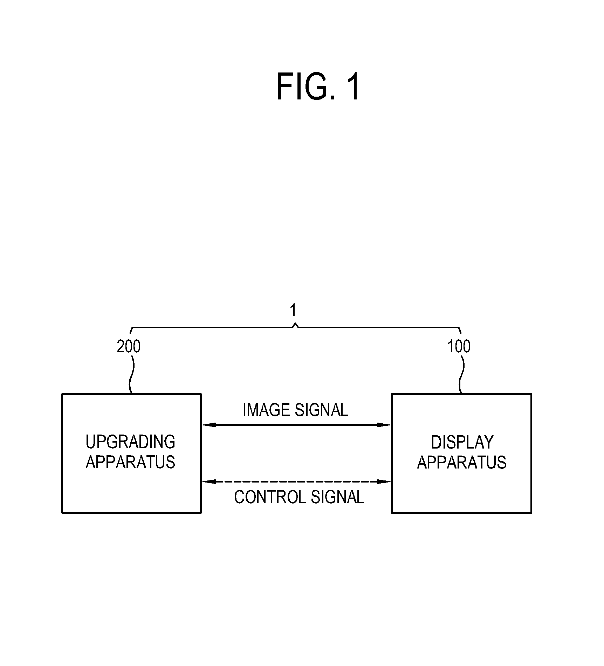

FIG. 1 is a block diagram showing a configuration of a display system 1 according to an exemplary embodiment.

As shown in FIG. 1, the display system 1 according to an exemplary embodiment includes a display apparatus 100 and an upgrading apparatus 200. The display apparatus 100 and the upgrading apparatus 200 are connected to communicate with each other.

Here, the upgrading apparatus 200 is connected to the display apparatus 100, i.e., the existing device and serves as an extended device.

The display apparatus 100 and the upgrading apparatus 200 are connected with each other to receive an image signal such as a broadcasting signal, and a control signal including various data, electric power, etc.

The display apparatus 100 processes a video signal provided from an external image source (not shown) through a preset imaging process, and displays it as an image.

In the system according to an exemplary embodiment, a TV, which displays a broadcasting image based on a broadcasting signal/broadcasting information/ broadcasting data received from a transmitter of a broadcasting station, will be described as the display apparatus 100. However, the present disclosure is not limited to the above example of the display apparatus 100, and thus the display apparatus 100 may be achieved in a variety of other ways as long as it can display an image.

Also, the type of images displayable by the display apparatus 100 is not limited to the broadcasting image. For example, the display apparatus 100 may display an image such as a moving image, a still image, an application, on-screen display (OSD), and a graphic user interface (GUI) for various operation control, etc. based on a signal/data received from various image sources (not shown).

The upgrading apparatus 200 is connected to and thus communicates with the display apparatus 100. The upgrading apparatus 200 upgrades the existing hardware/software configurations of the connected display apparatus 100 so that the display apparatus 100 can process an image signal with the upgraded hardware/software configurations, thereby displaying an image with more enhanced quality.

For example, the upgrading apparatus 200 may be an apparatus for upgrading the hardware of the TV such as an image processing circuit or the like, which can be attached to and detached from the display apparatus 100.

Meanwhile, alternative to the foregoing exemplary embodiment, the upgrading apparatus 200 may be wirelessly connected to the display apparatus 100. In this case, the upgrading apparatus 200 may receive its operation power from a separate external power source or a battery. However, in this exemplary embodiment, it will be descried that the upgrading apparatus 200 is connected to the display apparatus 100 through a wire.

The display apparatus 100 may independently process an image signal received from the exterior through the preset imaging process, and display it as an image.

According to an exemplary embodiment, the upgrading apparatus 200 is connected to the display apparatus 100 and upgrades the hardware/software configurations, which perform the imaging process, of the display system 1. The upgrading apparatus 200 receives and processes an image signal from the display apparatus 100, and transmits the processed image signal to the display apparatus 100. The display apparatus 100 displays an image corresponding to an image signal received from the upgrading apparatus 200. Thus, it is possible to provide a user with an image having relatively enhanced quality.

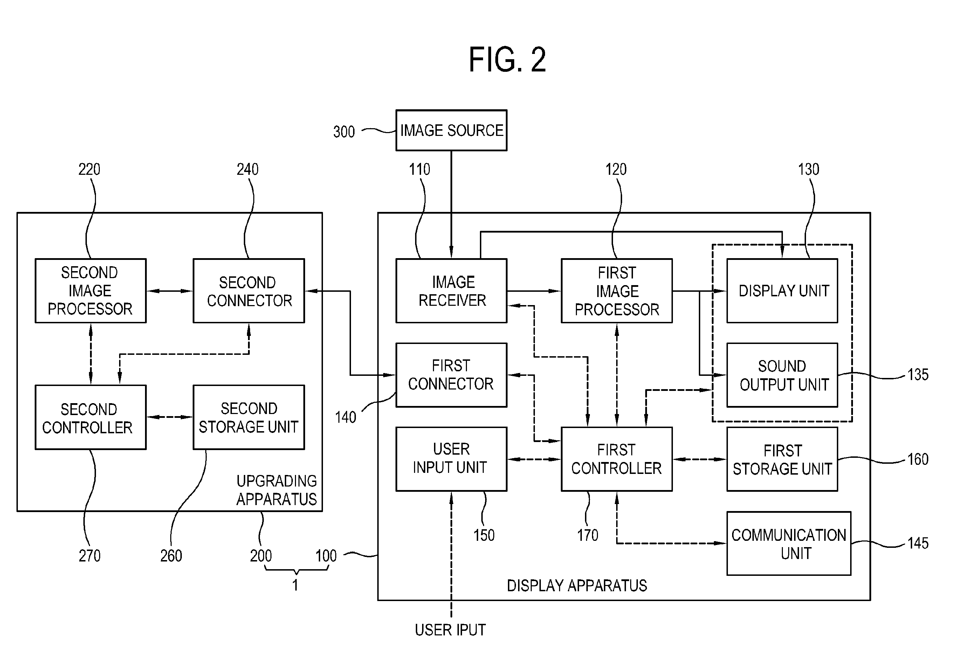

FIG. 2 is a block diagram showing a configuration of a display apparatus 100 and an upgrading apparatus 200 which constitute the display system 1 according to a first exemplary embodiment.

As shown in FIG. 2, the display apparatus 100 includes an image receiver 110 to which at least one image source 300 is connected; a first image processor 120 which processes an image signal received from the image source 300; a display unit 130 which displays an image based on the image signal processed by the first image processor 120; a sound output unit 135 which outputs sound including voice; a first connector 140 which connects with a peripheral apparatus including the upgrading apparatus 200, a user input unit 150 which outputs a preset command in accordance with a user's input; a first storage unit 160 which stores unrestricted data/information; a communication unit 145 which perform wire/wireless communication with the exterior; and a first controller 170 which controls general operations of the configurations of the display apparatus 100.

The image receiver 110 transmits an image signal from at least one image source 300 to the first image processor 120.

The image receiver 110 may receive a broadcasting signal transmitted from a transmitter (not shown) of a broadcasting station. For example, the image receiver 110 may include an antenna (not shown) and/or a tuner (not shown) for receiving the broadcasting signal. Also, the image receiver 110 is an input/output (I/O) device to receive an image signal from the external image source 300, which can be of different types corresponding to the formats of the image signal or the standards of the image source 300 and the display apparatus 100. For instance, the image receiver 110 may receive a signal/data according to the standards of high definition multimedia interface (HDMI), Universal Serial Bus (USB), component, etc., and includes a plurality of connection terminals (not shown) corresponding to these standards.

The first image processor 120 performs various preset imaging processes with regard to an image signal received from the image receiver 110. The first image processor 120 outputs the image signal processed by this process to the display unit 130, thereby displaying an image corresponding to the image signal on the display unit 130.

There is no limit to the kind of imaging processes performed by the first image processor 120. For example, the imaging processes may include de-multiplexing where a predetermined signal is divided into signals according to characteristics, decoding corresponding to a format of an image signal, de-interlacing where an image signal of an interlace type is converted into a progressive type, scaling where an image signal is adjusted for a preset resolution, noise reduction for improving image quality, detail enhancement, frame refresh rate conversion, etc.

The first image processor 120 is achieved by an image processing board where various chipsets, (not shown), a memory (not shown), electronic parts (not shown), wiring (not shown), or the like circuit elements for performing such a process are mounted on a printed circuit board (not shown).

The display unit 130 displays an image based on an image signal output from the first image processor 120. The display unit 130 may be achieved by various display types such as liquid crystal, plasma, a light-emitting diode, an organic light-emitting diode, a surface-conduction electron-emitter, a carbon nano-tube, nano-crystal, etc., but is not limited thereto.

The display unit 130 may further include an additional configuration in accordance with its types. For instance, if the display unit 130 is a liquid crystal type, the display unit 130 may include a liquid crystal display panel (not shown), a backlight unit (not shown) for illuminating the liquid crystal display panel, and a panel driving substrate (not shown) for driving the panel.

The sound output unit 135 outputs various sound including voice. The sound output unit 135 may be achieved by a speaker which outputs an audio signal separated and decoded by the image processor 120 as a sound.

The first connector 140 may be achieved by an interface to which the upgrading apparatus 200 can be connected. The first connector 140 may include the interface through which various data signals, an image signal, a control signal, electric power, etc. can be transmitted and received between the display apparatus 100 and the upgrading apparatus 200. For example, the first connector 140 may include connection terminals corresponding to the high definition multimedia interface (HDMI) or component standards in order to transmit and receive an image signal, and a USB terminal to transmit and receive a data signal/control signal/electric power, etc.

According to another exemplary embodiment, all signals transmitted from the display apparatus 100 to the upgrading apparatus 200 may be encoded for contents security. Of course, the encoded signal will be decoded and then processed in the upgrading apparatus 200.

The external device connected to the first connector 140 is not limited to the upgrading apparatus 200, and any device capable of transmitting and receiving a signal/data to and from the display apparatus 100 through the first connector 140 can be connected to the first connector 140.

The user input unit 150 sends the first controller 170 various preset control commands or unrestricted information in accordance with a user's operation and input. The user input unit 150 may be achieved by a menu-key and an input panel provided outside the display apparatus 100 or a remote controller separated and distant from the display apparatus 100.

Meanwhile, the user input unit 150 may be integrated into the display unit 130. That is, if the display unit 130 is a touch-screen, a user may give a preset command to the first controller 170 through an input menu (not shown) provided in the display unit 130.

The first storage unit 160 stores unrestricted data under control of the first controller 170. The first storage unit 160 may be achieved by a nonvolatile storage medium such as a flash-memory, a hard-disc drive, etc. The first storage unit 160 is accessed by the first controller 170, and the first controller 170 can do reading/recording/modifying/deleting/updating, etc. with regard to data of the first storage unit 160.

The data stored in the first storage unit 160 may for example include an operating system for driving the display apparatus 100, various applications executable on the operating system, image data, appendix data, etc.

According to this exemplary embodiment, the first storage unit 160 further stores function information of the display apparatus 100. Here, the function information includes version information, a model name, etc. of the hardware and/or software, and thus the first storage unit 160 may store a file containing such function information.

Also, the first storage unit 160 according to this exemplary embodiment stores at least one program for performing a predetermined function. For example, the first storage unit 160 stores a first OS, a first web browser, a first open-type software platform, a plurality of applications selected and downloaded by a user through the open-type software platform. The first storage unit 160 stores the foregoing programs, version information of each program, etc.

The first storage unit 160 may be achieved by a nonvolatile storage medium such as a flash-memory, a hard-disc drive, etc. The first storage unit 160 is accessed by the first controller 170, and the first controller 170 can do reading/recording/modifying/deleting/updating, etc. with regard to data of the first storage unit 160. The first storage unit 160 may store data processed by the first controller 170.

According to another exemplary embodiment, if the upgrading apparatus 200 is connected through the first connector 140, the first storage unit 160 may be accessed by the upgrading apparatus 200, and the second controller 270 can do reading/recording/modifying/deleting/updating, etc. with regard to data of the first storage unit 160.

The communication unit 145 communicates with the exterior i.e., devices external to the display apparatus. The communication unit 145 includes a wire/wireless communication module capable of communicating with the exterior through a network.

The first controller 170 controls various configurations of the display apparatus 100. For instance, the first controller 170 controls general operations of the display apparatus 100 by performing the imaging process of the first image processor 120, transmitting/receiving a signal/information/data through the image receiver 110 or the first connector 140, and operating in response to a command from the user input unit 150.

The display apparatus 100 with this configuration needs an upgrade because of various factors including development of new technology as the time progresses. For example, the upgrade is needed when receiving an image signal of a new format not present in a stage of manufacturing the display apparatus 100, when receiving an image signal having a resolution higher than a level supported by the display apparatus 100 itself with a trend of high quality image, when decreasing a system load of the display apparatus 100, and so on.

Such upgrade of the display apparatus 100 may be achieved with respect to hardware and software, respectively. According to an exemplary embodiment, the upgrading apparatus 200 provided for upgrading the display apparatus 100 is connected to the first connector 140, thereby upgrading at least one of the existing hardware and software configurations of the display apparatus 100.

The upgrading apparatus 200 includes hardware/software configurations corresponding to at least some resources among the hardware/software resources that are included in the display apparatus 100. These configurations that are present in the upgrading apparatus 200 are provided to perform more improved functions than at least some resources of the display apparatus 100. When the upgrading apparatus 200 is connected to the display apparatus 100, it replaces at least some of the existing resources of the display apparatus 100, thereby improving the quality of an image displayed on the display apparatus 100.

Below, a configurations of the upgrading apparatus 200 is described according to an exemplary embodiment.

The upgrading apparatus 200 includes a second connector 240 connected to the first connector 140 of the display apparatus 100; a second image processor 220 capable of performing processes corresponding to at least some among the imaging processes of the first image processor 120, a second storage unit 260 storing unrestricted data/information, and a second controller 270 controlling general operations of the upgrading apparatus 200.

The second connector 240 is connected to the first connector 140 and enables communication between the upgrading apparatus 200 and the display apparatus 100. The second connector 240 may be connected to at least one connection terminal (not shown) among a plurality of connection terminals (not shown) of the first connector 140.

For instance, the second connector 240 may be connected to each of the HDMI terminal (not shown) for transmitting and receiving an image signal between the display apparatus 100 and the upgrading apparatus 200 among the plurality of connection terminals (not shown) of the first connector 140, and to the USB terminal (not shown) for transmitting and receiving data and power. However, this is only an example, and alternatively connection between the first connector 140 and the second connector 240 may be achieved in various forms besides the foregoing exemplary embodiment.

The second image processor 220 can perform the second process corresponding to the first process with regard to at least some first process performed by the first image processor 120 of the display apparatus 100. The first process and the second process are named for convenient distinction, and may be one integral process or a plurality of processes. The second process is improved in function in comparison to the first process, which is realized by improving hardware such as a chipset and/or improving software such as an algorithm/execution code/program.

When the display apparatus 100 and the upgrading apparatus 200 are connected, the second image processor 220 performs the second process instead of the first process under the control of the first controller 170 or the second controller 270. Similarly, the second process is improved in function in comparison to the first process and replaces the first process as the imaging process, and thus improves the whole imaging process, the details of which will be described later.

The second storage unit 260 stores unrestricted data. In this exemplary embodiment, the second storage unit 260 may further store the function information of the upgrading apparatus 200. Here, the function information includes version information, a model name, etc. of the hardware and/or software, and the second storage unit 260 may store a file including the function information.

The second storage unit 260 is achieved by a non-volatile storage medium such as a flash-memory, a hard-disc drive, etc. The second storage unit 260 is accessed by the first controller 170 or the second controller 270, and the data of which is read/recorded/modified/deleted/updated, etc. by them. Meanwhile, the second storage unit 260 may also be accessed by the second controller 270 as well as the first controller 170 in accordance with its achieving methods.

The second controller 270 implements control for various configurations of the upgrading apparatus 200 for performing the imaging process. For instance, the second controller 270 controls the entire operations of the upgrading apparatus 200 by performing the imaging process of the second image processor 220, and by transmitting/receiving a signal/information/data through the second connector 240.

The second controller 270 and the first controller 170 may be achieved by a central processing unit (CPU). If the second controller 270 can perform an improved function in comparison to the first controller 170, the second controller 270 disables the first controller 170 and replaces the first controller 170, thereby controlling the entire operations of the display system 1. Alternatively, the second controller 270 may control the entire operations of the display system 1, together with the first controller 170.

The second controller 270 and the first controller 170 may further include a graphic processing unit (GPU), a digital signal processor (DSP), and a memory such as double data rate (DDR) random access memory (RAM), which assist the CPU.

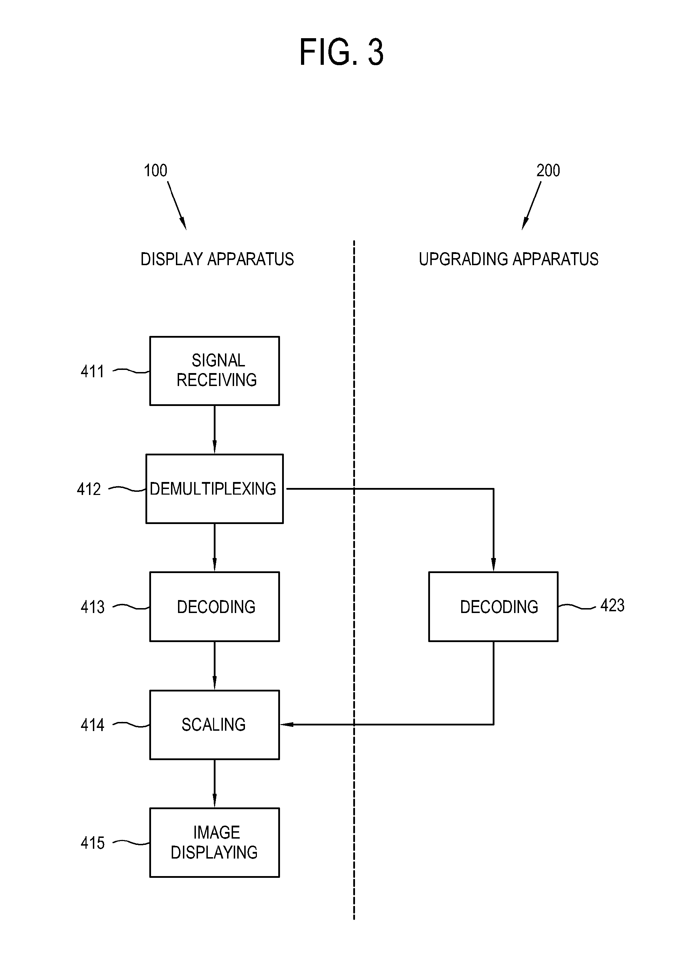

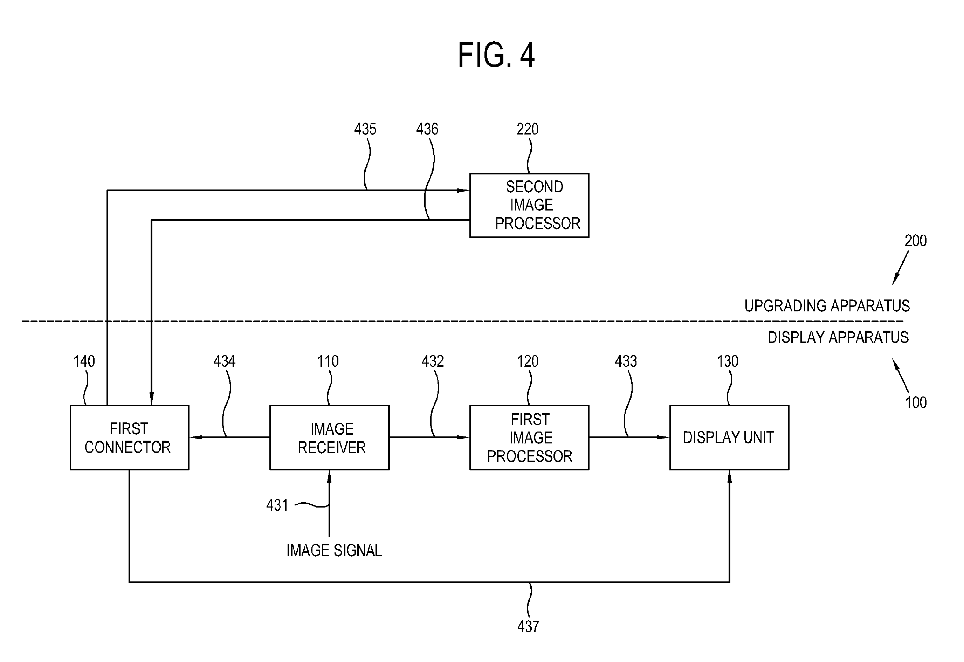

Below, a detailed exemplary embodiment of upgrading the display apparatus 100 through the upgrading apparatus 200 will be described with reference to FIGs. 3 and 4.

FIG. 3 is a flowchart showing a method of upgrading an imaging process of the display apparatus 100 using the upgrading apparatus 200 in the display system 1 according to this exemplary embodiment.

As shown in FIG. 3, the display apparatus 100 performs the imaging processes in a preset sequence (412, 413, 414) if receiving a predetermined signal, e.g., a broadcasting signal from the image source 300 (411). The imaging processes (412, 413, 414) shown in FIG. 3 are just given by way of example for a simple description, and not the image processes to be practically implemented in the display apparatus 100.

The display apparatus 100 performs demultiplexing for dividing the received broadcasting signal into an image signal, a voice signal, and appendix data (412). The display apparatus 100 processes each demultiplexed signal, for example, and for example, decodes the image signal to have a preset image format (413). The display apparatus 100 performs scaling for the decoded image signal to be displayed at a predetermined resolution as an image on the display unit 130 (414), and displays an image based on the image signal that has been scaled (415).

In this serial sequence, the upgrading apparatus 200 may be provided to perform a process 423 corresponding to the decoding process 413. The decoding process 423 to be implemented by the upgrading apparatus 200 has the same operations but is improved in function in comparison to the decoding process 413 to be implemented by the display apparatus 100. Thus, the image process may be improved if the decoding 423 is performed instead of the decoding 413.

For instance, the decoding 423 may process an image signal having a resolution, a format and an appendix effect that cannot be processed by the decoding 413. Thus, under the control of the first controller 170 or the second controller 270, the sequence of the imaging process in this exemplary embodiment is as follows: the decoding operation 423 of the upgrading apparatus 200 is performed instead of the decoding operation 413 of the display apparatus 100 after the demultiplexing operation 412. After the decoding operation 423 of the upgrading apparatus 200, the scaling operation 414 is performed.

According to this exemplary sequence, an image signal and a control signal are transmitted and received between the display apparatus 100 and the upgrading apparatus 200, under the control of the first controller 170 or the second controller 270.

Meanwhile, opposite to the exemplary case of FIG. 3, where some processes among the imaging processes are replaced, the second image processor 220 of the upgrading apparatus 200 may replace the first image processor 120 of the display apparatus 100, which will be described below with reference to FIG. 4. FIG. 4 is block diagram showing a process of transmitting an image signal received by the first connector 140 in the display system 1 according to this exemplary embodiment.

Referring to FIG. 4, if the upgrading apparatus 200 is disconnected from the display apparatus 100, an image signal is received in the image receiver 110 (431) and transmitted to the first image processor 120 (432). The first image processor 120 processes an image signal and outputs it to the display unit 130 (433), and thus the display unit 130 displays an image based on an image signal processed by the first image processor 120.

Meanwhile, as shown in FIG. 4, if the upgrading apparatus 200 is connected to the display apparatus 100, an image signal is received in the image receiver 110 (431), and then transmitted not to the first image processor 120 but to the second image processor 220 (435) via the first connector 140 (434). Instead of the first image processor 120, the second image processor 220 performs the imaging process with regard to an image signal. The image signal processed by the second image processor 220 is returned to the display apparatus 100 (436).

An image signal is bypassed to be transmitted not the first image processor 120 but to the display unit 130 (437), and thus the display unit 130 displays an image based on the image signal processed by the second image processor 220.

Meanwhile, when the display apparatus 100 and the upgrading apparatus 200 are connected, the second controller 270 disables the first controller 170 and controls the first image processor 120 and the second image processor 220. Alternatively, if the operating system stored in the second storage unit 260 has a higher version than the operating system of the first storage unit 160, the operating system of the first storage unit 160 is updated by the operation system of the second storage unit 260, thereby driving the updated operating system or driving the operating system of the second storage unit 260 instead of the operating system of the first storage unit 160.

With this configuration, the upgrading apparatus 200 according to this exemplary embodiment may upgrade the display apparatus 100.

Meanwhile, as described above, if the upgrading apparatus 200 is connected using the first connector 140 of the display apparatus 100, the first controller 170 controls the first connector 140 to transmit at least a part of an image signal received from the image source 300 to the upgrading apparatus 200 and receive an processed image signal from the upgrading apparatus 200, and controls the display unit 130 to display an image corresponding to the image signal processed by the second image processor 220.

Further, the first controller 170 receives upgrade information about functions upgraded by the upgrading apparatus 200 using the first connector 140 if the upgrade is completed as the upgrading apparatus 200 is connected. Here, the upgrade information includes at least one of the added function information and the enhanced function information by the upgrading apparatus 200, which can be previously stored in the second storage unit 260.

Likewise, the second controller 270 controls the second connector 240 to transmit the upgrade information based on the function information stored in the second storage unit 260 of the upgrading apparatus 200 to the display apparatus 100, if the upgrading apparatus 200 is connected to the display apparatus 100 and the upgrade is completed.

Meanwhile, the first controller 170 may control the communication unit 145 to further receive the upgrade information through the network, based on the function information received from the upgrading apparatus 200.

The first controller 170 controls the display unit 130 to display the received upgrade information.

Here, the first controller 170 may compare the upgrade information received through the first connector 140 or the communication unit 145 with the function information of the display apparatus 100 previously stored in the first storage unit 160. The first controller 170 may control the display unit 130 to display a comparison between the function information upgraded by the upgrading apparatus 200 and the function information provided before the upgrade, based on the comparison results.

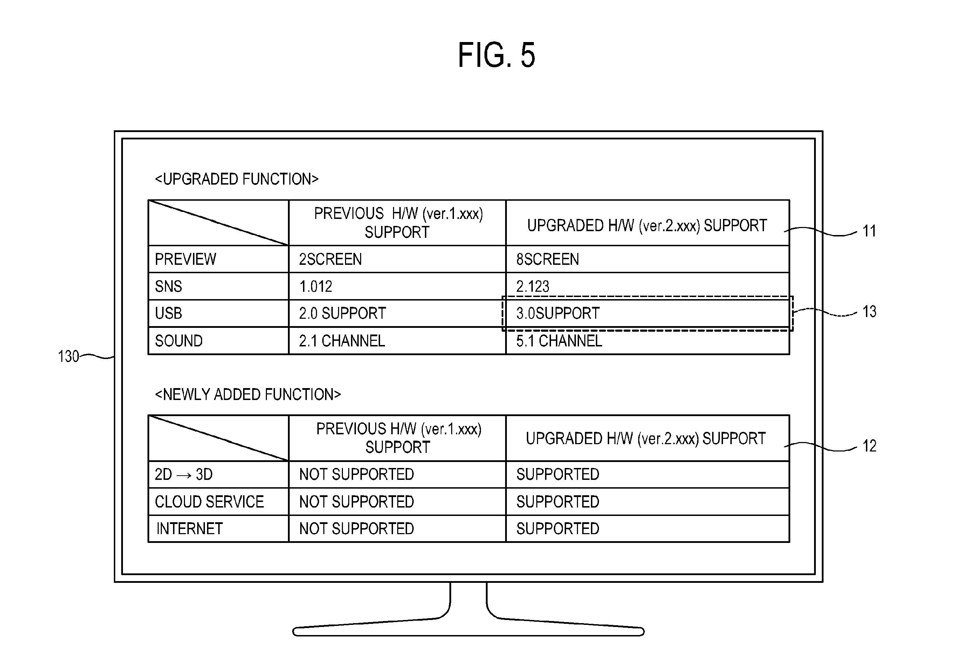

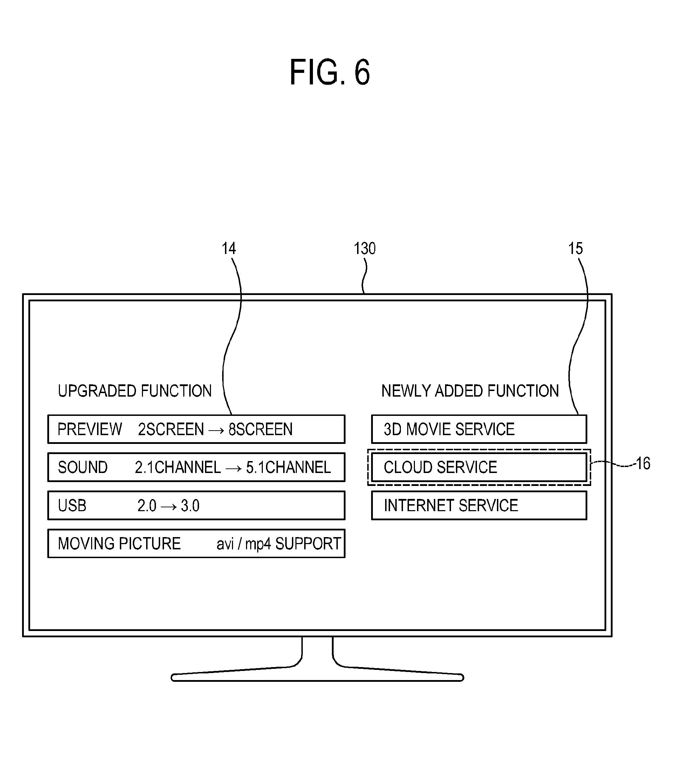

FIGs. 5 and 6 are views illustrating screens displayed on a display unit 130 according to the first exemplary embodiment.

The display unit 130 displays the upgrade information, for example, as shown in FIGs. 5 and 6, a table 11, 12 (FIG. 5), an icon 14, 15 (FIG. 6) or a picture, a moving picture or the like for comparing the upgraded function information with the function information before the upgrade.

For example, as shown in FIG. 5, if the display apparatus (200) has a hardware(H/W) version of 1.xxx and the upgrading apparatus 200 has a hardware version of 2.xxx, it shows that the hardware is upgraded by connecting to the upgrading apparatus 200. In this case, the first controller 170 may control the table 11 showing the function (upgraded function) enhanced by the upgrading apparatus 200, the table 12 showing the functions added by the upgrading apparatus 200 to be displayed on the display unit 130 compared to the function before the upgrade.

Thus, the improved function and the added function are displayed as compared with the function before the upgrade, so that a user can easily recognize the upgraded function information that is more easily recognizable than simple information such as the version information.

A user may select at least one function in the upgraded function information displayed on the display unit 130 using the user input unit 150. For example, if the user input unit 150 is a remote controller, a user controls arrow keys or the like provided in the remote controller to move an emphasis mark (for example, highlight, focus, etc.) displayed on the table 11, 12, and controls an enter key to select one emphasized function 13.

Further, the first controller 170 controls the display unit 130 to display detailed information about the selected item 13. For example, as shown in FIG. 5, if a user selects the upgraded item 13 for supporting USB 2.0 among the upgraded functions, the first controller 170 may control the display unit 130 to display detailed information of the function improved by 2.0 rather than 1.0 before the upgrade, i.e., data transmission rate, power supply, etc.

Meanwhile, as shown in FIG. 6, the first controller 170 may control the display unit 130 to display the icons 14 and 15 for comparing the improved function (upgraded function) by the upgrading apparatus 200 and the added function by the upgrading apparatus 200 with the functions before the upgrade. The shape of the icon 14, 15 is not limited to that shown in FIG. 6, and may have various other shapes such as a circle, square and so on. Alternatively, the icons 14 and 15 may be shown using various graphics as well as a text.

A user may control the user input unit 150 to select at least one of the function icons 14 and 15 displayed on the display unit 130. For example, a user controls the arrow keys provided in the remote controller to move the emphasis mark (for example, highlight, focus, etc.) on the icons 14 and 15, and controls the enter key to select one emphasized icon 16.

Further, the first controller 170 controls the display unit 130 to display the detailed information about the selected item 13. For example, as shown in FIG. 6, if a user selects a Cloud service item 16 among the newly added function, the first controller 170 may control the display unit 130 to display detailed information about various functions, usage, etc. of the Cloud service. Also, a user may select the corresponding item 16 using the user input unit 150.

Meanwhile, the first controller 170 may control the sound output unit 135 to output sound such as a storytelling voice for explaining comparison between the upgraded function information and the function information before the upgrade.

Also, the first controller 170 controls the display unit 130 to display a moving picture for explaining how to use the improved or added function in the form of a demo, and controls the sound output unit 135 to output a sound corresponding to the corresponding moving picture.

According to an exemplary embodiment, the upgraded function information is provided using the sound output unit 135 as well as the display unit 130 so that a visually impaired person or a very old person having bad eyesight can easily recognize the upgraded function.

The first controller 170 controls the display unit 130 to display the upgrade information as shown in FIGs. 5 or 6 on a screen first displayed after the upgrade if the upgrade is completed by connecting the upgrading apparatus 200 to the display apparatus 100.

Further, the first controller 170 adds the items corresponding to the upgrade information to a setting menu of the display apparatus 100.

Then, if a user selects a menu key of the user input unit 150, the first controller 170 controls the display unit 130 to display the setting menu including the items corresponding to the upgrade information. Further, if a user selects an item corresponding to the upgraded function among the setting menu, the first controller 170 controls the display unit 130 to display the upgrade information as shown in FIGs. 5 or 6.

Similarly, the upgrade information items are added to the setting menu, so that a user can easily recognize the information about the upgraded function when the upgrade is completed or any time a user wants to view the upgraded information items.

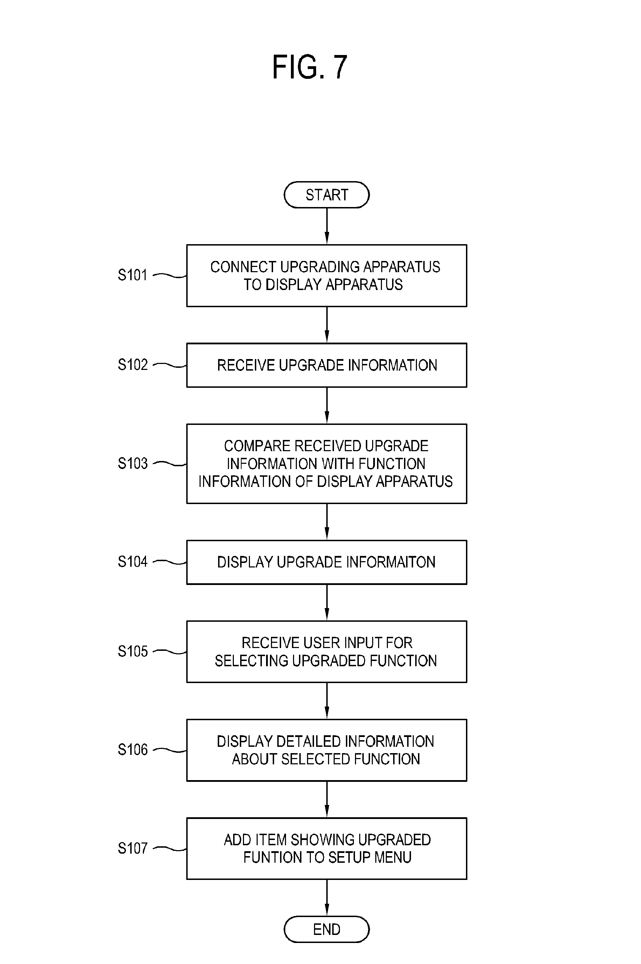

Below, a control method of the display system 1 according to a first exemplary embodiment will be described with reference to FIG. 7.

As shown in FIG. 7, the first connector 140 of the display apparatus 100 connects with the upgrading apparatus 200 for upgrading the hardware/software (in operation S101).

In the operation S101, if the display apparatus 100 is upgraded by connecting to the upgrading apparatus 200, the first controller 170 of the display apparatus 100 receives the upgrade information about the upgraded function from the upgrading apparatus 200 (in operation S102). Here, the received upgrade information includes version information, a model name, etc. of the hardware and/or software provided in the upgrading apparatus 200. Also, the first controller 170 may further control the communication unit 145 to receive information about the corresponding version based on the version information of the upgrading apparatus 200 through the network.

The first controller 170 compares the upgrade information received in the operation S102 with the information about the function of the display apparatus 100 stored in the first storage unit 160 (in operation S103).

The first controller 170 controls the display unit 130 to display the upgrade information (in operation S104). Here, the first controller 170 may control the display unit 130 to display the upgrade information received in the operation S102 without performing the operation S103. Also, the first controller 170 may control the display unit 130 to display information about the upgraded function by the upgrading apparatus 200 as compared with that before the upgrade, based on the comparison results of the operation S103. Also, the display unit 130 may display the upgraded function information in the form of tables 11, 12, icons 14, 15, pictures, moving pictures, etc., and the first controller 170 may further control the sound output unit 135 to output a voice for explaining the upgrade information.

A user may control the user input unit 150 to select one 13 - 16 among the upgraded function information items displayed in the operation S104 (in operation S105).

The first controller 170 controls the display unit 130 to display detailed information about the function selected in the operation S105 (in operation S106).

Meanwhile, the first controller 170 adds the item corresponding to the upgrade information displayed in the operation S104 to the setting menu of the display apparatus 100 (in operation S107). Here, the setting menu of the display apparatus 100 is stored in the first storage unit 160. Then, a user controls the user input unit 150 to select the item corresponding to the upgraded function in the state that the setting menu is displayed on the display unit 130, thereby recognizing the upgrade information at any time.

Thus, according to the first exemplary embodiment, the information about the upgraded function by the connection of the upgrading apparatus is displayed, and particularly displayed as compared with the information before the upgrade, so that a user can easily recognize the functions that have been improved or new functions that have been added by the upgrade compared with the functions available before the upgrade, and a user's comfort level and reliability about the upgrade can become higher.

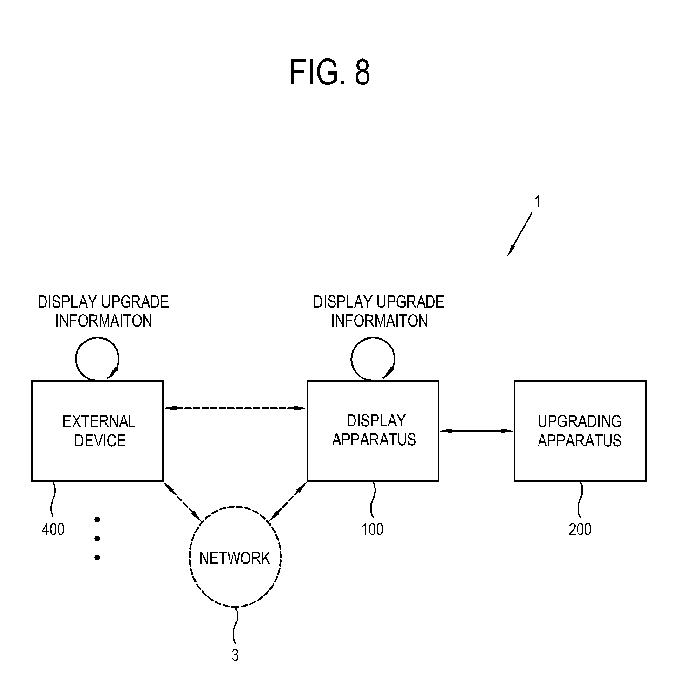

FIG. 8 is a block diagram showing the configuration of the display system 1 according to a second exemplary embodiment.

The display system 1 according to the second exemplary embodiment shown in FIG. 8 may further include an external device 400 for displaying the upgrade information in addition to the display system 1 according to the first exemplary embodiment shown in FIG. 1. Therefore, the same reference numerals and names are given to denote analogous elements other than the external device 400, and repetitive descriptions thereof will be omitted to avoid redundancy.

The display apparatus 100 may use the upgrading apparatus 200 to replace the functions of the display apparatus 100 by the upgraded functions of the upgrading apparatus 200, or perform the functions of the display apparatus 100 together with the functions of the upgrading apparatus 200. For example, the upgrading apparatus 200 processes a graphic image such as a GUI, and the display apparatus 100 receives the graphic image from the upgrading apparatus 200 and displays the graphic image together with an image processed therein.

The display apparatus 100 informs a user of the upgrade information about the function upgraded using the upgrading apparatus 200. The display apparatus 100 may display the upgrade information using the display unit 130.

The display apparatus 100 may be directly connected to the external device 400 or may be connected to the external device 400 through the network 3. The external device 400 may for example include a PC, a Smart phone, a Smart pad, or some analogous user terminal. The display apparatus 100 transmits the upgrade information to the external device 400. The external device 400 informs a user of the upgrade information in the form of displaying the upgrade information transmitted from the display apparatus 100.

Similarly, a user can easily know what functions of the display apparatus 100 are upgraded after the upgrade is completed using the upgrading apparatus 200, thereby improving a user's convenience.

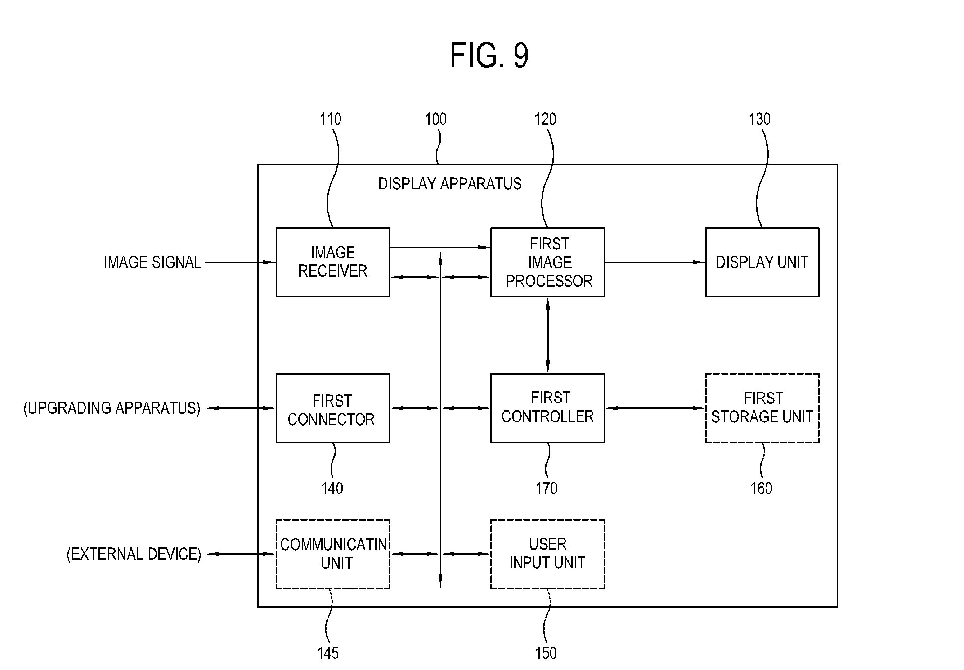

FIG. 9 is a block diagram showing the configuration of the display apparatus 100 according to the second exemplary embodiment. The display apparatus 100 may further include the image receiver 110, the first image processor 120, the display unit 130, the first connector 140, the first storage unit 160, the communication unit 145 and the first controller 170. The image receiver 110 receives an image signal. The image receiver 110 may receive a broadcasting signal as an image signal including a TV broadcasting signal or the like from a broadcasting signal transmitter (not shown); an image signal from a video device such as a DVD player, a BD player, etc.; an image signal from a PC; an image from a mobile device such as a Smart phone, a Smart pad, etc.; an image signal from Internet or the like network; and video contents stored in a storage medium such as a USB storage medium as an image signal.

The first image processor 120 processes an image signal received by the image receiver 110 and/or the first connector 140 to be displayed as an image. The display unit 130 displays an image based on an image signal processed by the first image processor 120.

The first connector 140 connects and communicates with the upgrading apparatus 200. There is no limit to the communication between the first connector 140 and the upgrading apparatus 200. For example, the communication may include HDMI, USB, and network communications. The first connector 140 sends and receives data needed for the display apparatus 100 to perform the upgraded function to and from the upgrading apparatus 200 while communicating with the upgrading apparatus 200 under control of the first controller 170.

The first storage unit 160 includes a nonvolatile memory such as a flash memory, a hard disk drive, etc., and stores setting information and a program. The display apparatus 100 performs operations based on the setting information. The setting information may for example include all the information referred to by a user's favorite TV channels, brightness of an image, volume, etc. The setting information includes environment information of a system, setting information set by a user, etc. The display apparatus 100 executes the program and performs the operation. The program includes an OS, an application program, etc.

The communication unit 145 communicates with the external device 400 directly or through the network 3.

The first controller 170 performs the upgraded function using the connected upgrading apparatus 200. The first controller 170 checks the functions to be upgraded by the upgrading apparatus 200 if connected with the upgrading apparatus 200, and controls the display unit 130 to display the upgrade information about the functions to be upgraded.

Although it is not shown, the first controller 170 may include a nonvolatile memory storing a control program for enabling such control operation, a volatile memory loading at least a part of the stored control program, and a microprocessor for executing the loaded control program.

The display apparatus 100 may further include the user input unit 150 to receive a user's input.

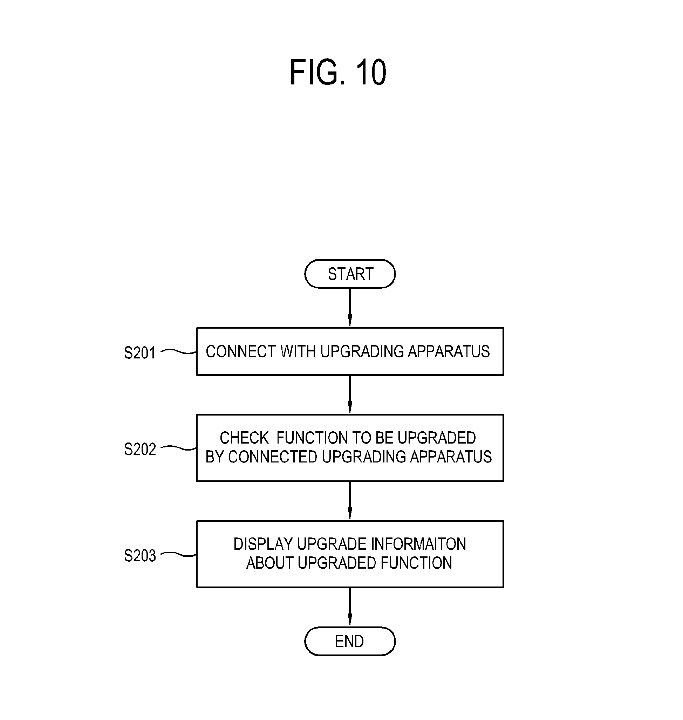

FIG. 10 is a flowchart showing a control method of the display apparatus 100 according to the second exemplary embodiment. At operation S201, the display apparatus 100 communicates with the upgrading apparatus 200 for upgrading the functions if it is being connected with the upgrading apparatus 200.

At operation S202, the display apparatus 100 checks the functions to be upgraded by the upgrading apparatus 200. The functions to be upgraded may belong to hardware and/or software. For instance, the upgrade of the function may include the first storage unit 160, i.e., a memory capacity of the display apparatus 100, a network speed of the communication unit 145, etc. Alternatively, the upgrade of the function may include upgrade of the program stored in the first storage unit 160. As a more detailed example, the first storage unit 160 of the display apparatus 100 has a memory capacity of '100' may be added with a memory capacity of '100' of a storage provided in the upgrading apparatus 200, so that the total memory capacity can be upgraded to '200'.

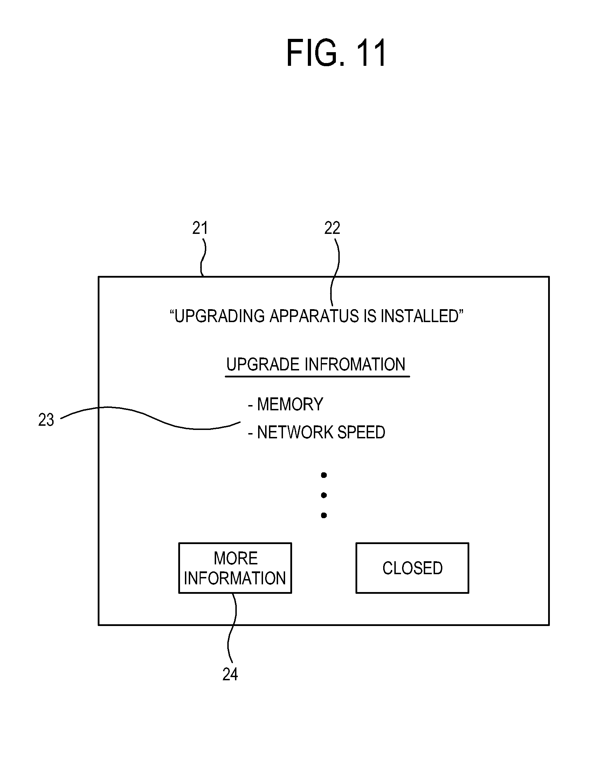

As a result, in operation S203, the display apparatus 100 displays the upgrade information about the functions to be upgraded. FIG. 11 shows an example of a user interface (UI) for displaying the upgrade information. The display apparatus 100 may use the UI 21 to display the upgrade information. The UI 21 may include information 22 for notifying the user that the upgrading apparatus 200 is connected to the display apparatus 100 and is ready to use the upgraded function. Also, the UI 21 may further include the upgrade information 23 about the functions upgraded by the upgrading apparatus 200. In this exemplary embodiment, the upgrade information 23 may for example show that the memory, the network speed, etc. are upgraded.

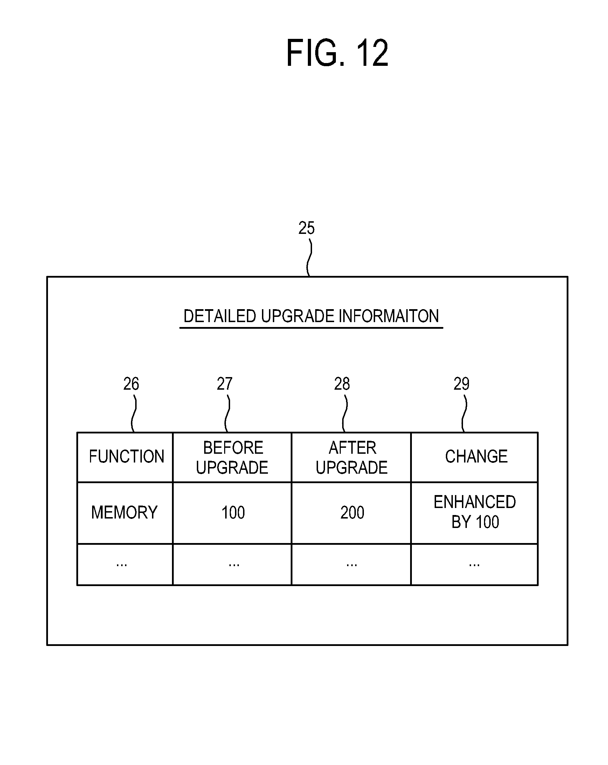

The display apparatus 100 may provide a user with more detailed upgrade information. The UI 21 may further include a selection item 24 for allowing a user to select the more detailed upgrade information. A user uses the user input unit 150 to select the selection item 24, thereby checking the more detailed upgrade information. FIG. 12 shows an example of the UI displaying detailed upgrade information. The UI 25 includes an item 26 which identifies the upgraded function and/or item, information 27 which provides information about the corresponding item before the upgrading, and information 28 which provides information about the corresponding item after upgrading. Also, the UI 25 may further include information 29 which provides information about an upgraded degree (advancement or enhancement in the function) or the change in the item before and after the upgrade. For example, as shown therein, the memory capacity is improved by '100' from before the upgrade to after the upgrade since the memory capacity is '100' before the upgrade but is '200' after the upgrade.

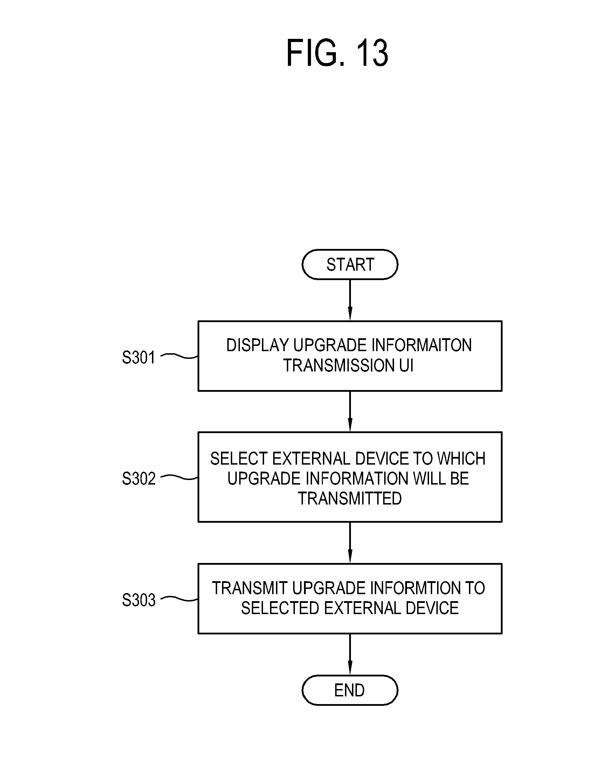

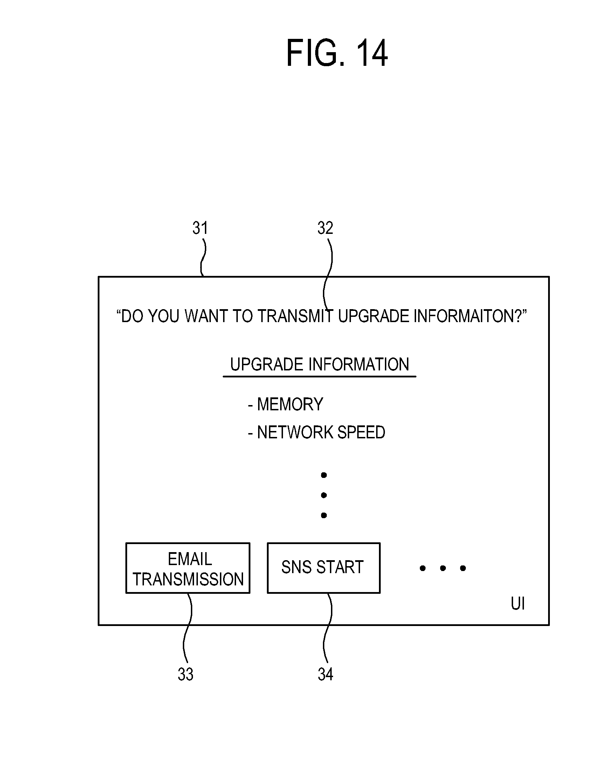

FIG. 13 is a flowchart showing another example of the control method of the display apparatus 100 according to the second exemplary embodiment. In this second embodiment, a user is informed of the upgraded information using the external device 400. At operation S301, the display apparatus 100 displays a UI for asking whether to transmit the upgrade information. FIG. 14 shows an example of a UI inquiring whether the upgraded information should be transmitted. The UI 31 may contain a message asking a user whether to transmit the upgrade information to the external device 400.

Next, at operation S302 of FIG. 13, the display apparatus 100 selects the external device 400 to which the upgrade information will be transmitted in accordance with a user's input. The UI 31 of FIG. 14 may include items 33, 34, ... for selecting the external device 400 to which the upgrade information will be transmitted. The external device 400 to which the upgrade information will be transmitted may for example be apparatuses corresponding to various transmission methods such as E-mail transmission, social network service (SNS) start, etc. A user may use the user input unit 150 to select at least one among the items 33, 34, ..., so that the upgrade information can be transmitted to the external device 400 using the selected method.

Next, in operation S303 of FIG. 13, the display apparatus 100 transmits the upgrade information to the external device 400 by a transmission method selected by a user.

Thus, according to the second exemplary embodiment, the upgraded information can be checked not only using the display apparatus 100 but also using the external device 400 selected by a user, thereby improving convenience for a user.

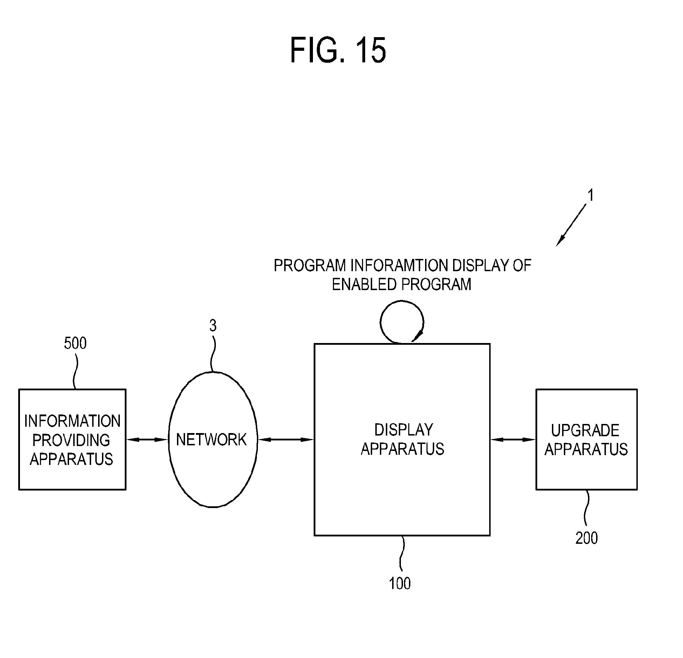

FIG. 15 is a block diagram showing the display system 1 according to a third exemplary embodiment.

The display system 1 according to the third exemplary embodiment shown in FIG. 15 may further include an information providing apparatus 500 for providing the upgrade information in addition to the display system 1 according to the first and second exemplary embodiments respectively shown in FIGs. 1 and 8. Therefore, the same reference numerals and names are given to analogous elements other than the information providing apparatus 500, and repetitive descriptions thereof will be omitted to avoid redundancy.

The display apparatus 100 informs a user of information about programs (below, referred to as 'the program information') enabled by the function upgraded by the upgrading apparatus 200. The display apparatus 100 may display the program information using the display unit 130.

The display apparatus 100 may connect with the information providing apparatus 500 via the network 3. The information providing apparatus 500 may, for example, be achieved by an Internet server, an upgrade server, etc. The information providing apparatus 500 manages and provides information about the programs to be executed by the display apparatus 100. The display apparatus 100 accesses the information providing apparatus 500 when connecting with the upgrading apparatus 200, and requests for information about the programs executable by the current specifications of the display apparatus 100 and the upgrading apparatus 200. The information providing apparatus 500 transmits the information about the programs executable by the current specifications of the display apparatus 100 and the upgrading apparatus 200 to the display apparatus 100. The display apparatus 100 displays the program information received from the information providing apparatus 500, thereby informing a user what programs are enabled by the upgrade.

Similarly, a user is provided with information about the programs enabled by the function of the display apparatus 100, upgraded using the upgrading apparatus 200, thereby becoming more convenient for the user.

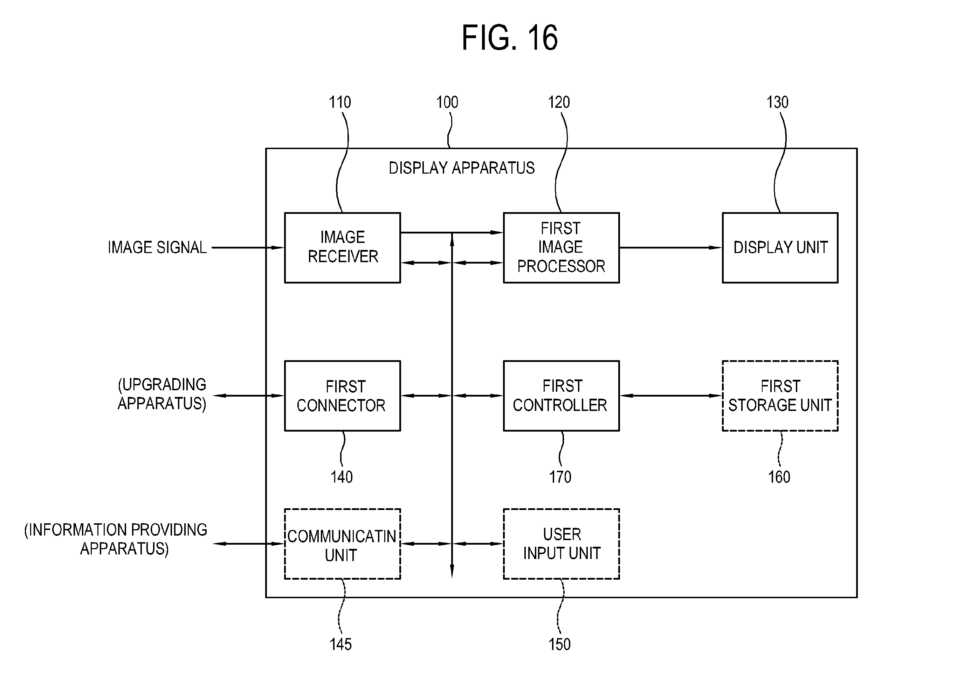

FIG. 16 is a block diagram showing the configuration of the display apparatus 100 according to the third exemplary embodiment. The display apparatus 100 may include the image receiver 110, the first image processor 120, the display unit 130, the first connector 140, the user input unit 150, the first storage unit 160, the communication unit 145 and the first controller 170.

The first controller 170 performs the functions upgraded using the connected upgrading apparatus 200. The first controller 170 checks the programs enabled by the functions upgraded using the upgrading apparatus 200 when connected to the upgrading apparatus 200, and controls the display unit 130 to display the program information about the enabled program.

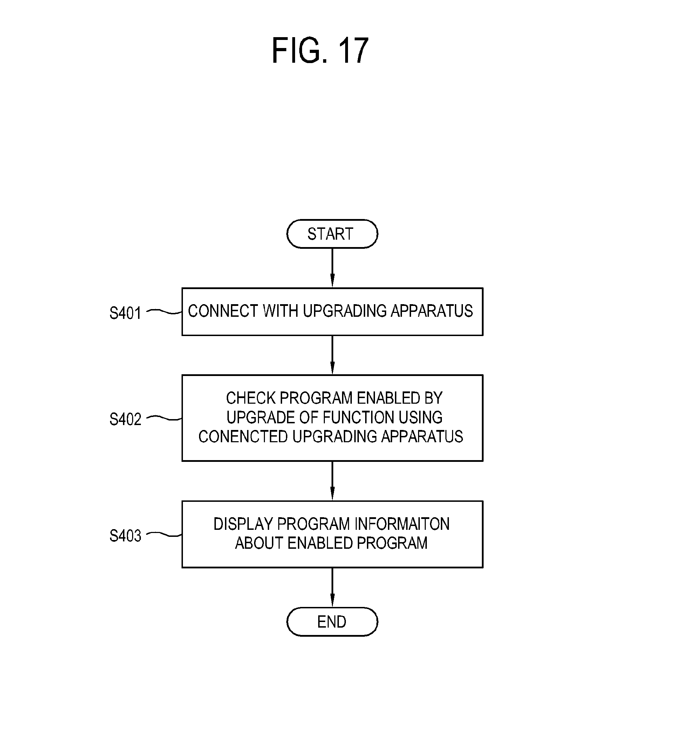

FIG. 17 is a flowchart showing a control method of the display apparatus 100 according to an exemplary embodiment. In operation S401, the display apparatus 100 communicates with and/or connects to the upgrading apparatus 200 in order to upgrade the functions.

In operation S402, the display apparatus 100 checks the programs enabled by the functions upgraded using the upgrading apparatus 200. The upgrade of the function may be hardware upgrade and/or software upgrade. For instance, the upgrade of the function may include upgrade of the memory capacity, i.e., the first storage unit 160 of the display apparatus 100, or upgrade of the network speed or the like of the communication unit 145. Alternatively, the upgrade of the function may include the upgrade of the program stored in the first storage unit 160. More specifically, the memory capacity of '100' of the storage provided in the upgrading apparatus 200 may be added to the memory capacity of '100' of the first storage unit 160 of the display apparatus 100, thereby upgrading the memory to a total memory capacity of '200'. The display apparatus 100 checks what programs are disabled until the functions are upgraded.

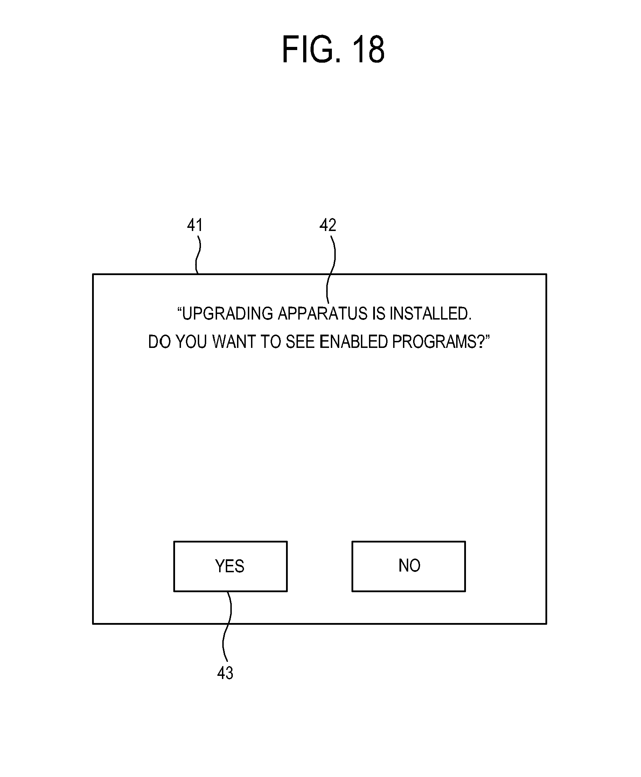

As a result, the display apparatus 100 displays the program information on the display unit 130 to inform a user of the programs enabled by the upgrade of the function in operation S403. The display apparatus 100 may use the UI to display the program information. FIG. 18 is a view illustrating an example of the UI for displaying the program information according to the third exemplary embodiment. As shown therein, the UI 41 may contain a message 42 to inform a user that the upgraded functions are ready to be used i.e., the upgrade is completed, and to ask a user whether he or she wants to check the programs that were enabled by the upgrade of the function. Also, the UI 41 may further include a selection item 43 allowing a user to select checking the programs enabled by the upgrade. A user can select the selection item 43 through the user input unit 150.

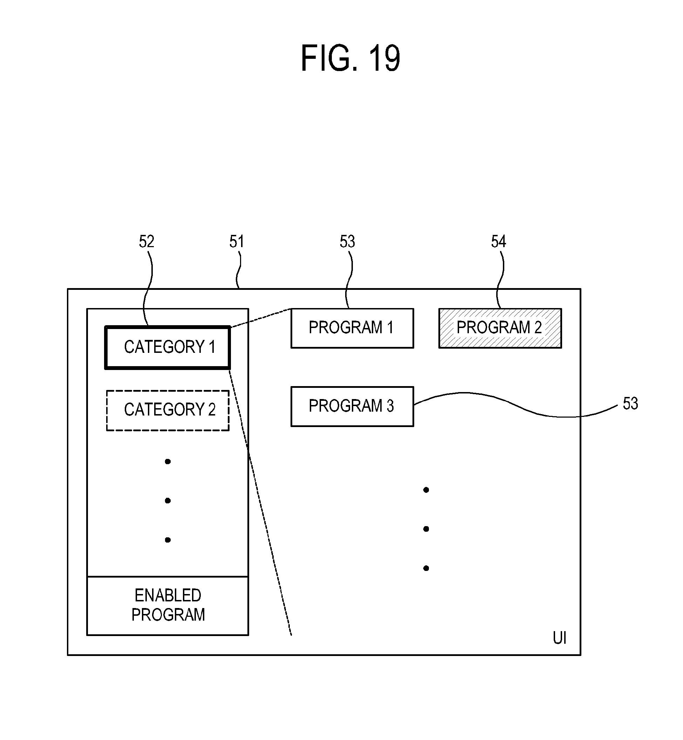

FIG. 19 is a view showing an example of the UI for displaying the program information in more detail according to a third exemplary embodiment. The UI 51 may include a category selection item 52 for categorizing and showing the programs enabled by the upgrade of the function. A user may select the category selection item 52 as desired using the user input unit 150. Also, the UI 51 may further include information 53, 54 of the program that belongs to the selected category. The information 53, 54 about the program may include the title, explanation, etc. of the corresponding program. The UI 51 may display the programs enabled by the upgrade of the function to be distinguished from the programs that belong to the corresponding category. For example, 'program1' 53 and 'program3' 53 displayed in a typical form are usable before the upgrade, but 'program2' 54 displayed in a highlighted form is enabled by the upgrade of the function using the upgrading apparatus 200.

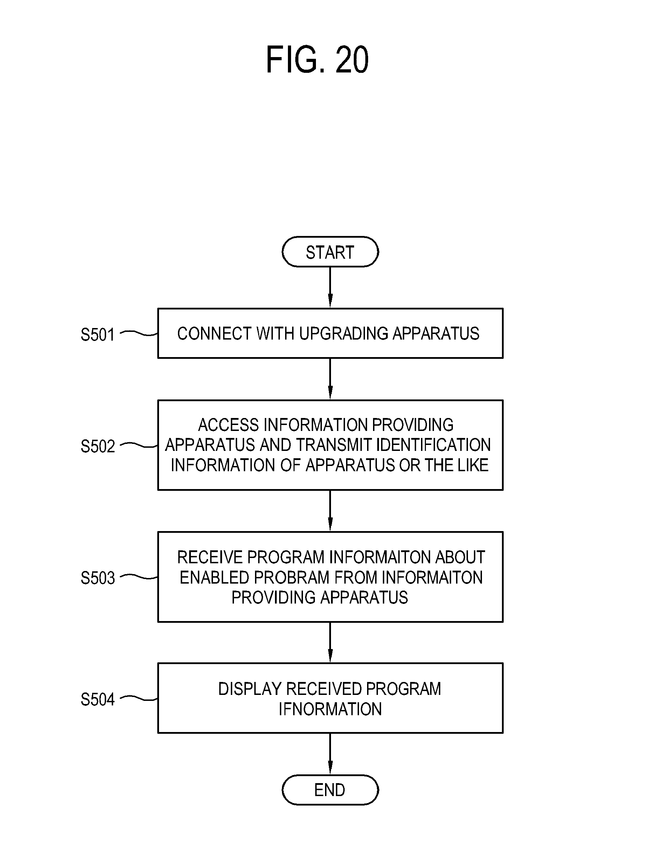

FIG. 20 is a flowchart showing another example of a control method of the display apparatus 100 according to a third exemplary embodiment. In operation S501, the display apparatus 100 connects with the upgrading apparatus 200. In operation S502, the display apparatus 100 is connected to the information providing apparatus 500 via the network 3, and transmits identification information of the display apparatus 100 and the connected upgrading apparatus 200, information of the currently installed program, etc. to the information providing apparatus 500.

The information providing apparatus 500 may provide information about the programs enabled in the current display apparatus 100 and the connected upgrading apparatus 200 by referring to the information received from the display apparatus 100. In operation S503, the display apparatus 100 receives the program information about the enabled programs from the upgrading apparatus 200. In operation S504, the display apparatus 100 displays the received program information.

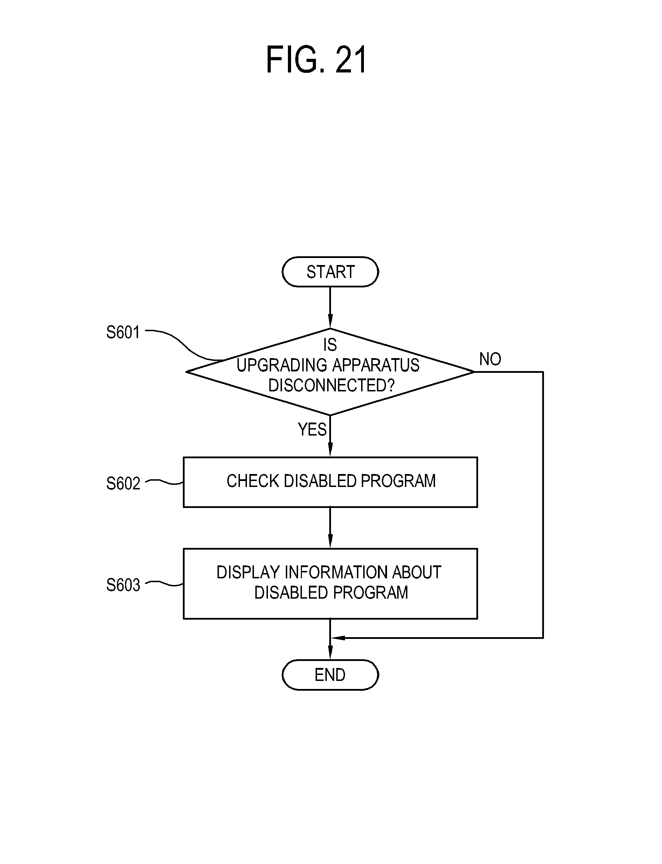

FIG. 21 is a flowchart showing yet another example of the control method of the display apparatus 100 according to the third exemplary embodiment. In this exemplary embodiment, the upgrading apparatus 200 is connected to the display apparatus 100. In operation S601, the display apparatus 100 checks whether the upgrading apparatus 200 is disconnected from the display apparatus 100.

As a result, in operation S602, the display apparatus 100 checks the programs disabled when the upgrading apparatus 200 is removed. For example, in an example referring to FIG. 19, 'program2' 54 enabled by connecting to the upgrading apparatus 200 is not usable any more as the upgrading apparatus 200 is removed.

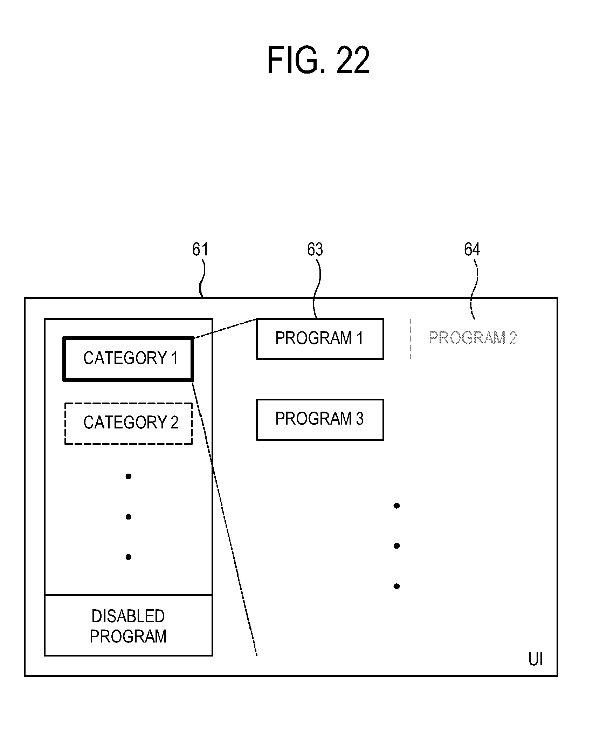

Next, in operation S603, the display apparatus 100 displays information about the programs disabled by disconnecting from the upgrading apparatus 200 so that a user can recognize the disabled programs. The display apparatus 100 may use the UI to display information about the programs disabled by the disconnection from the upgrading apparatus 200. FIG. 22 is a view showing an example of the UI displaying the disabled-program information according to a third exemplary embodiment. As shown therein, the UI 61 may show the programs, disabled as the upgrading apparatus 200 is removed, in a distinguishable manner from the programs that belong to a certain category. For example, 'program1' 63 and 'program3' 63 displayed in a typical form are still usable after removing the upgrading apparatus 200, but 'program2' 64 displayed in a dim form becomes disabled as the upgrading apparatus 200 is removed.

Thus, according to the third exemplary embodiment, a user can easily recognize the programs disabled corresponding to the disconnection of the upgrading apparatus 200, thereby improving convenience for the user.

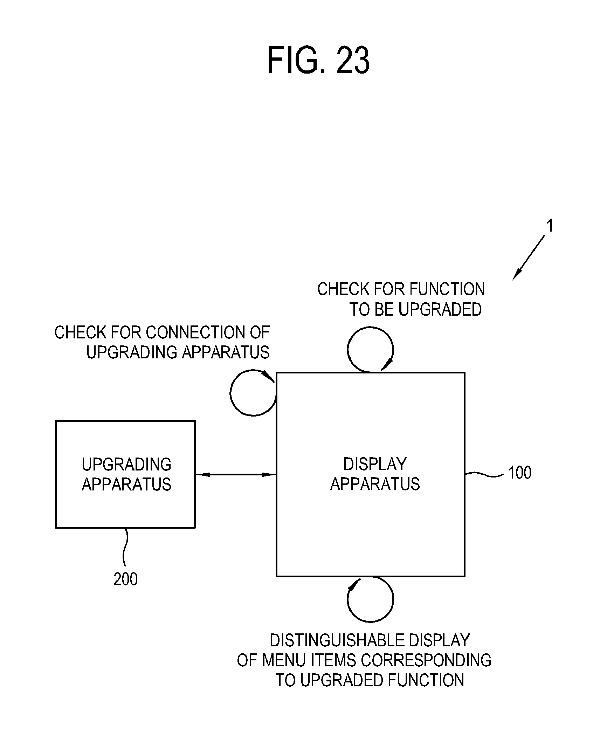

FIG. 23 is a block diagram showing the display system 1 according to a fourth exemplary embodiment. The display system 1 according to the fourth exemplary embodiment shown in FIG. 23 is different in distinctively displaying the menu items corresponding to the upgraded functions from the display systems 1 according to the first and third exemplary embodiments. Therefore, the same reference numerals and names as those in the first to third exemplary embodiments are given to analogous elements, and repetitive descriptions thereof will be omitted.

The display apparatus 100 provides a menu (to be described later) in the form of a UI for the convenience of a user's operation, and performs the upgraded function in accordance with a user's selection input through the menu. If the upgrading apparatus 200 is connected to the display apparatus 100 and upgrades the function, the items in the menu (referred to as a 'menu item' herein below) for selecting the functions may be varied depending on the upgrade of the function. For example, a new menu not provided before the upgrade may be added by the upgrade, or a menu item before the upgrade may be deleted or changed after the upgrade.

The display apparatus 100 informs a user of a change in the menu items after the upgrade of the function is completed using the upgrading apparatus 200. The display apparatus 100 may distinguishably display a new menu item or the like so that it is easily recognized by a user using the display unit 130.

The first controller 170 according to the fourth exemplary embodiment uses the connected upgrading apparatus 200 to perform the upgraded functions. The first controller 170 checks the functions to be upgraded by the upgrading apparatus 200 when connecting with the upgrading apparatus 200, and controls a menu item corresponding to the upgraded function among a plurality of menu items to be distinguishably displayed on the display unit 130.

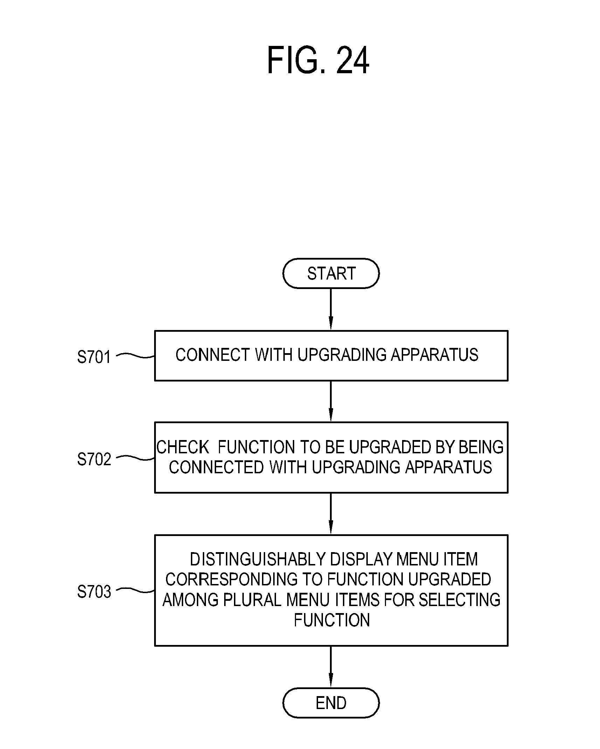

FIG. 24 is a flowchart showing a control method of the display apparatus according to the fourth exemplary embodiment. In operation S701, the display apparatus 100 communicates with the upgrading apparatus 200 in order to upgrade the functions when connecting with the upgrading apparatus 200.

In operation S702, the display apparatus 100 checks programs enabled by the upgrade of the function using the upgrading apparatus 200. The upgrade of the function may include an upgrade of a hardware function and/or an upgrade of a software function. For instance, the upgrade of the function may include upgrade of the storage unit 160 of the display apparatus 100, i.e., a memory capacity, or the network speed of the communication unit 145, etc. Alternatively, the upgrade of the function may include upgrade of the program stored in the storage unit 160. In accordance with the upgrade of the function, a user's UI menu for selecting the function may be varied.

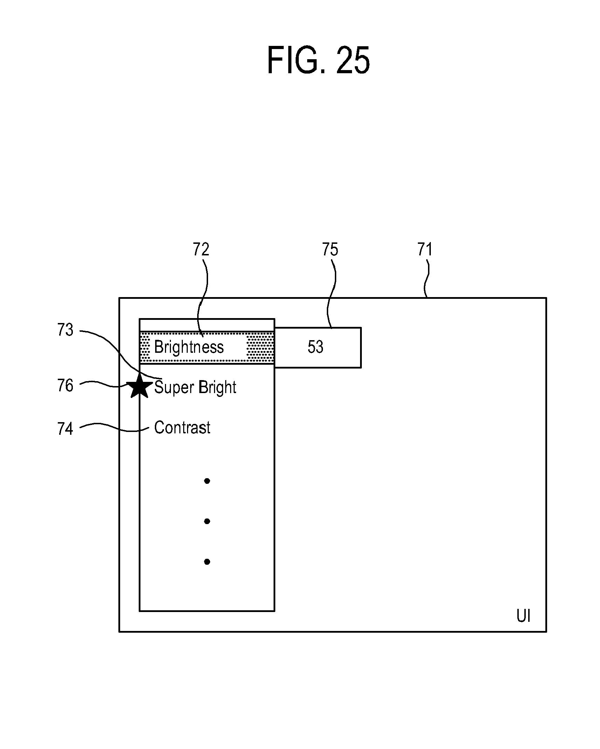

As a result, in operation S703, the display apparatus 100 distinguishably displays the menu item corresponding to the upgraded function among the plurality of menu items for selecting the function. FIG. 25 is a view illustrating an example of the UI displaying the menu item corresponding to the function to be upgraded. The UI 71 contains a plurality of menu items 72, 73, 74, ... For example, the plurality of menu items 72, 73, 74, ... may include 'Brightnesss', 'Super Bright', 'Contrast', etc. as items for the screen adjustment. A reference numeral '75' indicates a setting value of the 'Brightnesss' item 73. In this exemplary embodiment, the menu items 72 and 74 for 'brightness', 'Contrast' remain unchanged after the upgrade, while the menu item 73 for 'Super Bright' is added by the upgrade of the function using the upgrading apparatus 200. The UI 71 shows the new added menu item 73 for'Super Bright' together with an icon 76 so as to be distinguished from the other menu items 72 and 74. The icon 76 is provided by way of an example only and is not provided by way of a limitation. Alternatively, any other mark, special effects such as highlighting, different text size and/or font may be used to distinguish the new added menu item 73 from the other menu items 72 and 74.

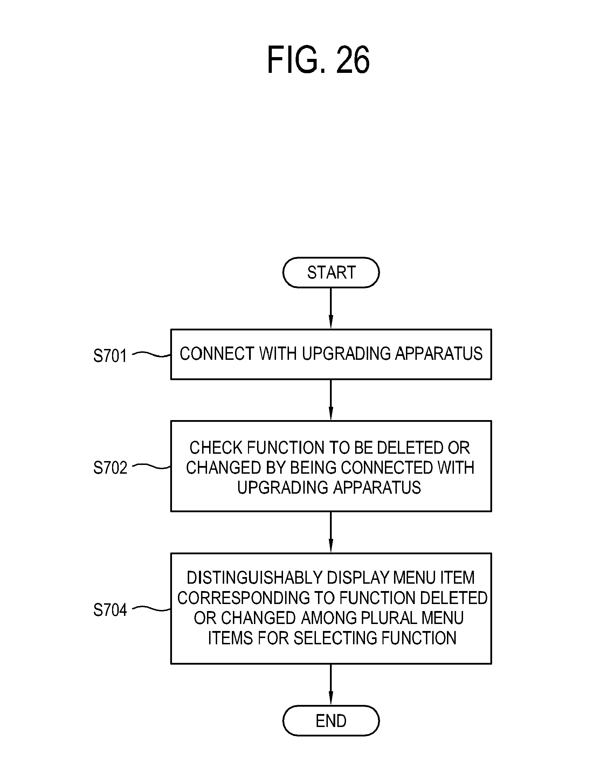

FIG. 26 is a flowchart showing another control method of the display apparatus 100 according to the fourth exemplary embodiment. In operation S701, the display apparatus 100 communicates with the upgrading apparatus 200 in order to upgrade the functions if connecting with the upgrading apparatus 200.

In operation S702, the display apparatus 100 checks the functions to be deleted or changed by connecting with the upgrading apparatus 200.

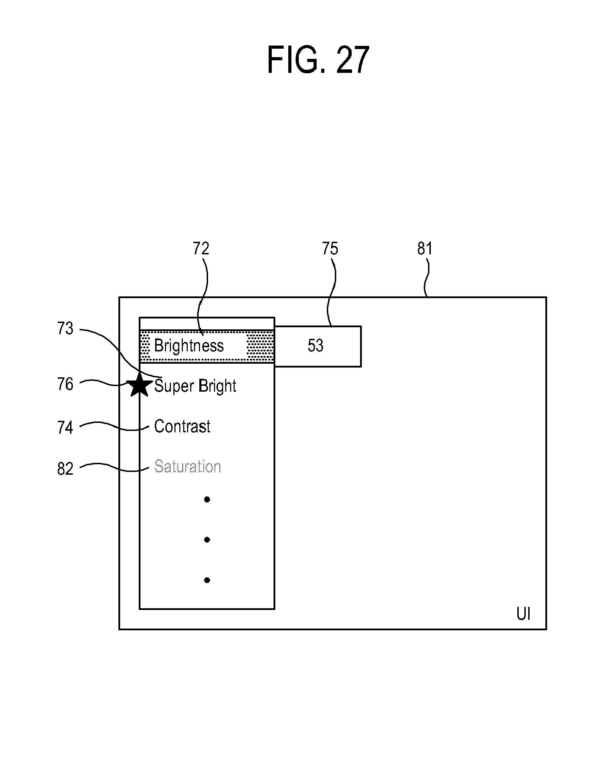

As a result, in operation S704, the display apparatus 100 distinguishably displays menu items corresponding to the functions to be deleted or changed among a plurality of menu items for selecting the functions. FIG. 27 is a view illustrating an example of the UI showing menu items corresponding to the functions to be deleted according to the fourth exemplary embodiment. The UI 81 contains a plurality of menu items 72, 73, 74, 82... Among the plurality of menu items, the menu item 82 for'Saturation' is available before the upgrade but is deleted after the upgrade. The menu items 82 for'Saturation' may be displayed to be relatively dim so as to be distinguishable from the other menu items 72, 73 and 74. Thus, a user can intuitively recognize that the menu item 82 for 'Saturation' is not available any more. In this exemplary embodiment, the menu item to be deleted is shown dim, by way of an example only. Alternatively, any other mark, special effects such as dimming, different text size and/or font may be used to distinguish the deleted menu item from the other menu items.

The display apparatus 100 may display new added menu items, deleted menu items, changed menu items, etc. in a manner distinguishable from one another. Thus, a user can more easily recognize what the change is in the respective menu items. Further, the display apparatus 100 may determine a manner of distinguishing the menu items in accordance with input from a user. For example, the shape, color, etc. for the distinguishable display may be set up in accordance with user input. That is, the user may determine marking, effects, etc. that should be used to distinguish the added menu items, deleted menu items, and changed menu items according to one exemplary embodiment.

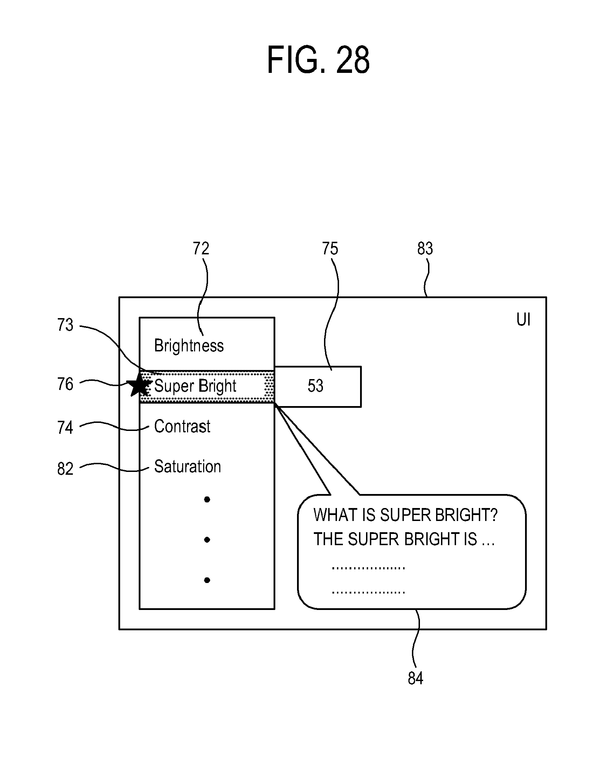

The display apparatus 100 may display the menu items together with information which explains the upgraded function. FIG. 28 is a view illustrating an example of the UI displaying information for explaining the upgraded function. The UI 83 includes detailed information or an explanation 84 of the new added menu items 76 for'Super Bright'. A user can more easily recognize the new added menu items 76 for'Super Bright' using the explanation 84.

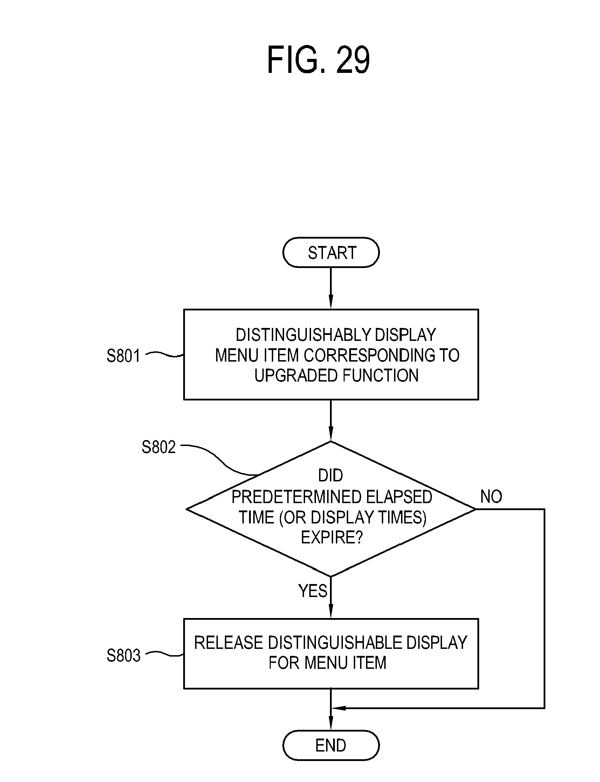

FIG. 29 is a flowchart illustrating yet another control method of the display apparatus 100 according to the fourth exemplary embodiment. In operation S801, the display apparatus 100 distinguishably displays the menu items corresponding to the upgraded function. Next, in operation S802, the display apparatus 100 checks whether the menu items that are distinguishably displayed for a predetermined time or since a predetermined time. If the menu items that have been deleted, added, or modified are distinguishably displayed for a predetermined time or are changed since a predetermined time, in operation S803 the display apparatus 100 releases the distinguishable display for the corresponding menu items. That is, the time or times for distinguishably displaying the menu items is enough to make a user recognize the change in the menu items, the distinguishable display for the menu items is released. In other words, in an exemplary embodiment, each menu item may be treated individually and a predetermined time may be set individually for each menu item. The predetermined time may be time since the update or display time. In yet another exemplary embodiment, a first time may be set for the deleted menu items, a second time may be set for the added menu items, and a third time may be set for all modified menu items. The time may be predetermined by a user. Also, one predetermined time may be used for all changed menu items.

Thus, according to the fourth exemplary embodiment, a user can easily recognize the change in the menu items of the display apparatus 100 after the upgrade is completed using the upgrading apparatus 200, thereby improving user's convenience.

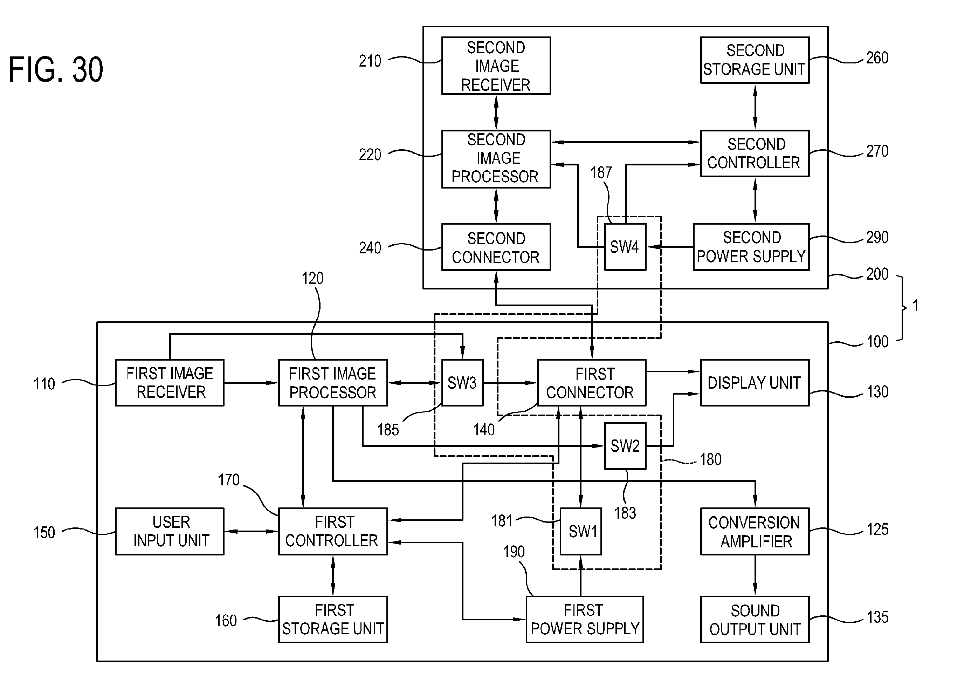

FIG. 30 is a block diagram showing the display system 1 according to a fifth exemplary embodiment. The display system 1 according to the fifth exemplary embodiment shown in FIG. 30 may further include a switching unit 180 and first and second power supplies 190 and 290 in addition to the display system 1 according to the first to fourth exemplary embodiments. Therefore, the same reference numerals and names as those in the first to fourth exemplary embodiments are given to analogous elements other than the switching unit 180 and the first and second power supplies 190 and 290, and repetitive descriptions thereof will be omitted.

In the display apparatus 100 according to the fifth exemplary embodiment, the first controller 180 tests performance of the display apparatus 100 before and after connecting to the upgrading apparatus 200, and controls the first image processor 120 to display test result information on the display unit 130.

The display apparatus 100 may further include a casing (not shown) for accommodating the display unit 130.

The first image receiver 110, the first image processor 120, the first controller 180 and the first connector 140 may be provided in a single image processing board (not shown). Of course, this is just an example, and they may be arranged on a plurality of printed circuit boards connected to communicate with one another. The image processing board may be accommodated in the casing.

The first image receiver 110 may be configured to transmit a first input image signal from the image source 300 to not the first image processor 120 but the first connector 140 under a control of the first controller 170. That is, the first image receiver 110 may include a plurality of output ports for outputting the received first input image signal and selectively transmit the first input image signal to the upgrading apparatus 200 or the first image processor 120. Alternatively, the first image receiver 110 may be configured to provide the first input image signal to only the first image processor 120.

The first connector 140 may include a predetermined number of ground terminals to stably transmit and receive data/signal/information/power.

The first connector 140 may be arranged to be exposed to the outside of the casing(not shown). That is, the casing may be formed with a connection opening (not shown) at a position to expose the first connector 140 to the outside. A user can achieve a connection for a communication between the upgrading apparatus 200 and the display apparatus 100 by inserting the second connector 240 of the upgrading apparatus 200 into the first connector 140 using the connection opening (not shown). Thus, it is convenient for a user to install the upgrading apparatus 200 without separately disassembling the casing.

By way of an example, assuming the screen of the display unit 130 is at a foreside, and the opposite side is a backside. In this case, the connection opening may be formed in the backside of the casing. Thus, the upgrading apparatus 200 may be installed to the backside of the casing so as not to affect the whole outer appearance of the display apparatus 100.

While the upgrading apparatus 200 is not being inserted into the first connector 140, a connection opening shutter (not shown) may be detachably installed in the casing (not shown) to open and close the connection opening (not shown). With this, it is possible to prevent foreign materials such as dust or the like from being introduced into the casing through the connection opening before the upgrading apparatus 200 is mounted.

The first connector 140 may transmit at least one of the first input image signal input using the first image receiver 110 and a first output signal output from the first image processor 120 to the second connector 240. Here, the first output signal may include at least one of a first image signal and a first voice signal.

The first connector 140 may be provided as universal and commercial standards such as high definition multimedia interface (HDMI), USB, Component, etc., and as necessary the first connector 140 may be configured for the communication of data/signal/information/power in accordance with Low voltage differential signaling (LVDS) standards. The first connector 140 may be achieved in various fashions and shapes without being limited to the foregoing as long as it allows communication for at least one of data, signal, information and power between the display apparatus 100 and the upgrading apparatus 200.

When the upgrading apparatus 200 is not connected to the first connector 140, a signal connection member (not shown) may be inserted for transmitting the first image signal output by the first image processor 120 to the display unit 130.

The signal connection member (not shown) performs only the function of transmitting a signal, so that the signal connection member (not shown) may be removed from the first connector 140 when the upgrading apparatus 200 is connected.

The first connector 140 receives the second output signal processed by the second image processor 220 using the second connector 240 of the upgrading apparatus 200, and transmits the received second output signal to the display unit 130.

Occasionally, if the upgrading apparatus 200 is provided to directly output the second output signal to the display unit 130 without passing through the display apparatus 100, the first connector 140 may not receive the second output signal from the upgrading apparatus 200.

The first connector 140 may be provided for communication of a control command between the first controller 170 and the second controller 270 of the upgrading apparatus 200. That is, the first connector 140 may have a connection port for transmitting and receiving the control command.

Through the first connector 140, the first controller 170 may sense whether the upgrading apparatus 200 is connected.

The first controller 170 may control the first connector 140 to transmit the second output signal to the display unit 130 if the first connector 140 receives the second output signal processed by the upgrading apparatus 200 through the second connector 240.

While the upgrading apparatus 200 is not connected to the first connector 140, the display unit 130 displays a first image corresponding to the first output signal output by the first image processor 120. On the other hand, if the upgrading apparatus 200 is connected to the first connector 140, the display unit 130 displays a second image corresponding to the second output signal output by the second image processor 220. Occasionally, the first image and the second image may be simultaneously displayed in the form of Picture In Picture (PIP) on the display unit 130.

Thus, the display unit 130 may display at least one of the first image corresponding to the first output signal 1 and the second image corresponding to the second output signal.

In this exemplary embodiment, the display apparatus 100 may further include a conversion amplifier 125 for converting a voice signal classified by the first image processor 120 to have a predetermined format and amplifying it, and a sound output unit 135 for outputting the amplified voice signal.

Meanwhile, the upgrading apparatus 200 may be connected to the display apparatus 100 by a wire or wirelessly.

The upgrading apparatus 200 may receive power for driving from the display apparatus 100 using the second connector 240. As necessary, the upgrading apparatus 200 may further include a power converter (not shown) for converting the power received from the display apparatus 100 into a power for driving. Here, if the display apparatus 100 is capable of converting and supplying the power required by the upgrading apparatus 200, the power converter may be omitted.

As necessary, the upgrading apparatus 200 may receive the driving power for operation not directly from the display apparatus 100 via the second connector 240, but from a separate external power source (commercial power or battery).

The first controller 170 may test the performance of the display apparatus 100 before the upgrading apparatus 200 is connected (below, referred to as 'the display apparatus performance') and the performance of the upgrading apparatus 200 after the display apparatus 100 is connected (below, 'the display system performance'), respectively. The first controller 170 may control the first storage unit 160 to store at least one of test results of the display apparatus performance and test results of the display system performance.

The first controller 170 controls the first image processor 120 so that the respective test results can be displayed on the display unit 130.

Here, successive tests for the display apparatus performance and the display system performance are not necessarily performed. For example, the test for the display apparatus performance may be previously performed by a predetermined cycle or a request of a user before the upgrading apparatus 200 is connected to the first connector 140, and stored in the first storage unit 160.

Also, to test the display apparatus performance in the state that the upgrading apparatus 200 is connected to the first connector 140, the upgrading apparatus 200 may be manually removed from the first connector 140, or the functions of the upgrading apparatus 200 may be deactivated by a switching unit 180 to be described later.

First, an exemplary procedure of testing the display apparatus performance by manually removing the upgrading apparatus 200 is as follows.

If there is a request for the performance evaluation between before and after the connection of the upgrading apparatus 200 using the user input unit 150, the first controller 170 may control the display unit 130 to display a guide message of removing the upgrading apparatus 200 from the first connector 140. Next, if a user manually disconnects the upgrading apparatus 200 and then inputs the disconnection information into the user input unit 150, the first controller 170 tests the performance of the display apparatus 100, that is, tests the display apparatus' performance. If the test of the display apparatus performance is completed, the test results may be stored in the first storage unit 160. Here, if the test results of the display apparatus performance are previously stored in the first storage unit 160, the test of the display apparatus performance may be omitted.

The first controller 170 may control the display unit 130 to display a guide message for guiding a user to again connect with the upgrading apparatus 200 after the display apparatus is completely tested. Thus, after a user manually connects the upgrading apparatus 200 with the first connector 140, the first controller 170 performs testing of the display system performance in the state in which the upgrading apparatus 200 is connected.

After the test of the display system performance is completed, the first controller 170 may control the first image processor 120 so that test results of the display apparatus performance and test results of the display system performance stored in the first storage unit 160 can be displayed together or sequentially on the display unit 130.

Here, the test result information of the display apparatus performance and the test result information of the display system performance may respectively contain the processing speeds of the first image processor 120 and the second image processor 220, the processing speeds of the first controller 170 and the second controller 270, a running speed of an application, and information about at least one of an enabled application and a newly added function.

In more detail, the test result information is to compare the display apparatus performance with the display system performance, which measures time taken in executing the same application or time taken in processing and displaying the same image, thereby measuring real processing and executing speeds.

The test result information is just an example, and any test item may be possible as long as it can show the display apparatus performance and the display system performance.

Also, the test result information may include information about applications executable before and after the upgrading apparatus 200 is connected to the display apparatus 100 and information about a newly added function after the upgrading apparatus 200 is connected.

Here, the first storage unit 160 may store a first test application for testing the display apparatus performance, a second test application for testing the display system performance, and a third test application for comparing the display apparatus performance with the display system performance. When a user inputs a command for executing the first test application using the user input unit 150, the display apparatus performance is tested. Likewise, if a command for executing the second test application is given, the display system performance is tested.

Here, the first to third test applications may be stored in the first storage unit 160 and/or the second storage unit 260 of the upgrading apparatus 200.

As necessary, instead of the first controller 170, the second controller 270 of the upgrading apparatus 200 may be provided to test the display apparatus performance and the display system performance. Also, an image signal for displaying the test results may be processed not by the first image processor 120 but by the second image processor 220 of the upgrading apparatus 200.

In the above exemplary embodiments, a user manually disconnects the upgrading apparatus 200 from the display apparatus 100 in order to test the foregoing two performances, but this is not limited thereto. Below, in the state that the upgrading apparatus 200 is being connected to the display apparatus 100, a method of testing the display system performance and the display apparatus performance by activating/deactivating the upgrading apparatus 200 according to an exemplary embodiment will be described.

As shown in FIG. 30, the display system 1 may further include a switching unit 180 for selectively activating and deactivating the upgrading apparatus 200 in the state that the upgrading apparatus 200 is being connected to the first connector 140.

The first controller 170 may control the switching unit 180 to deactivate the upgrading apparatus 200 in order to test the display apparatus performance before the upgrading apparatus 200 is connected to the display apparatus 100.

The switching unit 180 may be provided to selectively prevent at least one of the control signal of the first controller 170, the first input image signal of the first image receiver 110, the first output signal of the first image processor 120 and the driving power of the upgrading apparatus 200 from being transmitted to the upgrading apparatus 200.

The display apparatus 100 may further include the first power supply 190 for supplying the driving power to the upgrading apparatus 200.

The switching unit 180 may include a first switch 181 to selectively cut off the driving power supplied from the first power supply 190 to the upgrading apparatus 200; and a second switch 183 to selectively transmit the first output signal from the first image processor 120 to the display unit 130.

The first controller 170 turns off the first switch 181 not to supply the driving power from the first power supply 190 to the upgrading apparatus 200, and turns on the second switch 183 to transmit the first output signal from the first image processor 120 to the display unit 130, in the case where the performance of the display apparatus 100 before being connected to the upgrading apparatus 200 is tested. Thus, an image corresponding to the first output signal processed by the first image processor 120 can be transmitted to the display unit 130. Accordingly, even though the display apparatus 100 connects with the upgrading apparatus 200, the upgrading apparatus 200 is deactivated so that the display apparatus performance can be tested.

On the other hand, in the case where the performance of the display apparatus 100 connected to the upgrading apparatus 200 is tested, the first controller 170 turns on the first switch 181 and turns off the second switch 183, thereby activating the upgrading apparatus 200.

Also, the switching unit 180 may further include a third switch 185 to selectively prevent at least one of the first input image signal and the first output signal from being supplied to the upgrading apparatus 200.

Here, the first to third switches 181, 183, 185 may be installed in the display apparatus 100.

Here, the third switch 185 may be arranged between a transmission course of the first output signal between the first image processor 120 and the first connector 140 and a transmission course of the first input image signal between the first image receiver 110 and the first connector 140. The third switch 185 is arranged to cut off both the first output signal and the first input image signal, but is not limited thereto. Alternatively, a plurality of switches may be provided to independently cut off each signal.

As necessary, the third switch 185 may be arranged on one of the course between the first connector 140 and the second connector 240 or the course between the second connector 240 and the second image processor 220.

The first controller 170 turns off the third switch 185 and turns on the second switch 183 in the case where the performance of the display apparatus 100 before connecting with the upgrading apparatus 200 is tested. Thus, the upgrading apparatus 200 becomes deactivated.

The first controller 170 turns on the third switch 185 and turns off the second switch 183 in the case where the performance of the display apparatus 100 before connecting with the upgrading apparatus 200 is tested. Thus, the upgrading apparatus 200 becomes activated.

Also, the switching unit 180 may further include the fourth switch 187 to prevent the power from being supplied from the second power supply 290 to at least one of the second controller 270 and the second image processor 220, if the upgrading apparatus 200 is internally provided with a second power supply 290 to supply power needed for driving the upgrading apparatus 200.

The fourth switch 187 may be installed in the upgrading apparatus 200.

The first controller 170 turns off the fourth switch 187 to cut off the driving power and thus deactivate the upgrading apparatus 200 in the case where the performance of the display apparatus 100 before connecting with the upgrading apparatus 200 is tested.

The first controller 170 turns on the fourth switch 187 to supply the driving power and thus activates the upgrading apparatus 200 in the case where the performance of the display apparatus 100 connecting with the upgrading apparatus 200 is tested.

Here, each of the first to fourth switches 181, 183, 185, 187 may include at least one of a transistor, a field effect transistor (FET), and a relay.

The switching unit 180 is to activate/deactivate the upgrading apparatus 200 in the state that the upgrading apparatus 200 is physically connected to the first connector 140.

The upgrading apparatus 200 and the first connector 140 are connected not by a wire but wirelessly, the first connector 140 including a wireless connection module may be controlled to become deactivated.

As necessary, the switching unit 180 may be provided in the first connector 140. In other words, the first connector 140 may be internally provided with a switch for selectively cutting off at least one of the first input image signal, the first output signal, the control signal and the upgrading apparatus driving power.

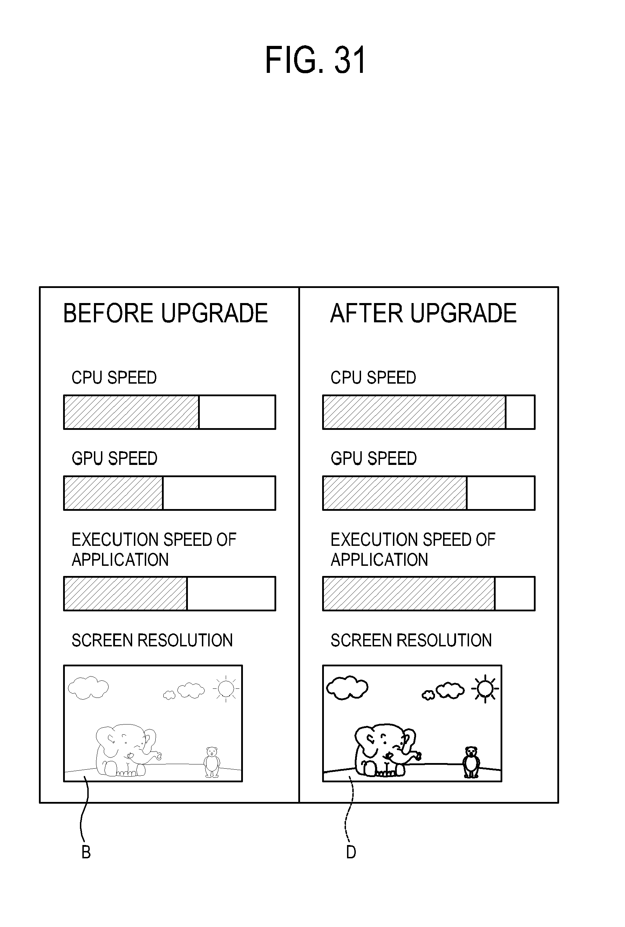

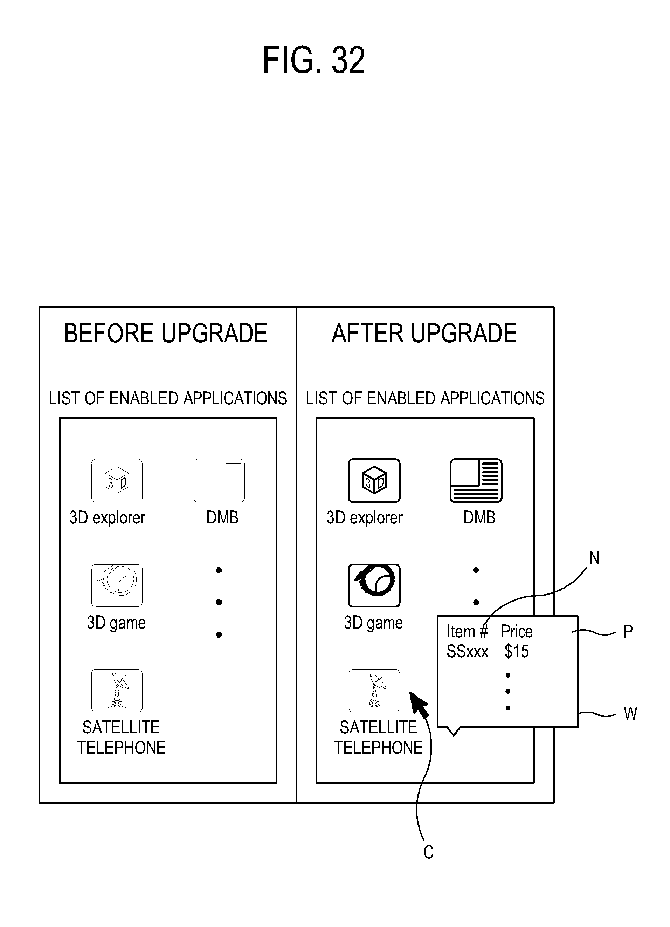

Meanwhile, FIG. 31 and FIG. 32 are views showing examples of the test results about the performance of the display apparatus (the display apparatus performance) before connecting with the upgrading apparatus and the performance of the display apparatus (the display system performance) after connecting with the upgrading apparatus, which are displayed on the display unit 130.

As shown in FIG. 31 and FIG. 32, the display apparatus performance and the display system performance may be displayed in the form of PIP on the same screen.

The displayed test result information may contain items related to "CPU speed", "GPU speed", "application executing speed" and "resolution".

The "CPU speed" item may show a processing speed of the first controller 170 and/or the second controller 270 of the upgrading apparatus 200 before and after the upgrading apparatus 200 is connected to the display apparatus 100. The processing speed is not a nominal speed of the first and second controllers 170 and 270 but a speed obtained by actually measuring time taken in executing a certain application or processing a predetermined job such as a certain operation job.

The "GPU speed" item may show a processing speed of the first image processor 120 and/or the second image processor 220 before and after the upgrading apparatus 200 is connected to the display apparatus 100. The processing speed is not a nominal speed of the first image processor 120 and the second image processor 220 but a speed obtained by actually measuring time taken in processing a certain image processing job (e.g., a certain moving picture play, recording, a certain screen display, etc.)

The "application executing speed" is a result from measuring time taken in executing an application widely known to a user.

The "screen resolution" item may be provided to display the same still image or moving picture so that a user can intuitively recognize a degree of image quality enhancement after the upgrading apparatus is connected. That is, the "screen resolution" item may be divided into "before upgrade" and "after upgrade" and simultaneously displayed on one screen of the display unit 130. More specifically, the first controller 170 inputs an image signal or a predetermined broadcasting signal from a predetermined image source to the first image processor 120, and thus the first image processor 120 performs an image process. The first controller 170 controls a first image B corresponding to the first output signal output by the first image processor 120 to be displayed at an area of the display unit 130. Meanwhile, the second controller 270 of the upgrading apparatus 200 inputs a signal, which is the same as the image signal or the broadcasting signal input to the first image processor 120, into the second image processor 220 of the upgrading apparatus 200, and thus the second image processor 220 performs an image process. Further, a second image D corresponding to the second output signal output by the second image processor 220 is controlled to be displayed at another area of the display unit 130. Thus, the first and second images B and D, which are output by processing the same image signal or broadcasting signal but different in image quality from each other, may be displayed on one screen.

Also, as shown in FIG. 32, information about a list of applications before and after the upgrade may also be displayed on the display unit 130.

For example, assume that the display apparatus 100 cannot support a 3D image before connecting with the upgrading apparatus 200 but can support the 3D image after connecting with the upgrading apparatus 200.

In this case, the "list of enabled applications" of the "before upgrade" shows "3D explorer" and "3D game", which are 3D based applications, to be deactivated. On the other hand, the "list of enabled applications" of the "after upgrade" shows "3D explorer" and "3D game" to be activated. Of course, such an enablement showing fashion is just an example, and may be provided in a variety of different ways.

Also, if the Digital Multimedia Broadcasting (DMB) is enabled by the connection of the upgrading apparatus 200, the "DMB" item may be activated and displayed.

Meanwhile, in FIG. 32, if a user places a cursor C on the deactivated application, a guide window W may be displayed on the display unit 130 so that information about the upgrading apparatus needed for executing the corresponding deactivated application can be displayed. The information about the upgrading apparatus may be previously stored in the first storage unit 160 or the second storage unit 260 to be described later, or may be downloaded from Internet through an Internet connection module such as the communication unit 145.

Here, the information about the upgrading apparatus may include information about a serial number N of the upgrading apparatus and price P of the upgrading apparatus. As necessary, if the upgrading apparatus displayed on the guide window W showing the information about the upgrading apparatus is clicked, a payment guide window (not shown) needed to purchase the upgrading apparatus may be displayed. A user may purchase a certain upgrading apparatus through the payment guide window (not shown).

As above, the display apparatus performance and the display system performance are tested in the display apparatus 100, but exemplary embodiment is not limited thereto. Below, an exemplary embodiment will be described where a test of performance and a display of test result information are implemented by the upgrading apparatus 200.

The second controller 270 of the upgrading apparatus 200 tests the performance of the display apparatus before and after the upgrading apparatus 200 is connected to the display apparatus 100, and controls the second image processor to display each test result information on the display unit 130.

Here, if the second image processor 220 is provided to be controlled by only the first controller 170 of the display apparatus 100, the second controller 270 may be omitted as unnecessary.

The second image processor 220 processes one of the first input image signal from the first image receiver 110 and the first output signal from the first image processor 120, thereby outputting the second output signal.

The second output signal output by the second image processor 220 is transmitted again to the display unit 130 through the second connector 240 and the first connector 140. Thus, a second image corresponding to the second output signal may be displayed on the display unit 130. The second image processor 220 enhances the function of the first image processor 120, or additionally performs a function not implemented in the first image processor 1201, so that the display unit 130 can display an upgraded image that is not displayed by or is difficult for the existing display apparatus 100 to display.

For example, while the first image processor 120 cannot provide a full HD image, the second image processor 220 can provide a full HD image. Also, while the first image processor 120 cannot provide a 3D image, the second image processor 220 can provide a 3D image. Of course, such an added and extended function is just an example, and may be varied.

Here, the second image processor 220 may retreat a voice signal in addition to an image signal, and thus the retreated and upgraded voice signal may be provided to the display apparatus 100.

Meanwhile, the upgrading apparatus 200 may further include a second image receiver 210 to receive a second input image signal from the broadcasting signal or the image source 300 and transmit it to the second image processor 220.

That is, a broadcasting signal or an image signal is received or input through the first image receiver 110 of the display apparatus(110), but not limited thereto. Alternatively, as shown in FIG. 30 the upgrading apparatus 200 includes the second image receiver 210 to receive the broadcasting signal or the image signal separately from the display apparatus 110. In this case, the first controller 170 of the display apparatus 100 stops operations of the first image receiver 110 and the first image processor 120 if it is sensed that the upgrading apparatus 200 is connected to the first connector 140. At this time, a second image signal(a broadcasting signal or an image signal) input through the second image receiver 210 is transmitted to the second image processor 220 and experiences image processing, the second output signal output by the second image processor 220 is transmitted to the display unit 130 through the first connector 140 of the display apparatus 100. Thus, the second image corresponding to the second output signal may be displayed on the display unit 130.

Meanwhile, as another example, if the upgrading apparatus 200 independently receives a broadcasting signal or an image signal through the second image receiver 210, the first controller 170 may control the first image processor 120 to process an input signal input through the first image receiver 110 and output the first output signal to the display unit 130. Here, the first image corresponding to the first output signal may be displayed as a main picture or a sub picture on the display unit 130. At the same time, if receiving a broadcasting signal or an image signal through the second image receiver 210, the upgrading apparatus 200 processes it using the second image processor 220 and transmits the second output signal to the display unit 130. Thus, the second image corresponding to the second output signal may be displayed as a sub picture or a main picture on the display unit 130 in accordance with the first image. That is, the first input signal input through the first image receiver 110 of the display apparatus 100 and the second input signal input through the second image receiver 210 of the upgrading apparatus 200 are respectively processed into the first image and the second image, and displayed in the form of Picture in picture (PIP) on the display unit 130.

The first controller 170 of the display apparatus 100 may control the first image processor 120 and the first image receiver 110 together with the second controller 270 of the upgrading apparatus 200, if sensing the connection of the upgrading apparatus 200. For instance, the first controller 170 may control one or more of a demultiplexer (not shown), a decoder (not shown) and a scaler (not shown) of the first image processor 120, and the second controller 270 may control the other ones.

As necessary, the first controller 170 may have priority to control the first image receiver 110 and the first image processor 120, and the second controller 270 may be auxiliary to assist the first controller 170.

On the other hand, the second controller 270 may have priority to control the first image receiver 110 and the first image processor 120, and the first controller 170 may be auxiliary to assist the second controller 270.

Meanwhile, the first controller 170 of the display apparatus 100 transfer its full control function to the second controller 270 if detecting the connection of the upgrading apparatus 200. At this time, the first controller 170 does not issue the control command, and performs only transmitting of the control command between the elements to be controlled by the first controller 170 and the second controller 270. As necessary, a dedicated control communication line may be provided to transmit the control command between the second controller 270 and the elements originally controlled by the first controller 170.

The second storage unit 260 may store an operating system more upgraded than the operating system stored in the first storage unit 160, the first controller 170 or the second controller 270 updates the operating system stored in the first storage unit 160 with the upgraded operating system, thereby driving the updated operating system. As necessary, instead of the operating system stored in the first storage unit 160, the operating system of the second storage unit 260 may be driven.

Meanwhile, as described above, the switching unit 180 is to selectively prevent at least one of an image signal, the control signal and the power output by the display apparatus 100 from being input to the second image processor 220 and the second controller 270. Here, FIG. 30 shows that the first to third switches 181, 183, 185 are provided in the display apparatus 100, but this is provided by way of an example and not by way of a limitation. As necessary, the first to third switches 181, 183, 185 may be installed in the upgrading apparatus 200.

The second controller 270 controls the switching unit 180 to test the performance of the display apparatus before the connection of the upgrading apparatus, thereby deactivating the upgrading apparatus 200. That is, the second controller 270 may control at least one among the first to third switches 181, 183, 185 installed in the display apparatus 100.

Here, the second controller 270 may receive a command of a request for testing the display apparatus performance and the display system performance directly from the user input unit 150 or via the first controller 170 and the first connector 140.

The upgrading apparatus 200 may further include a second power supply 290 for supplying driving power to the second controller 270 and the second image processor 220; and a fourth switch 187, i.e., the fourth switch 187 to selectively cut off the driving power supplied from the second power supply 290 to at least one of the second controller 270 and the second image processor 220.

The second controller 270 may control the fourth switch 187 to prevent the driving power from being supplied to at least one of the second controller 270 and the second image processor 220 if it is requested to become deactivated. Thus, the upgrading apparatus 200 can become deactivated.

On the other hand, the fourth switch 187 supplies the driving power to the second controller 270 and the second image processor 220 if receiving the command of activation from the first controller 170 of the display apparatus 100 through the second connector 240.

The switching unit 180 may be provided in the second connector 240. That is, the third switch 185 and the first switch 181 shown in FIG. 1 may be provided in the second connector 240. That is, under the control from at least one of the first controller 170 and the second controller 270, the second connector 240 may be provided to selectively supply at least one among the first output signal, the first input image signal, the control signal and the driving power to the upgrading apparatus 200.

Meanwhile, the switching unit 180 may be controlled by not only one of the first controller 170 and the second controller 270, but also by both of them. In this case, one of the first controller 170 and the second controller 270 has priority to mainly control the switching unit 180, and the other one provides auxiliary control to the switching unit 180. As necessary, some among the switching unit 180 installed in the display apparatus 100 are controlled by the first controller 170 of the display apparatus 100, and some installed in the upgrading apparatus 200 are controlled by the second controller 270.

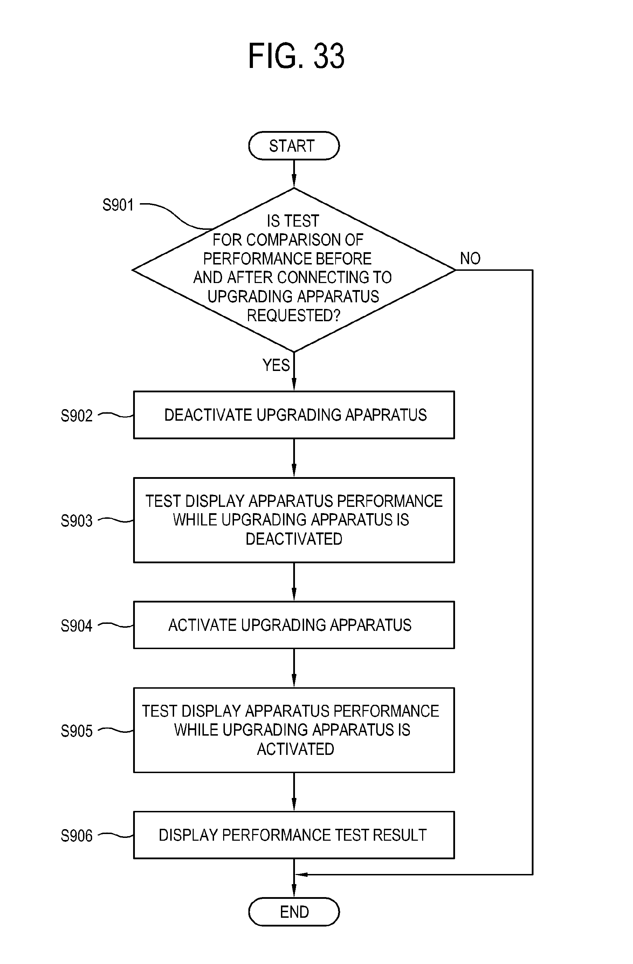

Below, with reference to FIG. 33, a control method of the display system according to an exemplary embodiment, i.e., a performance evaluation providing method for the display system will be described.

Here, the display system includes the display apparatus having the first image processor, and the upgrading apparatus having the second image processor and connectable to the display apparatus.

First, if a comparison test in performances before and after connecting to the upgrading apparatus is requested (in operation S901), the upgrading apparatus is deactivated (in operation S902).

Next, in the state that the upgrading apparatus is being deactivated, the performance of the display apparatus is tested (in operation S903). Here, the test results in operation S903 may be stored in the first storage unit 160 of the display apparatus.

Next, the upgrading apparatus 200 becomes activated (in operation S904).

Then, in the state that the upgrading apparatus 200 is activated, the performance of the display apparatus is tested (in operation S905). Here, the test results in operation S905 may be stored in at least one of the first storage unit 160 of the display apparatus 100 and the second storage unit 260 of the upgrading apparatus 200.

Next, the performance test results are displayed on the display unit 130 (in operation S906).

Here, in operation S902 where the upgrading apparatus 200 is deactivated, there may be further provided an operation of preventing at least one of the control signal, the driving power and the image signal from being supplied from the display apparatus 100 to the upgrading apparatus 200.

On the other hand, in operation S904 where the upgrading apparatus 200 is activated, there may be further provided an operation of supplying the control signal, the driving power, and the image signal from the display apparatus 100 to the upgrading apparatus 200.

Here, in operation S906 where the performance test results are displayed, there may be further provided an operation of displaying on one screen the first image corresponding to the first output signal processed by the first image processor 120 and the second image corresponding to the second output signal processed by the second image processor 220. As shown in the "screen resolution" item of FIG. 31, in order to compare image quality between before and after connecting to the upgrading apparatus, the results from processing the same image signal into images by the first image processor 120 and the second image processor 220 may be displayed on one screen.

According to a fifth exemplary embodiment, the performance is compared between before and after connecting with the upgrading apparatus 200, and the results from the comparison are provided to a user, thereby improving convenience for the user.

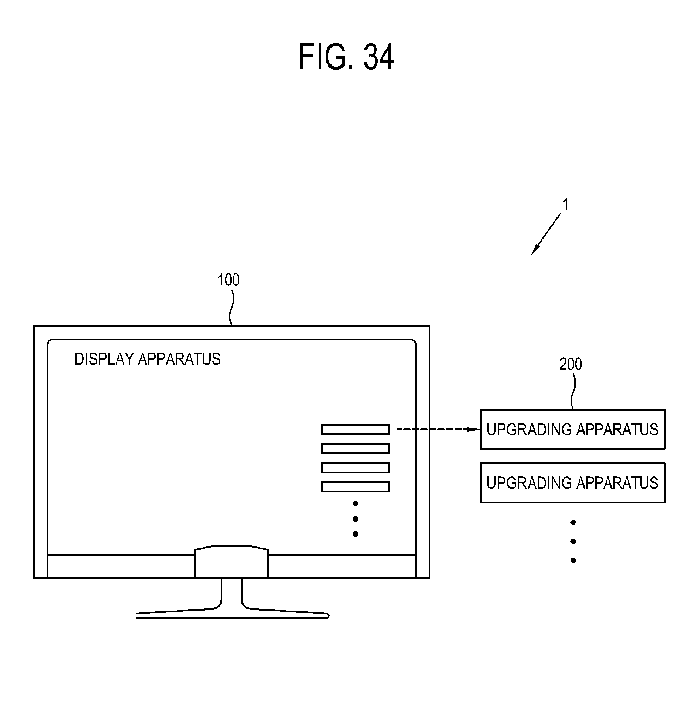

FIG. 34 is a view illustrating an example of the display system 1 including the display apparatus 100 and a plurality of upgrading apparatuses 200 according to a sixth exemplary embodiment.

The display system 1 according to the sixth exemplary embodiment shown in FIG. 34 is different in comparing the functions provided by the display apparatus 100 and the functions provided by the upgrading apparatus 200 and performing one function selected according to comparison results, from the display system 1 according to the first to fifth exemplary embodiments. Therefore, the same reference numerals and names as those of the first to fifth exemplary embodiments are given to analogous elements, and repetitive descriptions thereof will be omitted.

The upgrading apparatus 200 is provided to upgrade the existing hardware / software configurations of the display apparatus 100, and includes image processing blocks such as a decoder, a scaler, etc. and a MICOM and a CPU for controlling the image processing blocks. The results performed in the upgrading apparatus 200 may provide an image having more improved quality than those of a part or all of the imaging processes or application programs executed in the display apparatus 100, and execute various functions that cannot be executed by only the display apparatus 100.

As an example that the upgrading apparatus 200 is connected to the display apparatus 100, at least one upgrading apparatus 200 may be directly connected via a plurality of connectors provided in the back of the display apparatus 100, or connected by transmitting and receiving a signal therebetween through a publicly known wired/wireless communication.

The display apparatus 100 can connect with the plurality of upgrading apparatuses 200, and the display apparatus 100 may selectively or together use the functions enabled in the display apparatus 100 and the functions enabled in each upgrading apparatus 200. In this case, it is necessary to determine what function of which apparatus a user wants to use.

The first controller 170 compares a plurality of functions provided by the display apparatus 100 with a plurality of functions provided by the connected upgrading apparatus 200 if at least one upgrading apparatus 200 is connected via the first connector 140, and controls at least one of the functions provided by the display apparatus 100 and the functions provided by the upgrading apparatus 200 to be selected and performed in accordance with the comparison results.

For example, if the display apparatus 100 and the connected upgrading apparatus 200 are respectively provided with tuners, the best one of the respective tuners is selected to receive a broadcasting signal. Also, if the same game software programs are installed, the game software program having a higher version is selected and executed. The plurality of functions in this exemplary embodiment includes all hardware/software functions provided by the display apparatus 100 and the upgrading apparatus 200.

At this time, the first controller 170 enables some configurations of the display apparatus 100 or the upgrading apparatus 200, which performs the selected function, and disables the corresponding configurations of the other apparatus that can perform the same function, thereby making the corresponding function be executed by the selected apparatus.

The first storage unit 160 may store information about the plurality of functions in accordance with a predetermined data structure. The information to be stored may include a name of hardware/software for performing the function, version information, etc. The information about the plurality of functions stored in the first storage unit 160 may be stored in the form of various data structures such as a list type, a tree type, etc. If a user thinks a predetermined function to be unnecessary, s/he can delete the corresponding function from the stored information.

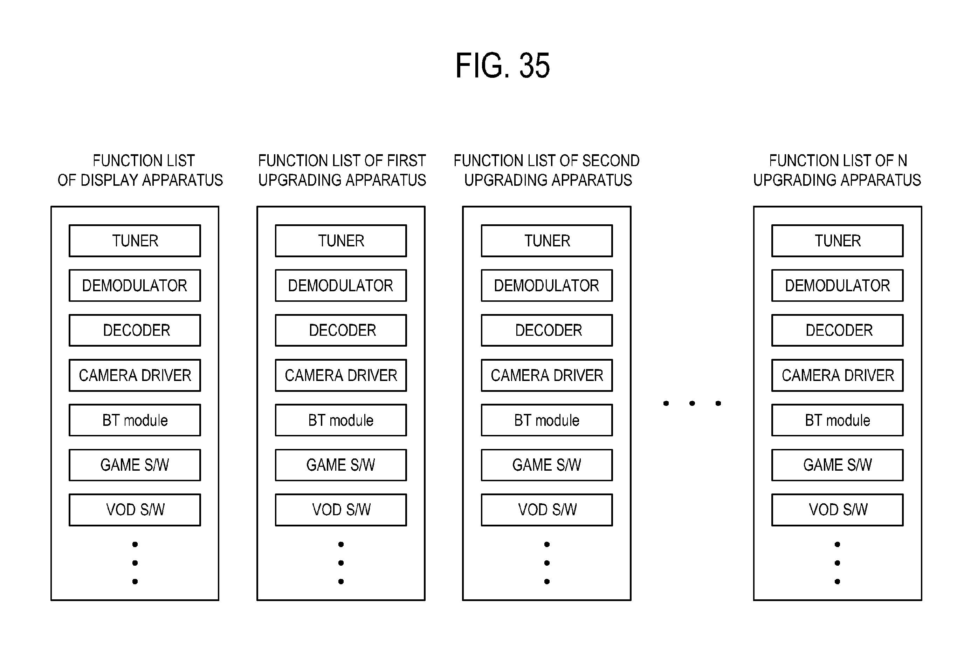

Below, FIG. 35 is a view of an example of selecting some among the plurality of functions by the first controller 170 according to an exemplary embodiment, which is described below.

As shown therein, the first storage unit 160 of the display apparatus 100 stores information about a list of hardware/software functions enabled in the display apparatus 100, and the first to Nth upgrading apparatuses 200 connected to the display apparatus 100 store information about a list of functions enabled in the upgrading apparatus 200. FIG. 35 shows a tuner, a demodulator, a decoder, a camera driver, a Bluetooth (BT) module, a game software(S/W), a VOD S/W, etc., which is provided by way of an example of a functions list and not by way of a limitation. Alternatively, the function list may contain all hardware/software functions enabled in each of the display apparatus 100 and the upgrading apparatus 200 according to an exemplary embodiment.

According to an exemplary embodiment, the display apparatus 100 and the upgrading apparatus 200 store version information of the plurality of functions, respectively. If the same function exists in the display apparatus 100 and the at least one upgrading apparatus 200, the first controller 170 compares the functions with respect to version, and selects the function having the highest version as the function to be executed.

For example, if the display apparatus 100 includes a driver installed for a camera function and having a version of 2.0 and a connected first upgrading apparatus includes a driver installed for the same camera function and having a version of 3.0, the first controller 170 uses the driver for the camera function installed in the first upgrading apparatus and performs the camera function since the latest version of 3.0 will show better performance.

According to another exemplary embodiment, the first storage unit 160 stores a rule previously set for selecting some among the plurality of functions, and the first controller 170 controls some among the plurality of functions provided by the upgrading apparatus 200 to be selected and executed by the preset rule. Likewise, the first controller 170 may control some among the plurality of functions provided by the display apparatus 100 to be selected and executed by the preset rule.

For example, if the plurality of upgrading apparatuses 200 connected to the display apparatus 100 are configured to perform the same function, order will be set with regard to the configuration of which an apparatus to be used in performing the function will be selected. That is, the first controller 170 determines whether the corresponding configuration exists in order of the first upgrading apparatus, the second upgrading apparatus, ..., and the Nth upgrading apparatus, and the display apparatus 100, and performs a predetermined function through the apparatus first determined to have the corresponding configuration. Also, hardware/software configurations which are likely to collide with each other are given priority in ordering the configurations, so that the corresponding function can be performed by only one selected configuration of one apparatus that has the highest order from the available configurations.

Such a rule may be set up by a designer when the upgrading apparatus 200 is designed, and may be modified by a user.

According to still another exemplary embodiment, the first controller 170 combines some among the plurality of functions provided by the display apparatus 100 and some among the plurality of functions provided by the upgrading apparatus 200, and stores it as one function in the first storage unit 160, thereby controlling the combined function to be performed.

For example, if a combination of the tuner of the display apparatus 100 and the tuner of the upgrading apparatus 200 serves as a multi-tuner, such a combined function of the multi-tuner may be stored as a function and then performed. Also, if a game software program capable of upgrading the game software program provided in the display apparatus 100 is stored in the upgrading apparatus 200, an updated software program may be stored as a function and performed.

According to the display apparatus 100 as described above, the functions provided in the upgrading apparatus 200 connected to the display apparatus 100 are dynamically shared and controlled, and each configuration is enabled or disabled with respect to the stored list, thereby improving compatibility and stability.

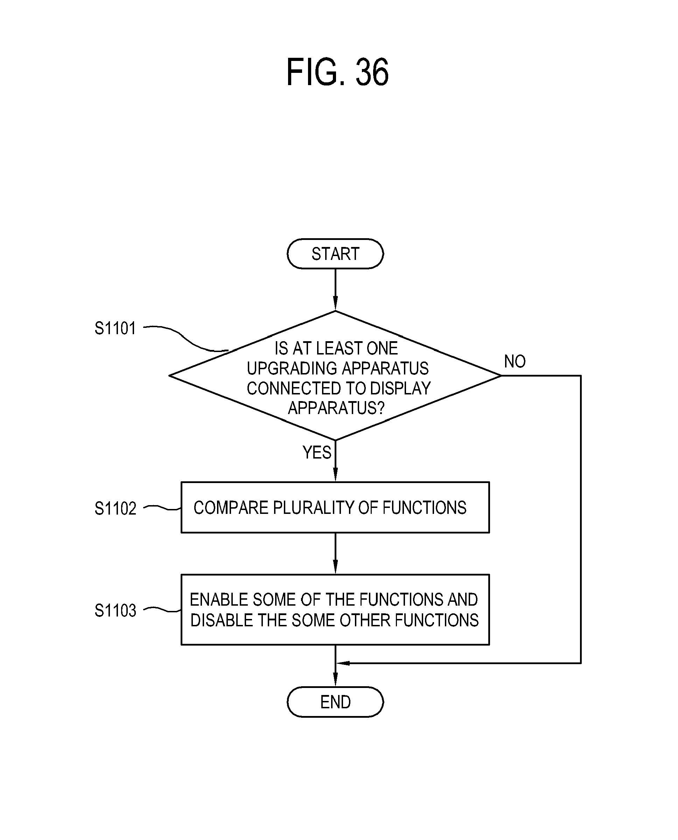

FIG. 36 is a flowchart showing a control method of the display apparatus 100 according to a sixth exemplary embodiment. The display apparatus 100 connects with at least one upgrading apparatus 200 through the plurality of connectors, and performs the functions provided in the upgrading apparatus 200.

The display apparatus 100 detects whether at least one upgrading apparatus 200 is connected thereto (in operation S1101).

If it is detected that the upgrading apparatus 200 is connected, the plurality of functions provided by the display apparatus 100 and the plurality of functions provided by at least one upgrading apparatus 200 connected to the display apparatus 100 are compared with each other (in operation S1102). At this time, the plurality of functions may include hardware configurations or installed software configurations in the display apparatus 100 and the upgrading apparatus 200.

The display apparatus 100 may store the information about the plurality of functions in the form of a predetermined data structure, and compares the plurality of functions based on the stored information. The stored information may include information about a name, a version, etc. of the hardware/software configurations that perform the corresponding functions.

The display apparatus 100 may select one among the functions provided by the display apparatus and the upgrading apparatus in accordance with the comparison results and performs the selected function (in operation S1103). In this case, some configurations of the display apparatus 100 or the upgrading apparatus 200, which perform the selected function, are enabled, and some configurations of the other apparatus, which can perform the selected function, are disabled, thereby allowing the corresponding function to be performed through only the selected apparatus.

As a method of comparing and selecting some among the plurality of functions, various exemplary embodiments are possible. For example, information about the version of each function is compared, and the function having a higher version is selected and performed. A preset rule for selecting some among the plurality of functions is stored, and some functions are selected in accordance with the preset rule. The functions that can be combined are combined and stored as one function, and one combined function can be performed. Such an exemplary embodiment is described as above.

As above, according to a sixth exemplary embodiment, the functions included in the upgrading apparatus 200 connected to the display apparatus 100 are dynamically shared and controlled, and the corresponding configurations are enabled or disabled with respect to the stored list, thereby improving compatibility and stability.

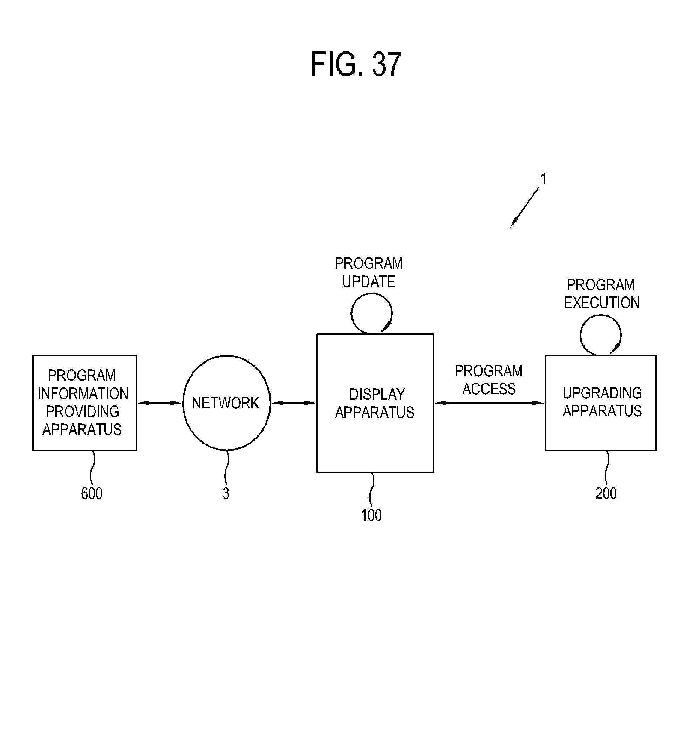

FIG. 37 is a block diagram showing the display system 1 according to a seventh exemplary embodiment.

The display system 1 according to the fifth exemplary embodiment shown in FIG. 37 may further include a program information providing apparatus 600 that provides program information in addition to the display system 1 according to the first to sixth exemplary embodiments. Therefore, the same reference numerals and names as those of the first to sixth exemplary embodiments are given to analogous elements other than the program information providing apparatus 600, and repetitive descriptions thereof will be omitted.

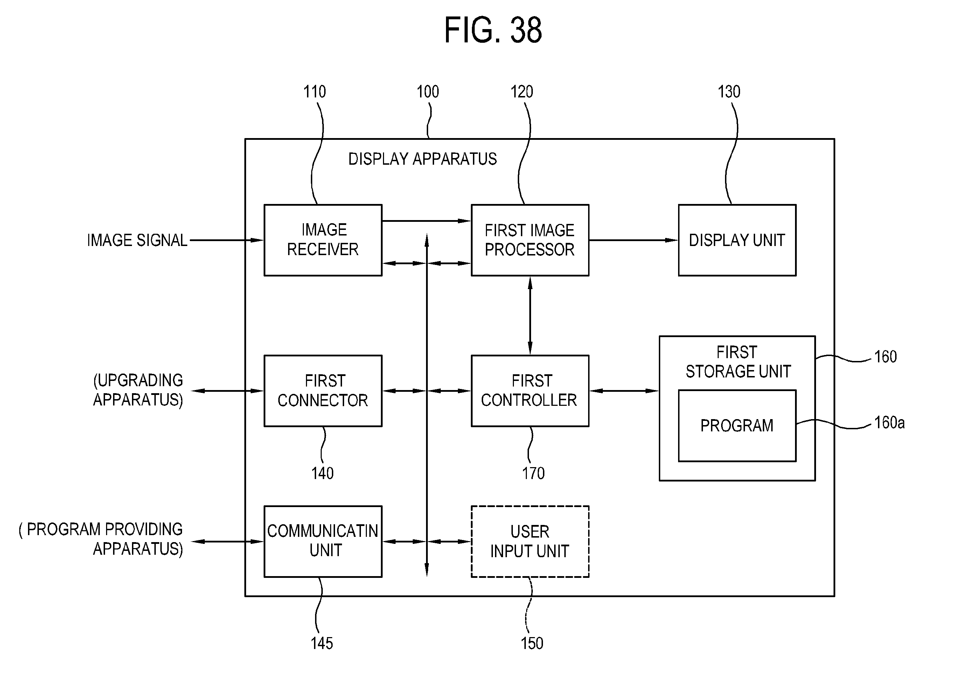

FIG. 38 is a block diagram showing a configuration of the display apparatus 100 according to the seventh exemplary embodiment.

The upgrading apparatus 200 executes a program and performs operation for upgrading the function of the display apparatus 100. The program of the upgrading apparatus 200 is stored in the first storage unit 160 of the display apparatus 100. The upgrading apparatus 200 accesses the first storage unit 160 of the display apparatus 100 and reads the program, thereby executing the read program.

The display apparatus 100 performs updating of the program of the upgrading apparatus 200. The display apparatus 100 receives data for updating the program of the upgrading apparatus 200 from the program providing apparatus 600 through the network 3. The display apparatus 100 performs updating of the program of the upgrading apparatus 200 based on the received data. The upgrading apparatus 200 executes the updated program and performs operations.

The program providing apparatus 600 stores data for updating the program(software) stored in the display apparatus 100, and may for example be achieved by an Internet server, an update server, etc.

FIG. 38 is a block diagram showing the configuration of the display apparatus 100 according to the seventh exemplary embodiment. The display apparatus 100 includes the image receiver 110, the first image processor 120, the display unit 130, the first connector 140, the user input unit 150, the first storage unit 160, the communication unit 145, and the first controller 170.

The upgrading apparatus 200 may access the program 160a of the upgrading apparatus 200, stored in the first storage unit 160 using the first connector 140.

The first controller 170 performs the functions upgraded using the connected upgrading apparatus 200. The first controller 170 controls the upgrading apparatus 200 to access the program 160a of the upgrading apparatus 200, stored in the first storage unit 160. The first controller 170 controls the upgrading apparatus 200 to recognize data of the program stored in the first storage 16 as a file system, and access the program 160a.

The first controller 170 performs updating of the program 160a of the upgrading apparatus 200, stored in the first storage unit 160, based on the data received from the program providing apparatus 600 if the update is needed to the program 160a of the upgrading apparatus 200. After the update is completed, the first controller 170 controls the upgrading apparatus 200 to access the upgraded program 160a for the upgrading apparatus 200.

Although it is not shown, the first controller 170 may include a nonvolatile memory to store a control program for such a control operation, a volatile memory to load at least a part of the stored control program, and a microprocessor to execute the loaded control program.

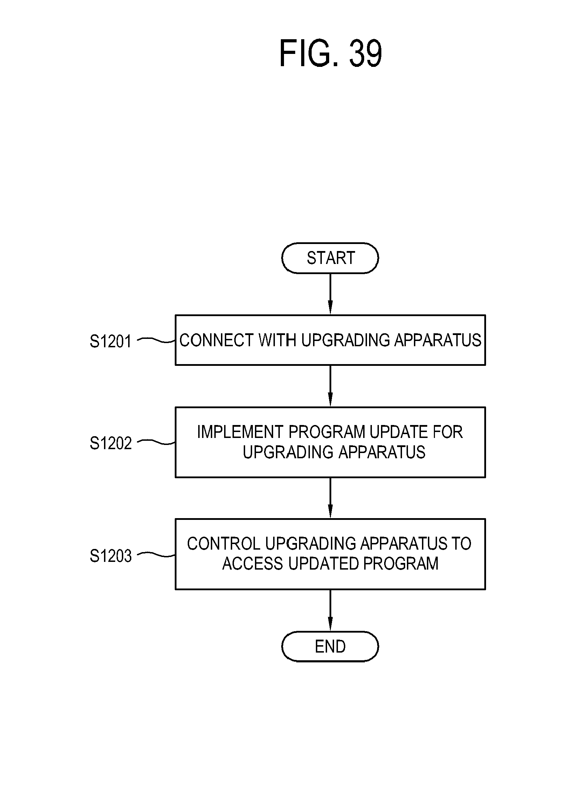

FIG. 39 is a flowchart showing a control method of the display apparatus 100 according to the seventh exemplary embodiment. In operation S1201, the display apparatus 100 performs communication with the upgrading apparatus 200 and performs the upgraded functions when connecting with the upgrading apparatus 200. The display apparatus 100 allows the upgrading apparatus 200 to access the program 160a for the upgrading apparatus 200, stored in the first storage unit 160, to perform operations for the upgraded function of the display apparatus 100.

In operation S1202, the display apparatus 100 performs updating of the program 160a for the upgrading apparatus 200, stored in the first storage unit 160, based on the data received from the program providing apparatus 600. The program 160a of the upgrading apparatus 200 may be periodically or updated at random intervals.

In operation S1203, the display apparatus 100 allows the upgrading apparatus 200 to access the updated program 160a.

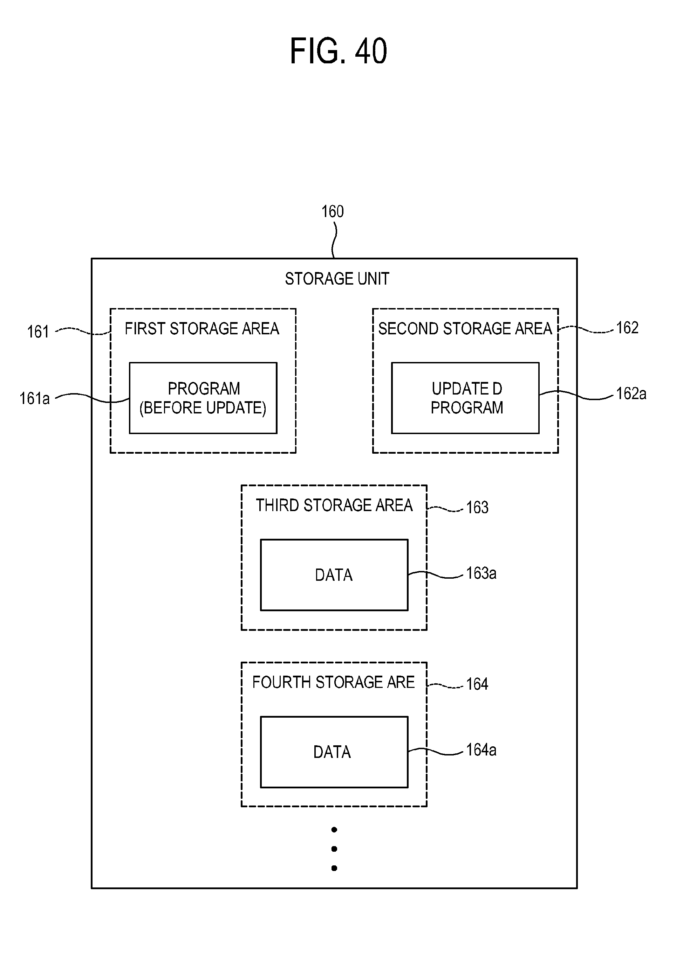

FIG. 40 is a block diagram showing a configuration of the first storage unit 160 in the display apparatus 100 according to an exemplary embodiment. The first storage unit 160 includes a first storage area 161 and a second storage area 162 for storing the program. The first storage area 161 stores the program 161a for the upgrading apparatus 200 before the update is performed and second storage area 162 stores the program 162a for the upgrading apparatus 200 after the update. Third storage area 163 and fourth storage area 164 store data 163a and 164a, respectively.

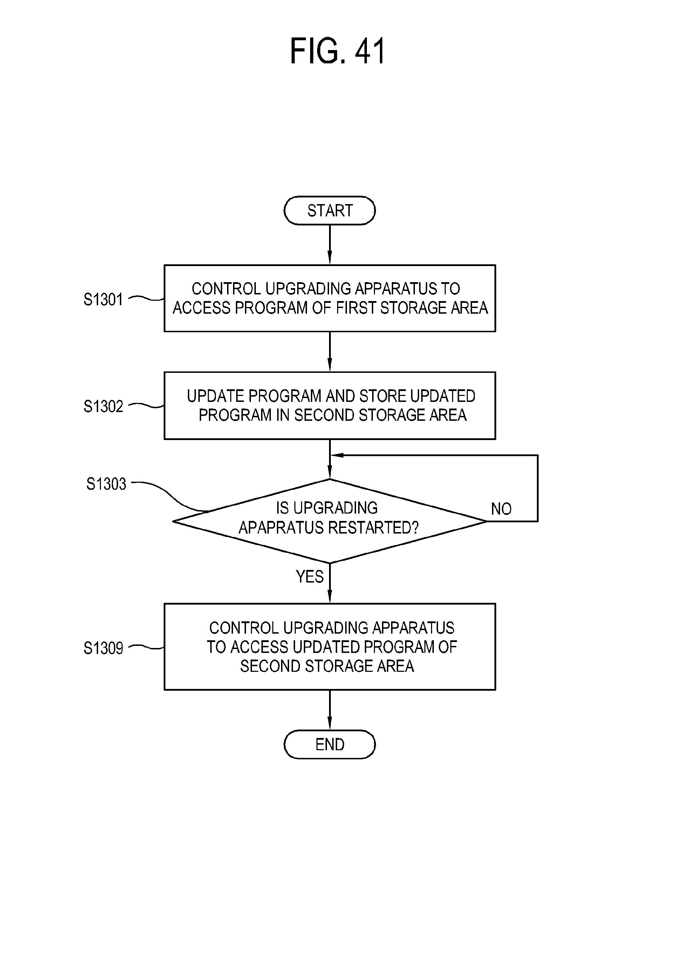

FIG. 41 is a flowchart showing another example of a control method of the display apparatus 100 according to the seventh exemplary embodiment. In this exemplary embodiment, the first storage unit 160 of the display apparatus 100 includes a plurality of storage areas for example such as the ones shown in FIG. 40.

In operation S1301, the display apparatus 100 allows the upgrading apparatus 200 to access the program 161a stored in the first storage area 161 of the storage unit 160.

Next, in operation S1302, if an update is needed to the program 161a of the display apparatus 100, a program 162a which is the updated program 161a is stored in the second storage area 162 of the storage unit 160. While the display apparatus 100 is updating the program, the upgrading apparatus 200 may perform operation by accessing the program 161a stored in the first storage area 161 of the storage unit 160. The display apparatus 100 continues updating even though the upgrading apparatus 200 becomes turned off while updating the program 161a. That is, the display apparatus 100 receives data for the update from the program providing apparatus 600 regardless of whether the upgrading apparatus 200 is operational or not, thereby completing the update.

Next, in operation S1303, the display apparatus 100 determines whether the upgrading apparatus 200 becomes turned off and then restarts it. If the upgrading apparatus 200 becomes turned off and is restarted, in operation s1304, the display apparatus 100 controls the upgrading apparatus 200 to access the updated program 162a stored in the second storage area 162. According to another exemplary embodiment, the display apparatus 100 replaces the program 161a stored in the first storage area 161 with the updated program 162a stored in the second storage area 162, and allows the upgrading apparatus 200 to access the updated program stored in the first storage area 161 instead of the previous program 161a.

Referring back to FIG. 40, the storage unit 160 may further include a third storage area 163, a fourth storage area 164, and so on to store data of the upgrading apparatuses 200. The data of the upgrading apparatus 200 includes system setup data, user setup data, etc. of the upgrading apparatus 200. The display apparatus 100 may connect with one of the plurality of upgrading apparatuses 200, and the third storage area 163, the fourth storage area 164, and so on may respectively store data 163a, 164a, ... about the plurality of upgrading apparatuses 200. The data 163a, 164a, ... may be encrypted to prevent anonymous access of unauthorized apparatuses.

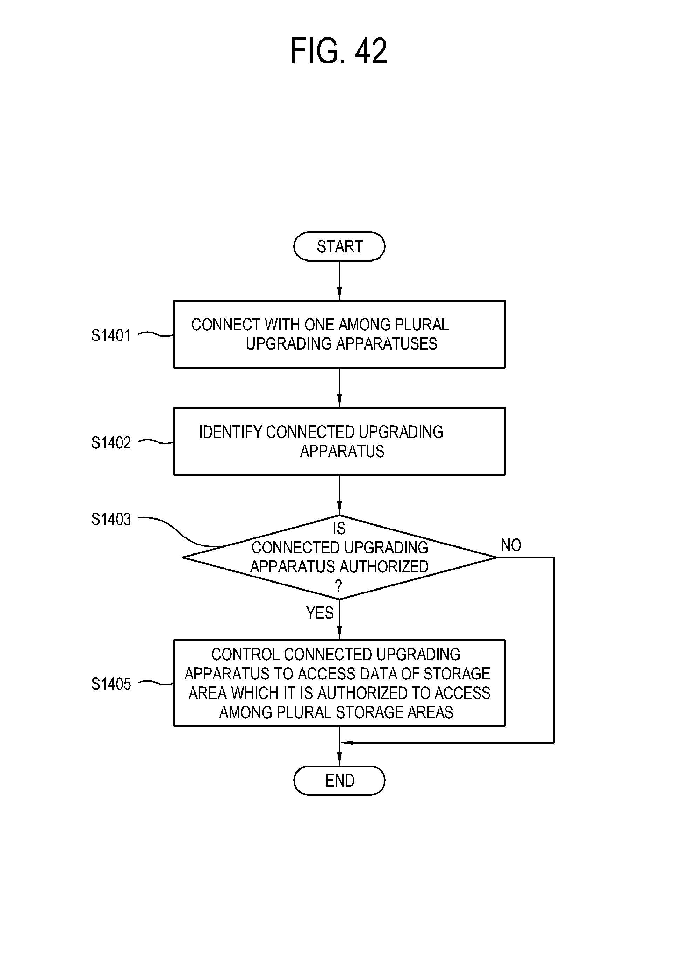

FIG. 42 is a flowchart showing another example of the control method of the display apparatus 100 according to the seventh exemplary embodiment. In operation S1401, the display apparatus 100 connects and communicates with one of the plurality of upgrading apparatuses 200.

Next, in operation S1402, the display apparatus 100 identifies the connected upgrading apparatus 200. Then, in operation S1403, the display apparatus 100 determines whether the connected upgrading apparatus 200 is authorized to access the data 163a, 164a, ... stored in the third storage area 163, the fourth storage area 164, ..., based on the identification results.

If the connected upgrading apparatus 200 has authority to access the data 163a, 164a, ..., in operation s1405, the display apparatus 100 controls the connected upgrading apparatus 200 to access the data 163a, 164a, ... of the storage areas 163, 164, ... corresponding to the authority of the upgrading apparatus 200.

Thus, the display system 1 according to the seventh exemplary embodiment uses the storage of the display apparatus 100 to store the program of the upgrading apparatus 200, thereby minimizing the configurations of the upgrading apparatus 200 and reducing the costs.

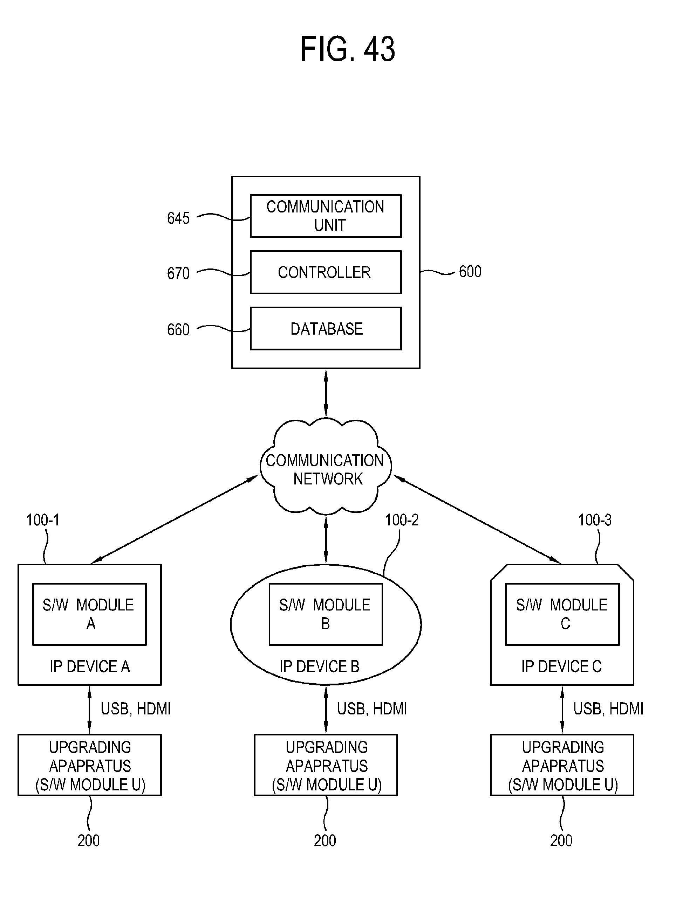

FIG. 43 is a view illustrating an example of the display system 1 including the display apparatus 100 and the plurality of upgrading apparatuses 200 according to an eighth exemplary embodiment.

The display system 1 according to the eighth exemplary embodiment shown in FIG. 43 may further include an update server 600, which provides universal software, i.e., an update program, in addition to the display system 1 according to the first to seventh exemplary embodiments.

The update server 600 according to the eighth exemplary embodiment may act like the program providing apparatus 600 according to the seventh exemplary embodiment in terms of storing the data for updating the program. Also, Internet protocol (IP) devices 100-1,100-2,100-3 may be achieved by the display apparatus 100 according to the first to seventh exemplary embodiments.

Therefore, the same reference numeral of 600 is given to the update server and the program providing apparatus, and the IP device includes all elements of the display apparatus 100 according to the first to seventh exemplary embodiments. Thus, the same reference numerals and names as those of the first to seventh exemplary embodiments are given to analogous elements, and repetitive descriptions thereof will be omitted.

FIG. 43 is a view illustrating a configuration of the display system 1 (hereinafter, referred to an 'IP device update system') for updating software of the IP devices 100-1,100-2 and 100-3 according to an eighth exemplary embodiment.

The IP device update system may include the IP device 100-1, 100-2, 100-3 connected to wired or wireless Internet; the upgrading apparatus 200 connected to the IP device 100-1, 100-2, 100-3 to upgrade the function of the IP device 100-1, 100-2, 100-3 in terms of hardware or software; and the update server 600 for updating the software of the upgrading apparatus 200. Here, the IP device 100-1, 100-2, 100-3 and the upgrading apparatus 200 may be called an upgrade IP device as a single integrated device.

In this exemplary embodiment, the IP device 100-1, 100-2, 100-3 are achieved by the display apparatus 100 such as an IPTV, but are not limited thereto. Alternatively, the IP device 100-1, 100-2, 100-3 may further include an IP refrigerator, and a Smartphone or the like mobile device. The IP devices 100-1, 100-2, 100-3 may be different in specification even though they are the same type of IP devices. The IP devices 100-1, 100-2, 100-3 different in the specification may include different software modules A, B, C, respectively. The software A, B, C may include embedded software. The software A, B, C may include a multimedia player, a map viewer, a browser, a game, a mobile shop, a CNS(GPS, GIS), multimedia middleware such as streaming, codec, etc., communication middleware related to WLAN and WPAN, an embedded OS, a device driver, a wired/wireless communication protocol, a library supporting a multimedia protocol, etc.

The upgrading apparatus 200 may connect with the IP device 100-1, 100-2, 100-3 in order to upgrade the functions of the IP device 100-1, 100-2, 100-3 in terms of hardware or software. The upgrading apparatus 200 may include a software module U. Since the same upgrading apparatus 200 is connected to each of the IP device 100-1, 100-2, 100-3 different in specification, the IP device 100-1, 100-2, 100-3 different in specification may include the same software module U. The software module U may include a multimedia player, a map viewer, a browser, a game, a mobile shop, a CNS(GPS, GIS), multimedia middleware such as streaming, codec, etc., communication middleware related to WLAN and WPAN, an embedded OS, a device driver, a wired/wireless communication protocol, a library supporting a multimedia protocol, etc.

The update server 600 may include a communication unit 645, a third controller 670 and a database 660. The communication unit 645 may transmit data to the IP device 100-1 through Internet. The database 660 may store an update file and a record related to the update. The third controller 670 may control the communication unit 645 transmitting and receiving data through Internet, and the database.

The update server 600 transmits a software update file to each IP device 100-1, 100-2, 100-3 through a wired/wireless communication network. Each IP device 100-1, 100-2, 100-3 transmits the received software update file to the connected upgrading apparatus 200, thereby updating the software module U of each upgrading apparatus 200.

Below, an Internet protocol device television (IPTV) system will be described by way of an example of the IP devices 100-1, 100-2, 100-3. Of course, the disclosure is not limited to the IPTV, and may be applied to all the IP devices of which the functions can be upgraded.

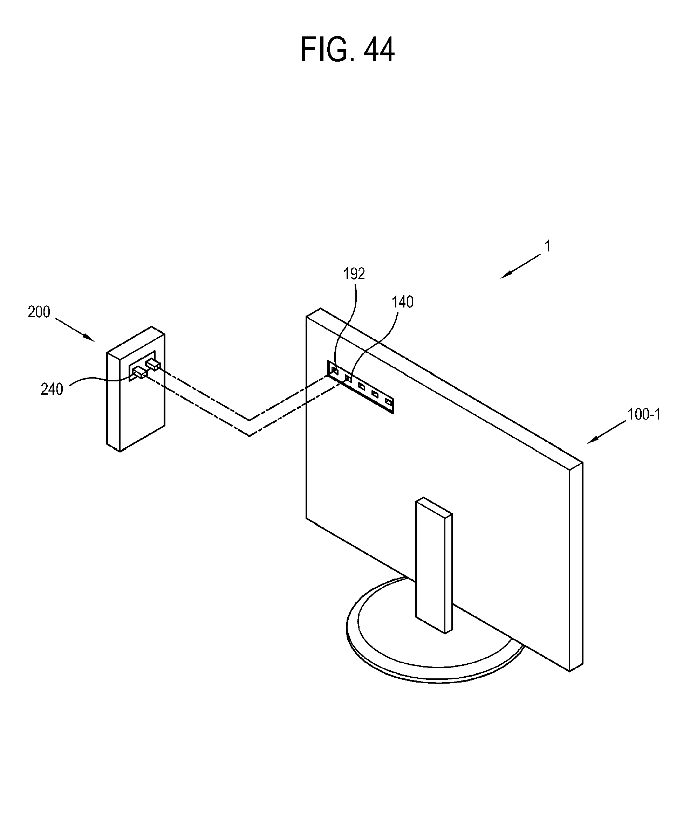

As shown in FIG. 44, the display system 1 according to an exemplary embodiment may include a display apparatus 100-1 which processes an image signal provided by an external image source 300 (not shown) in accordance with a signal processing operation, and displays it as an image, and an upgrading apparatus 200 which upgrades the hardware of the display apparatus 100-1.

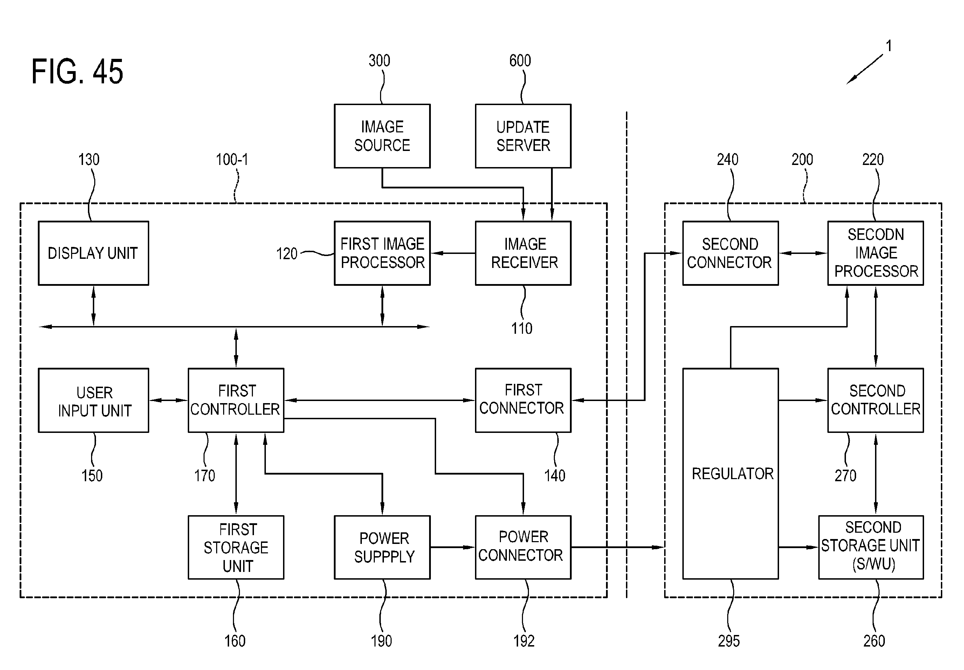

Below, the exemplary configurations of the display apparatus 100-1 and the upgrading apparatus 200 according to the eighth exemplary embodiment will be described with reference to FIG. 45. FIG. 45 is a block diagram of the display apparatus 100-1 and the upgrading apparatus 200 which constitute the display system 1.

As shown in FIG. 45, the display apparatus 100-1 according to the eighth exemplary embodiment includes the image receiver 110, the first image processor 120, the display unit 130, the first connector 140, the user input unit 150, the first storage unit 160, the first controller 170 and the power supply 190. The power supply 190 includes at least one power connector 192 for supplying electric power to the upgrading apparatus 200. As necessary, the power connector 192 may be included in the first connector 140.

The display apparatus 100-1 may include a software module (S/W A) including a multimedia player, a map viewer, a browser, a game, a mobile shop, a CNS(GPS, GIS), multimedia middleware such as streaming, codec, etc., communication middleware related to WLAN and WPAN, an embedded OS, a device driver, a wired/wireless communication protocol, a library supporting a multimedia protocol, etc.

The image receiver 110 can communicate with the external update server 600 and receive a universal software update file of the upgrading apparatus 200. An external device connected to the image receiver 110 is not limited to the image source 300 and the update server 600. With this exemplary embodiment, FIG. 45 shows an example of receiving the software update file through the image receiver 110, but not limited thereto. As necessary, the software update file may be received in the display apparatus 100 through the first connector 140.

The data stored in the first storage unit 160 may for example include an operating system for driving the display apparatus 100-1, and software(S/W A) executable under the operating system, such as various applications image data, appendix data, etc.

The power supply 190 supplies all kinds of power needed for the display apparatus 100-1. For example, the power supply 190 generates a central processing unit (CPU) core voltage for driving the first controller 140, a memory voltage for driving the first storage unit 160, an input/output (I/O) voltage for driving a user input unit 150, a voltage for driving the display unit 130 and the sound output unit 135 (not shown) such as a loud speaker, a voltage for driving other peripheral devices, etc. The power supply 190 may include a switched-mode power supply (SMPS), a DC-DC converter, etc.

The power supply 190 according to the eighth exemplary embodiment includes at least one power connector 192 to output a DC voltage for supplying power to the upgrading apparatus 200.

The electric power based on the USB port is enough to drive the upgrading apparatus 200 since it does not include a display or a loud speaker to output an image or a voice.

The upgrading apparatus 200 includes a second image processor 220 of the display apparatus 100-1, a second connector 240, a second storage unit 260, a second controller 270 and a regulator 295 for supplying the electric power needed for upgrading the upgrading apparatus 200.

The regulator 295 is connected to the power connector 172 of the display apparatus 100-1 and receives a DC voltage to output the electric power needed for the upgrading apparatus 200. The regulator 295 uses the DC voltage input from the display apparatus 100-1, and thus outputs a CPU core voltage for driving the second controller 260, a memory voltage for driving the second storage unit 260, a voltage for driving other peripheral devices, etc.

The second storage unit 260 includes embedded software S/W U for upgrading unrestricted data, i.e., the functions of the display apparatus 100-1.

The second controller 270 controls connecting operation between the display apparatus 100-1 and the upgrading apparatus 200 in order to perform upgrading the whole signal processing. The second controller 270 and the first controller 140 may be achieved by a central processing unit (CPU). If the second controller 270 can perform a more improved function than the first controller 140, the second controller 270 can disable the controller 140 and control the general operations of the display system 1 instead of the first controller 140. Alternatively, the second controller 270 may together with the first controller 140 control the whole operations of the display system 1.

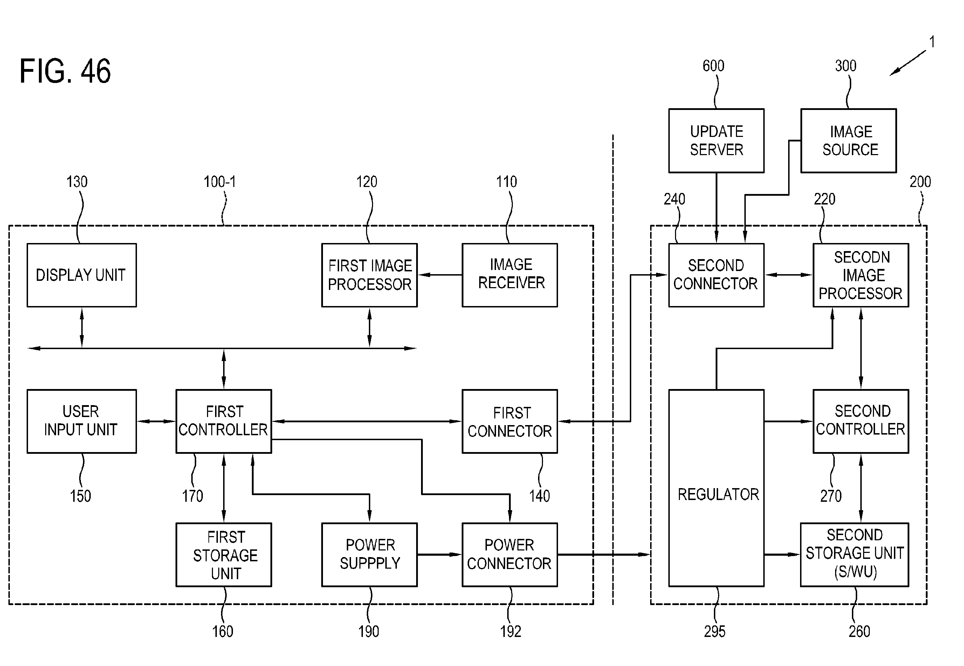

FIG. 46 is a block diagram schematically showing a configuration of the display system 1 according to an exemplary embodiment different from that of the eighth exemplary embodiment. The display system 1 shown in FIG. 46 is different from that of FIG. 45 in that the external update server 600 and the image source 300 are input through the second connector 240 of the upgrading apparatus 200. Here, FIG. 46 shows that the image source 300 is connected to the upgrading apparatus 200, but not limited thereto. In this exemplary embodiment, the image source 300 may be connected to the image receiver 110 of the display apparatus 100, and the update server 600 may be connected to the second connector 240 of the upgrading apparatus 200.

The second connector 240 communicates with the external update server 600 and receives the software update file, and the second controller 270 uses the received update file stored in the second storage unit 260 to update software U.

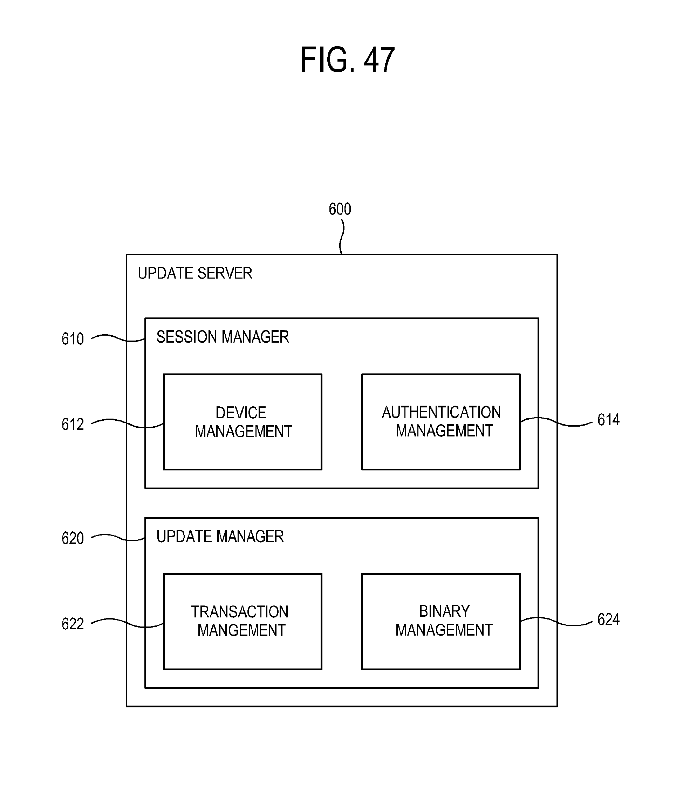

As shown in FIG. 47, the update server 600 according to this exemplary embodiment may include a session manager 610 and an update manager 620. The session manager 610 serves to manage connection of the software module S/W U, authentication, and basic information for update. The update manager 620 actually performs the update based on the basic information and function of the session manager 610, and performs a transaction management function to process an exceptional situation when performing the update.

Below, exemplary operations of universally updating the software of the IP device will be described according to an exemplary embodiment.

Referring to FIG. 45 and FIG. 46, an object to be updated is not the software module S/W A of the display apparatus 100-1 but the software U provided in the software module S/W U of the upgrading apparatus 200. That is, since the mounted upgrading apparatus 200 is the same or compatible device provided for upgrade even though the display apparatuses are different in specification from each other, the whole and continuous update from the update server 600 is possible. Here, data to be transmitted for update is a universal software update file of the upgrading apparatus 200. Also, the data complies with a universal serial bus (USB) standard, a high definition multimedia interface (HDMI), and a basic interface for the software module, using which the display apparatus 100-1 and the upgrading apparatus 200 are connected, during the update.

In FIG. 45, if the display apparatus 100-1 makes a request to the update server 600 for the update, the session manager 610 (shown in FIG. 47) of the update server 600 determines whether the requesting apparatus is authenticated.

If the requesting apparatus is authenticated, the update file is transmitted to the requesting display apparatus 100-1. The display apparatus 100-1 receives the update file and transmits it to the second connector 240 of the upgrading apparatus 200 (shown in FIG. 46) or to the image receiver 110 (shown in FIG. 45). The update file received in the upgrading apparatus 200 updates the software module S/W U of the upgrading apparatus 200.

According to an exemplary embodiment of FIG. 45, even though a plurality of display apparatuses 100-1, 100-2, 100-3 have Software modules A, B, C different in specification, if the upgrading apparatuses 200-1, 200-2, 200-3 having the software module U of the same specification are respectively connected to each of the display apparatuses 100-1, 100-2, 100-3, universal upgrade of the upgrading apparatuses 200-1, 200-2, 200-3 is possible with regard to the software. Therefore, according to this exemplary embodiment, the display apparatuses 100-1, 100-2, 100-3 providing hardware and the upgrading apparatuses 100-1, 100-2, 100-3 providing software are physically separated from each other, thereby easily performing the upgrade with regard to the universal software.

Referring to FIG. 46, if the upgrading apparatus 200 makes a request to the update server 600 for the update, the session manager 610 of the update server 600 determines whether the requesting apparatus is authenticated. If the requesting apparatus is authenticated, the update file is transmitted to the requesting upgrading apparatus 200. The update file received through the second connector 240 of the upgrading apparatus 200 updates the software module S/W U of the upgrading apparatus 200.

If FIG. 45 and FIG. 46 are compared with respect to the software update, the case of FIG. 46 experiences a relatively simpler procedure. The reason is there is no need for passing the update through the display apparatus 100-1 and the upgrading apparatuses can directly communicate with the update server 600.

As shown in FIG. 45 and FIG. 46, the upgrading apparatus 200 according to an exemplary embodiment is connected to the display apparatus 100-1 in a physically separated state, and therefore exceptional situations may occur at the update.

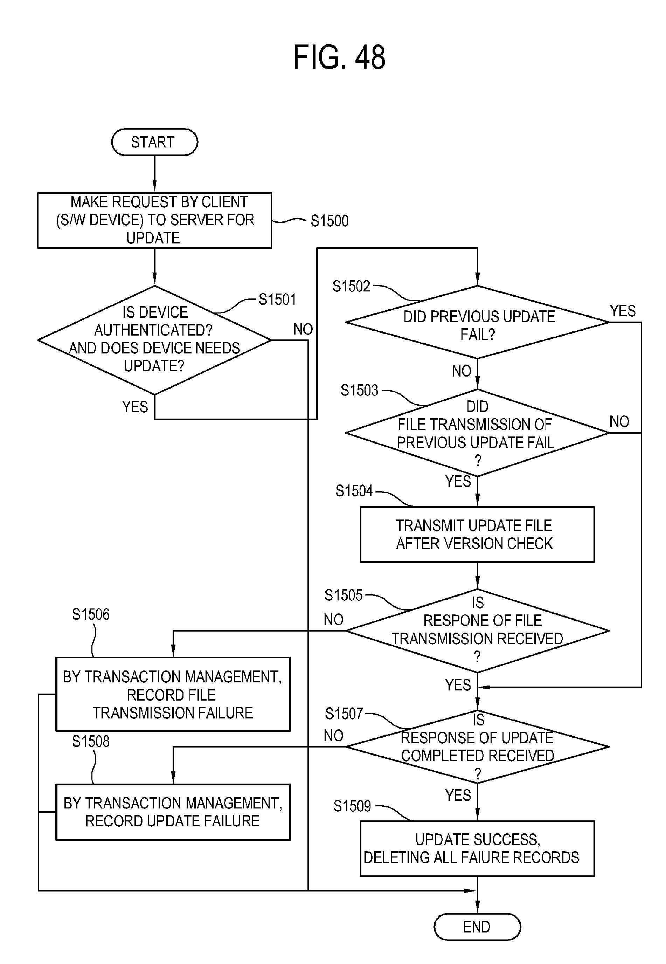

FIG. 48 is a flowchart showing operations of dealing with the exceptional situation that occur while performing the update according to an exemplary embodiment.

First, if a client (a software device), for example, the display apparatus 100-1 or the upgrading apparatus 200 makes a request to the update server 600 for the update (in operation S1500), the cession manager 610 of the update server 600 determines whether the apparatus requesting the update is authenticated by an authentication management 614 and whether it actually needs the update by a device management 612 (in operation S1501).

At this time, if the apparatus is authenticated and needs the update, it is determined whether previous update has failed by using a binary management 624 (in operation S1502).

If the previous update has failed, the update is executed and then response of update complete is checked because the update file has been transmitted (in operation S1507). At this time, if there is no response of the update complete, the transaction manager 622 records the update failure on the binary management 624 (in operation S1508).

In the operation S1502, if the previous update did not fail, it is determined whether file transmission has failed during the previous update (in operation S1503). At this time, if there was no file transmission failure during the previous update, the update is executed and then response of update complete is checked because the update file has been transmitted (in operation S1507).

In the operation S1503, if the file transmission has failed, the version of the corresponding software is checked and the update file is transmitted to the requesting device (in operation S1504). After transmitting the update file, response of file transmission complete is checked (in operation S1505). If there is no response of the file transmission complete, a message of checking the physical connection between the IP device 100-1 and the upgrading apparatus 200 is generated and transmitted, and the transaction manager 622 records the file transmission failure (in operation S1506).

In the operation S1505, if there is response of the file transmission complete, the update is implemented and response of the update complete is checked (in operation S1507). At this time, if there was no response of the update complete, the transaction manager 622 records the update failure (in operation S1508). If there is the response of the update complete, all the failure records are deleted (in operation S1509).

Accordingly, in the display system 1 according to the eighth exemplary embodiment, the display apparatuses 100-1, 100-2, 100-3 providing the hardware and the upgrading apparatuses 100-1, 100-2, 100-3 providing the software are physically separated, and it is thus possible to universally update the software and wholly, conveniently and easily implement the update even though the display apparatuses 100-1, 100-2, 100-3, i.e., the IP devices are different in specification from each other. Also, it is possible to rapidly deal with the exceptional situations that may occur when updating the universal software, i.e., the exceptional situations between the IP device and the upgrading apparatus which are physically separated from each other, for example, unplugging, shocking, etc.

Although a few exemplary embodiments have been shown and described and are merely exemplary and are not to be construed as limiting. It will be appreciated by those skilled in the art that changes may be made in these exemplary embodiments without departing from the principles and spirit of the invention, the scope of which is defined in the appended claims and their equivalents. Moreover, various modifications to these exemplary embodiments will be readily apparent to those skilled in the art, and the generic principles and specific examples defined herein may be applied to other exemplary embodiments.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (100) comprising:
an image processor (120) which processes an image signal;
a display unit (130) which displays an image based on the processed image signal;
a connector (140) to which an upgrading apparatus (200) for processing the image signal is connected;
a controller (170) which controls the connector to receive upgrade information about a function to be upgraded from the upgrading apparatus if the upgrading apparatus is connected through the connector, and which controls the display unit to display the received upgrade information.

2. The display apparatus according to claim 1, wherein the controller controls the display unit to display a comparison result between the upgrade information and information before the upgrade.

3. The display apparatus according to claim 2, wherein the upgrade information comprises an advancement in the function from before the upgrade by the upgrading apparatus.

4. The display apparatus according to claim 2, wherein the display unit displays comparison between the upgrade information and the information before the upgrade as at least one among a table, an icon, a picture, and a moving picture.

5. The display apparatus according to claim 2, further comprising a storage unit which stores function information of the display apparatus,
wherein the controller compares the received upgrade information with the stored function information of the display apparatus, and controls the display unit to display results of the comparison.

6. The display apparatus according to any one of claims 1 to 5, wherein the upgrade information comprises at least one of the function information enhanced by the upgrading apparatus and added function information.

7. An upgrading apparatus of a display apparatus, comprising:
a connector which is connected to the display apparatus displaying an image;
an image processor which processes an image signal corresponding to the image displayed by the display apparatus;
a controller which controls the connector to transmit upgrade information about a function to be upgraded by the upgrading apparatus if the upgrading apparatus is connected to the display apparatus through the connector.

8. The upgrading apparatus according to claim 7, wherein the upgrade information comprises at least one of function information improved by the upgrading apparatus and added function information.

9. The upgrading apparatus according to claim 7, wherein the controller controls the connector to transmit the upgrade information if an upgrade is completed and if the display apparatus is connected to the upgrading apparatus.

10. The upgrading apparatus according to any one of claims 7 to 9, wherein the upgraded function comprises at least one of a hardware function and a software function.

11. A method of controlling a display apparatus, the method comprising:
connecting the display apparatus with an upgrading apparatus processing an image signal received from at least one image source (S101);
receiving upgrade information about a function to be upgraded by the upgrading apparatus (S102);
and displaying the received upgrade information (S104).

12. The method according to claim 11, wherein the displaying the upgrade information comprises comparing the upgrade information with the information before the upgrade.

13. The method according to claim 12, wherein the upgrade information comprises an advancement from the function before the upgrade by the upgrading apparatus.

14. A method of controlling an upgrading apparatus of a display apparatus, the method comprising:
connecting the upgrading apparatus to the display apparatus displaying an image (S101);
transmitting upgrade information about a function to be upgraded by the upgrading apparatus to the display apparatus (S102); and
processing an image signal corresponding to the image displayed by the display apparatus using upgraded function (S103, S104).

15. The method according to claim 14, wherein the upgrade information comprises at least one of function information enhanced by the upgrading apparatus and added function information.
